# EUROPEAN PATENT APPLICATION

(11) **EP 0 719 030 A2**
(43) Date of publication of application: **26.06.1996**
(21) Application number: 95307725.2
(22) Date of filing: 30.10.1995
(51) Int. Cl.: H04N 1/32

(54) **Apparatus for facsimile-encoded remote data signal transfer**

(30) Priority: 31.10.1994 US 332348
(71) Applicant: Stylus Assets Limited, Wanchai (HK)
(72) Inventor: Weng, Sam S., Cupertino, California 95014 (US); Chambers, David L., Menlo Park, California 95025 (US); Dodhiawala, Rajendra T., San Jose, California 95124 (US)
(74) Representative: Jackson, David Spence

(57) **Abstract**

A communication system transmits data signals from a base unit (12) at a first location to a peripheral device (14) (which may be one of many peripheral devices) connected to a remote unit (16) at a second location. A receiver at the base unit (12) receives the data signals and modulates the data signals to produce a facsimile-encoded data signal. A base unit control signal generator generates a base-to-remote facsimile-encoded control signal. The base unit (12) then transmits the facsimile-encoded data signal and the base-to-remote facsimile-encoded control signal in the same session via a public carrier network (20,22). The remote unit (16) receives the facsimile-encoded data signal and the base-to-remote facsimile-encoded control signal from the public carrier network (20,22) and directs the facsimile-encoded data signal to a particular peripheral device (14) indicated by the base-to-remote facsimile-encoded control signal via a connector.

## Description

### TECHNICAL FIELD OF THE INVENTION

The present invention relates to an apparatus for transferring data signals to a peripheral device attached to a remote unit using a facsimile protocol, and in particular, to such an apparatus which can perform the data signal transfer intelligently and without human intervention.

### BACKGROUND OF THE INVENTION

Conventionally, to transfer data signals for printing at a remote location, the data signals may be transferred either by facsimile or by using a data modem with a compatible data signal transfer protocol at both the sending and receiving end. The limitation of the conventional facsimile apparatus is that document quality significantly deteriorates due to conversion of the original document into a bitmap format. For example, most facsimile transmissions occur at resolutions of 200 dots per inch (dpi) while many printers can readily print at resolutions of 600 dpi. In addition, the ability to choose a printout paper size or to print in color, such as would be available on a color printer or plotter, is severely limited.

The modem-based data signal transfer method has limitations which are mostly operational. In particular, to make such a data signal transfer, the sending (base) and receiving (remote) stations must be closely coordinated by human operators, in real time and, after the data signals are received at the remote station, someone at the remote station must proactively print the data signals on the proper printer. Furthermore, to print the data signals at the remote station, the application which was used to create the data signals on the base station must be available on the remote station. In addition, compatibility of the data signals with the available printer must be verified manually, by printing the data signals and examining the output.

### SUMMARY OF THE INVENTION

A communication system in accordance with the present invention can transmit data signals from a base unit at a first location to a peripheral device connected to a remote unit at a second location. The peripheral device can be one of many devices connected to the remote unit.

The base unit has a base unit control signal generating means which generates a base-to-remote facsimile-encoded control signal. A receiving means of the base unit receives the data signals and modulates the data signals to produce a facsimile-encoded data signal. The base unit transmits the facsimile-encoded data signal and the base-to-remote facsimile-encoded control signal in the same session via a public carrier network.

A receiving means of the remote unit receives the base-to-remote facsimile-encoded control signal and the facsimile-encoded data signal from the public carrier network. A connecting means connects at least one peripheral device to the remote unit. A directing means of the remote unit directs the facsimile-encoded data signal to a particular peripheral device indicated by the base-to-remote facsimile-encoded control signal via the connecting means.

A better understanding of the features and advantages of the invention will be obtained by reference to the following detailed description and accompanying drawings which set forth an illustrative embodiment in which the principles of the invention are utilized.

### BRIEF DESCRIPTION OF THE FIGURES

Fig. 1 is a block diagram of a communication system in accordance with the present invention.

Figs. 2-11 are flowcharts which illustrate the details of the processing within a particular embodiment of the invention, in which:

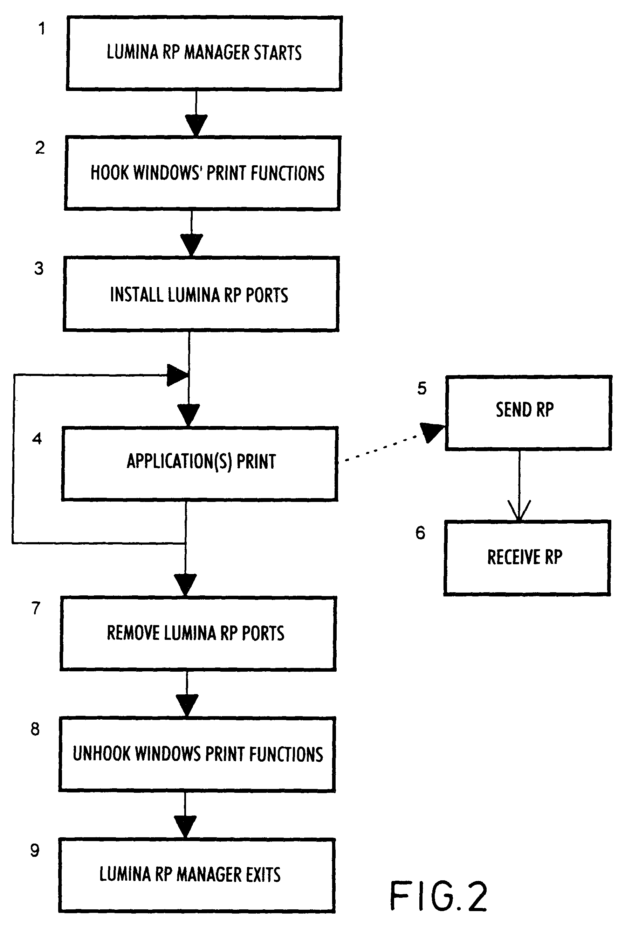

Fig. 2 shows an overview of the processing within the system.

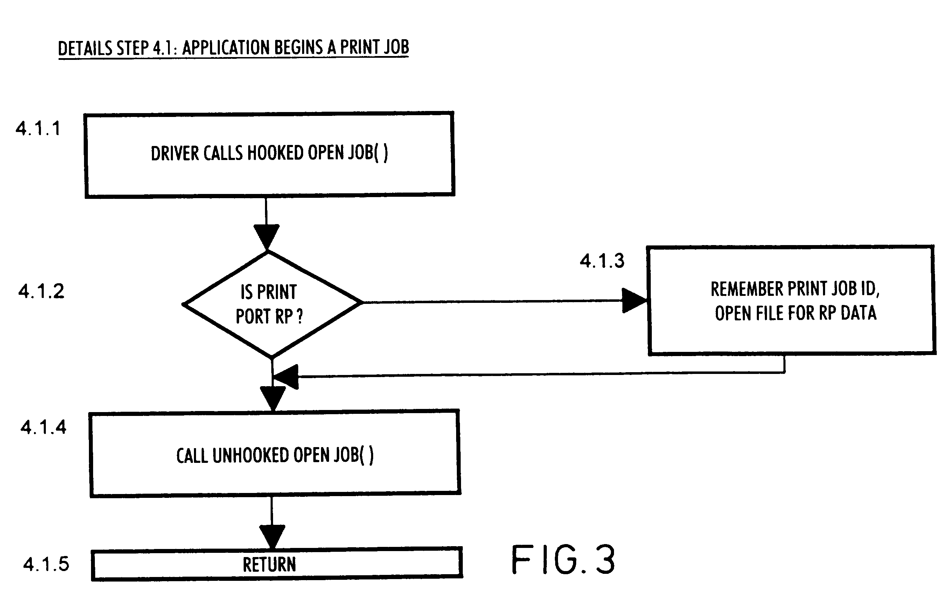

Figs. 3-7 show the details of the Fig. 2 step 4 processing within the remote print driver 34;

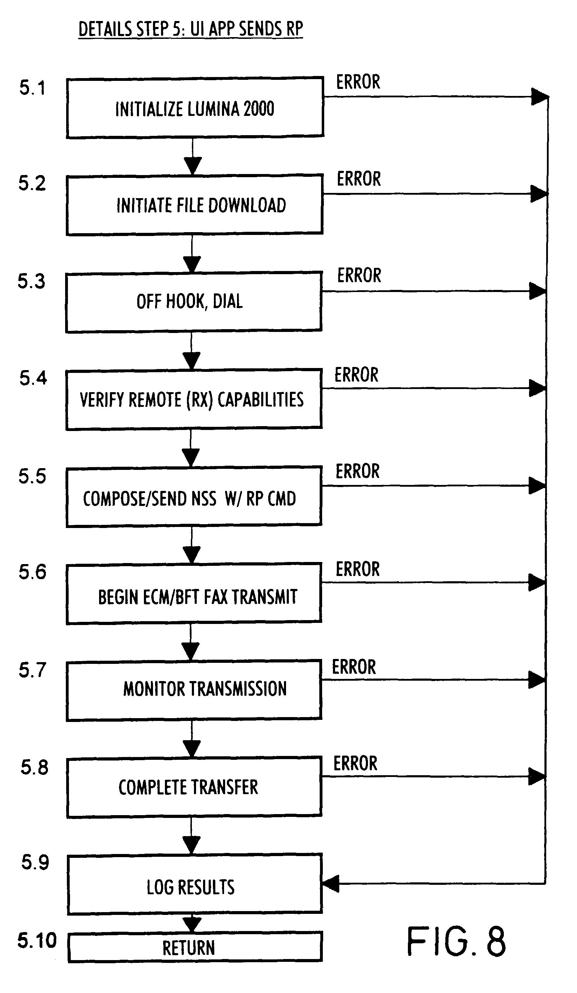

Fig. 8 shows the details of the user interface (UI) to the remote print driver 34;

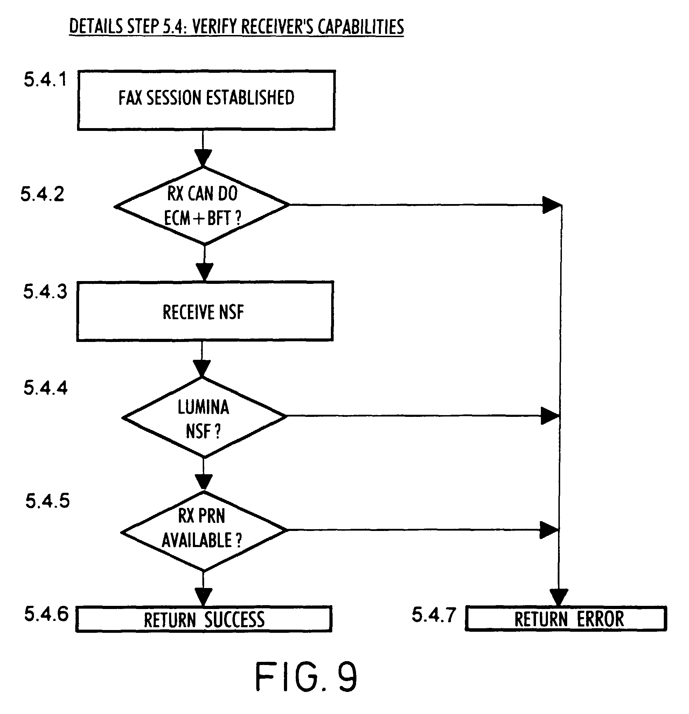

Fig. 9 shows the processing within the base unit 12 and the remote print driver 34 for verifying from the remote-to-base control signal that the desired peripheral is connected to the remote unit 16;

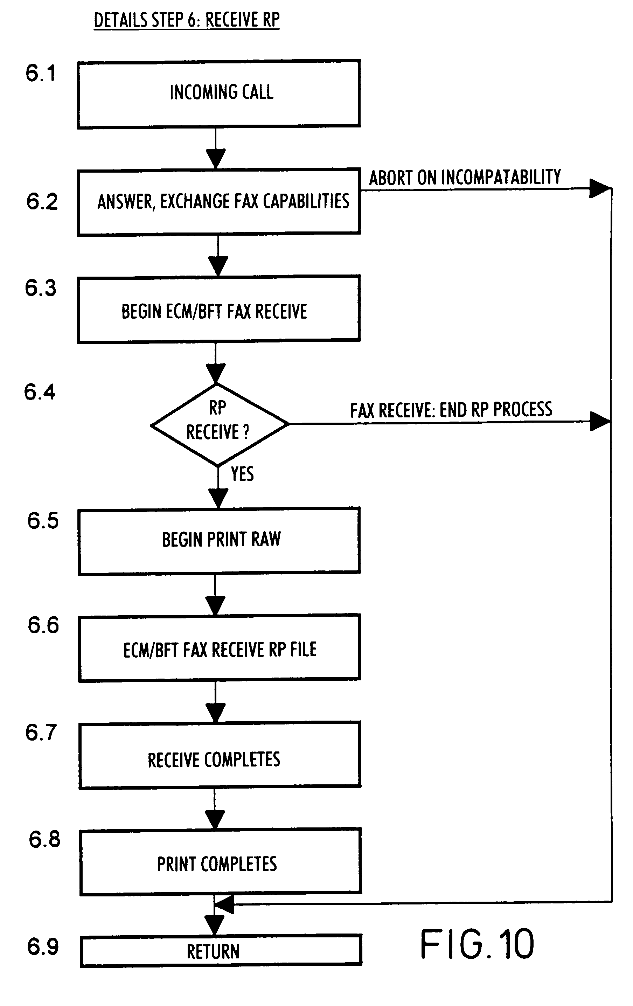

Fig. 10 shows the processing within the remote unit 16; and

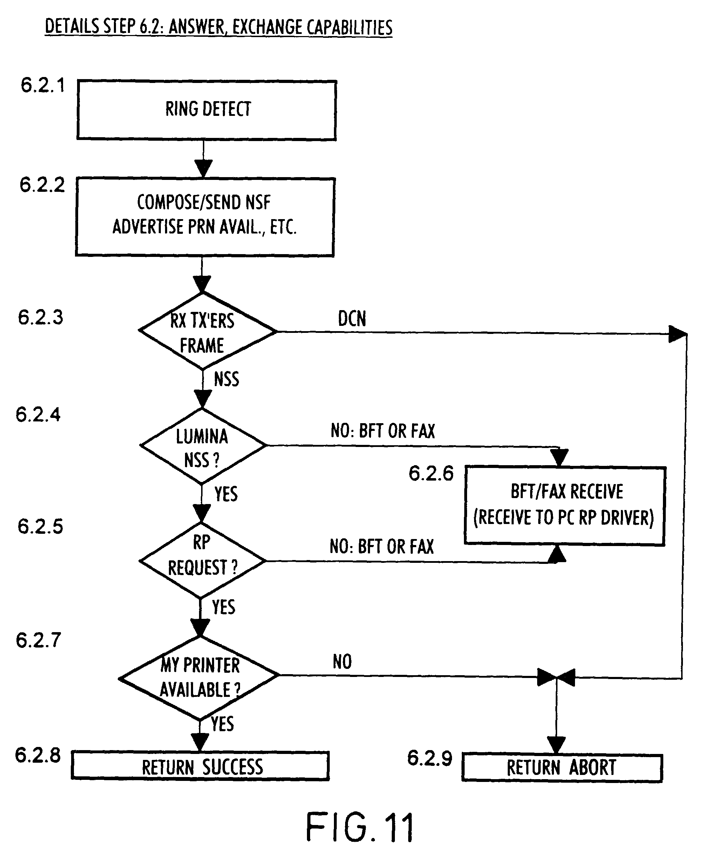

Fig. 11, except for step 6.2.6, shows the details of the processing within the remote unit 16 in step 6.2 of Fig. 10.

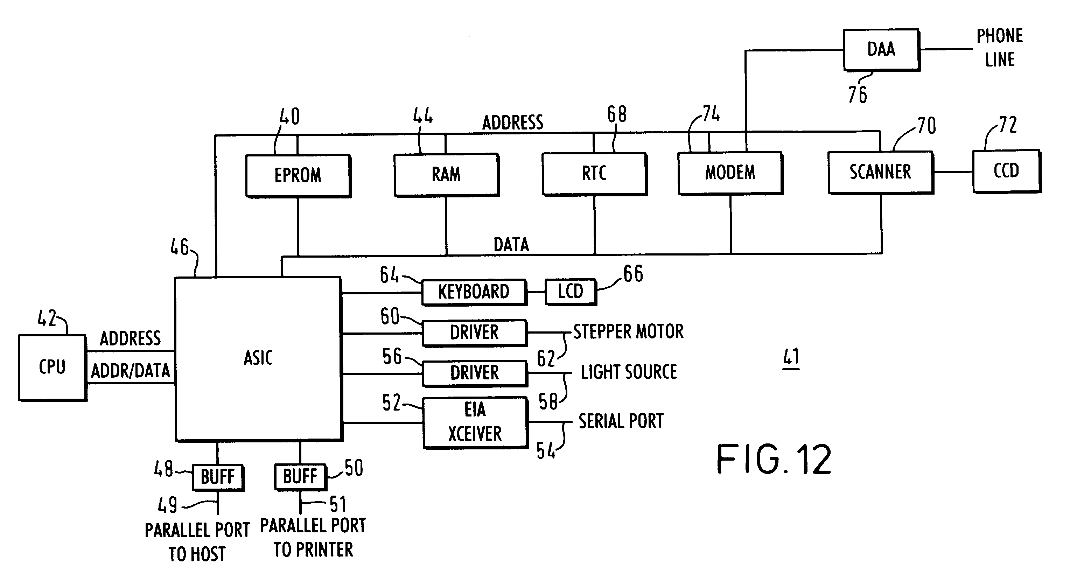

Fig. 12 shows an embodiment of the invention in which a base unit and remote unit are combined into a single unit 41 at a first location, for communication to a similarly constructed remote unit and base unit at a second location.

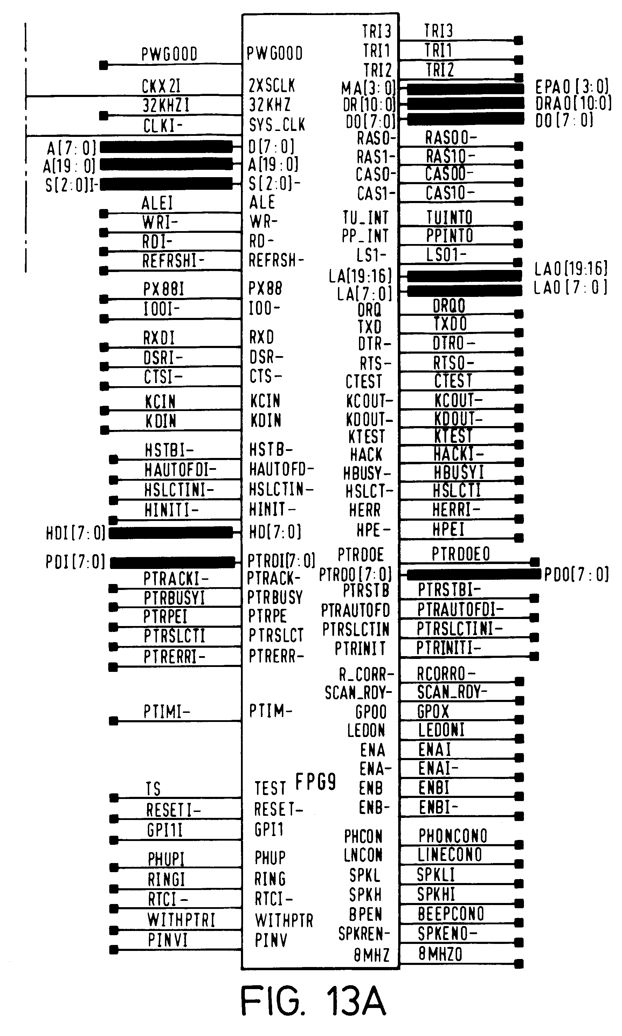

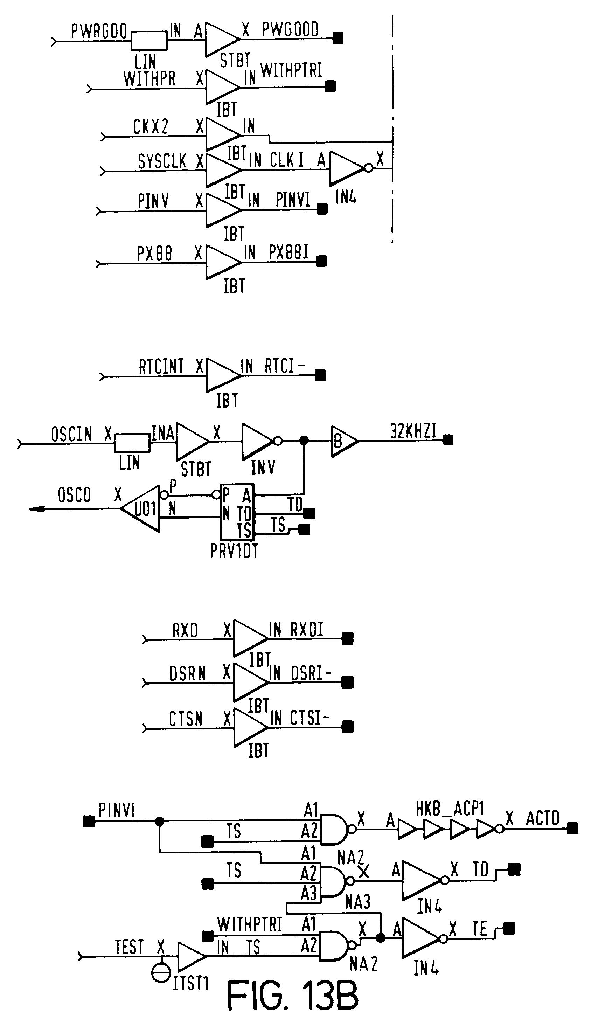

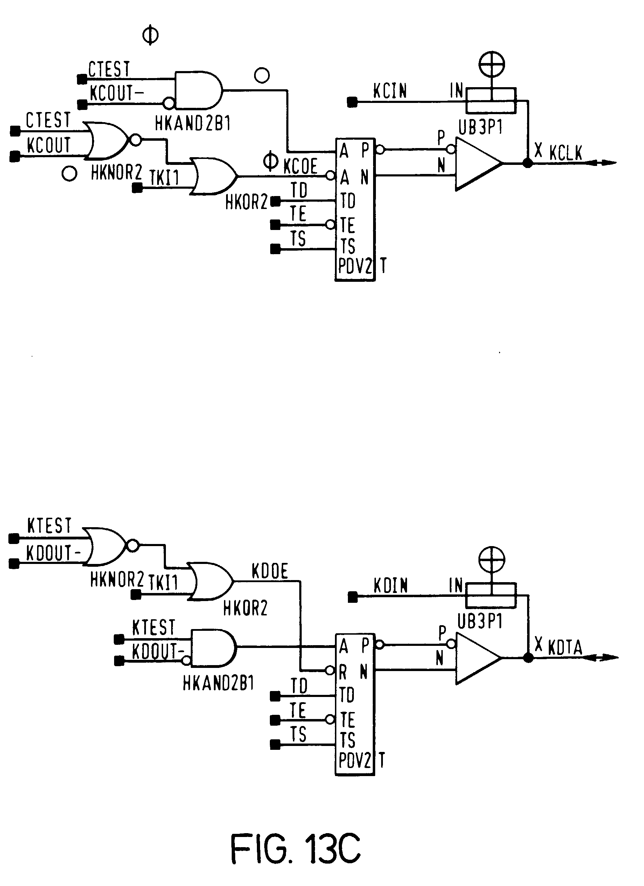

Fig. 13 shows a top level schematic of the ASIC 46 of Fig. 12.

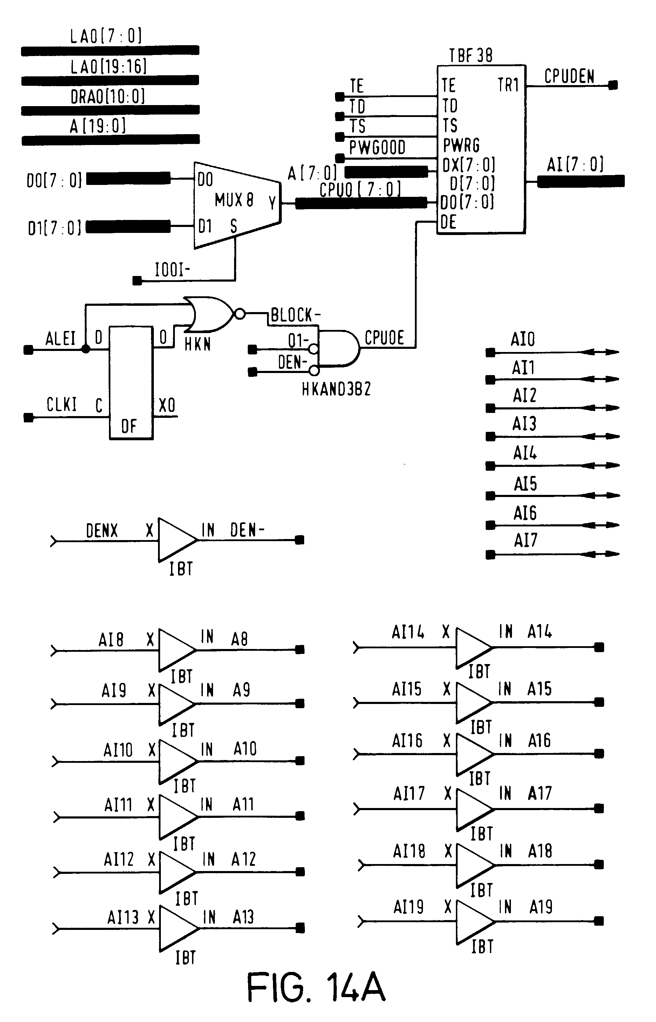

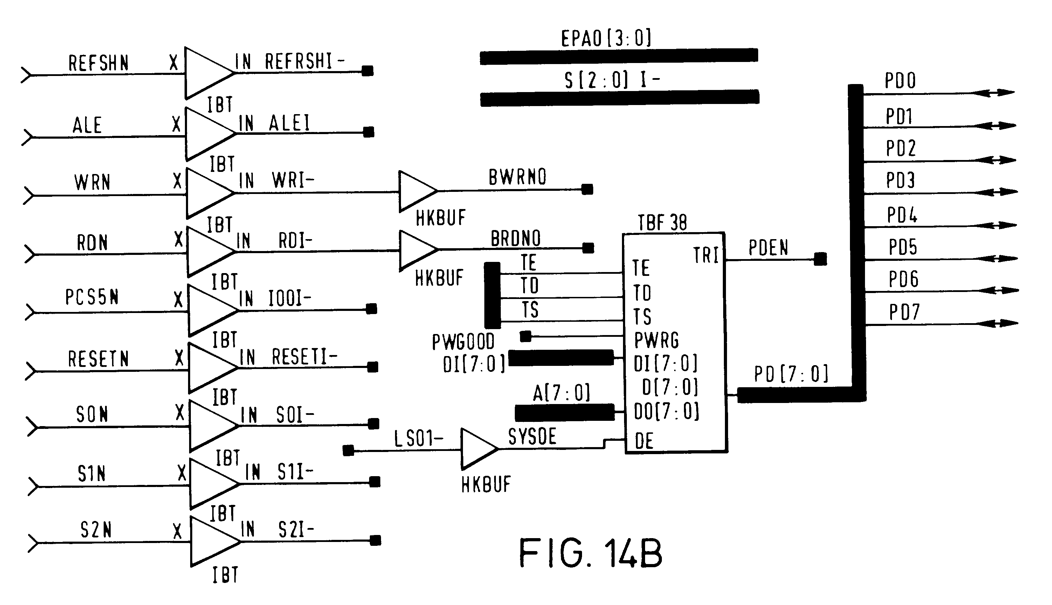

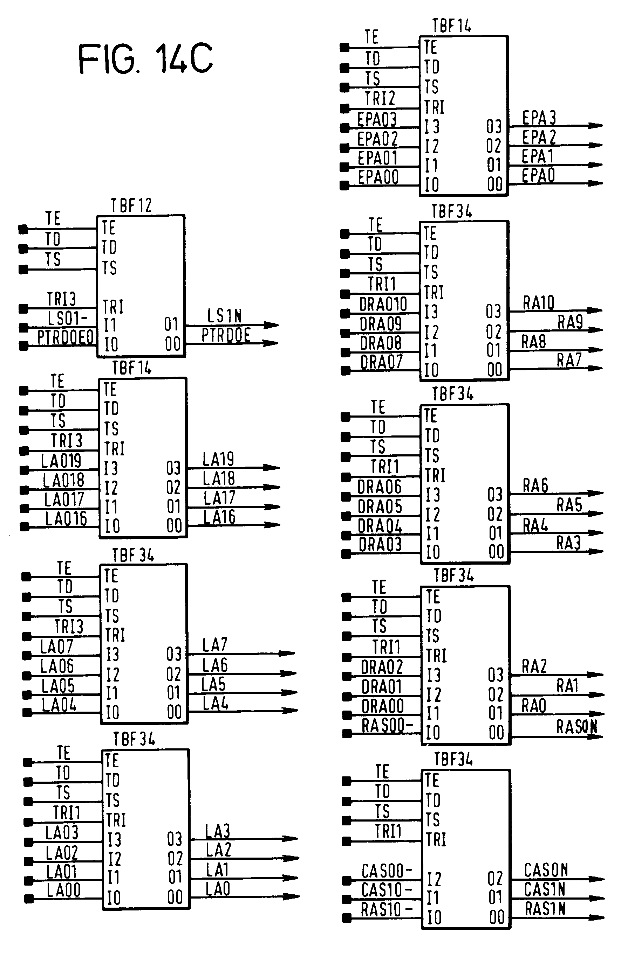

Fig. 14 shows the signals of the various interfaces of the single unit 41 of Fig. 12.

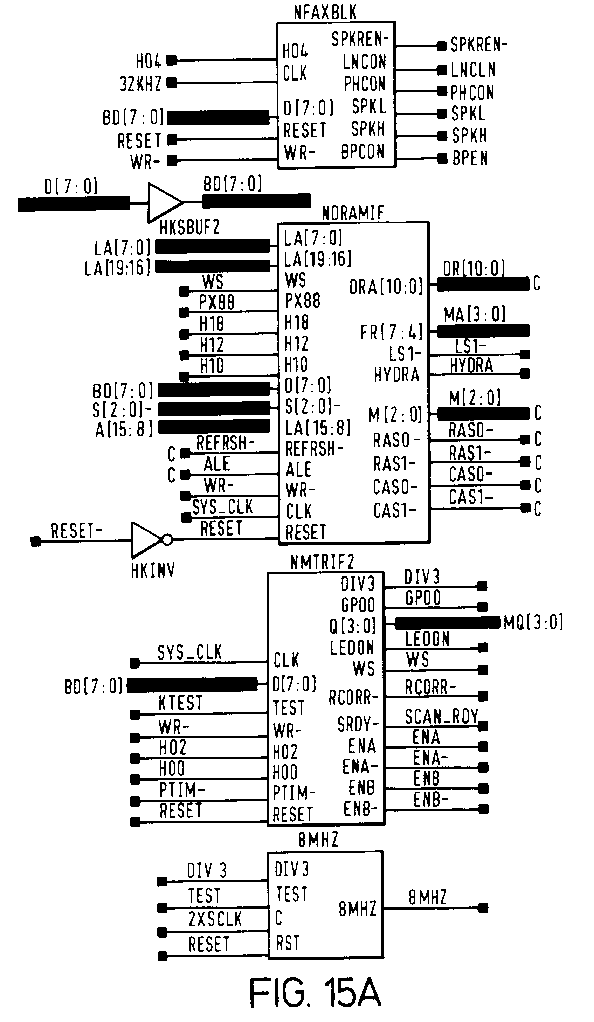

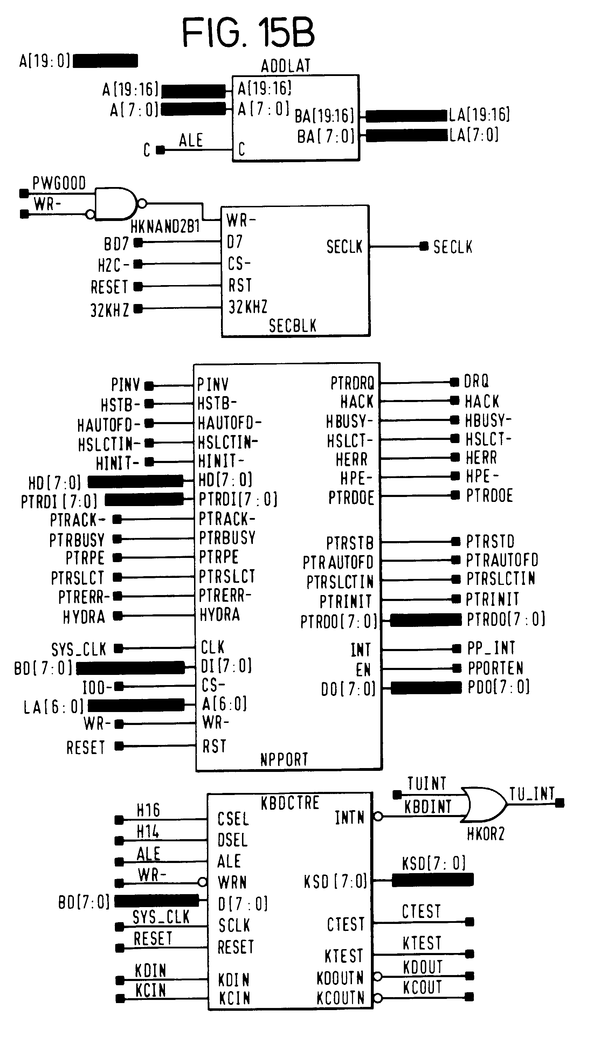

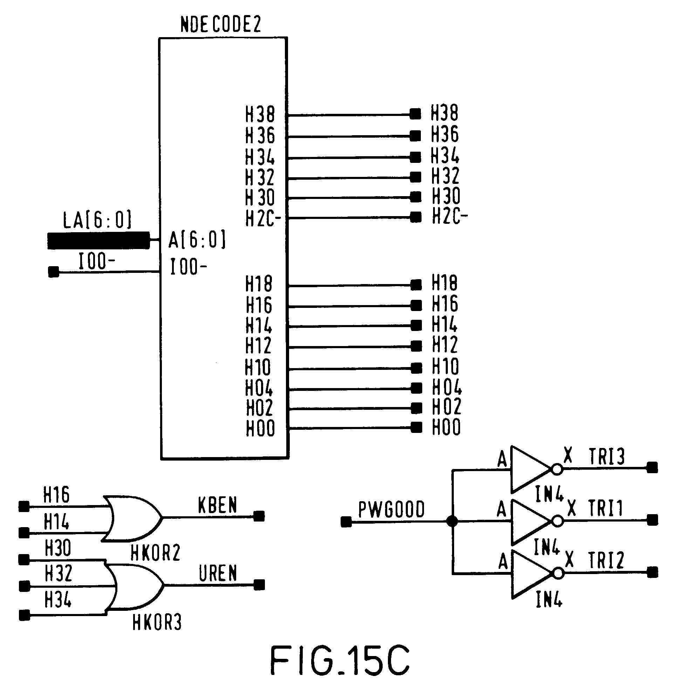

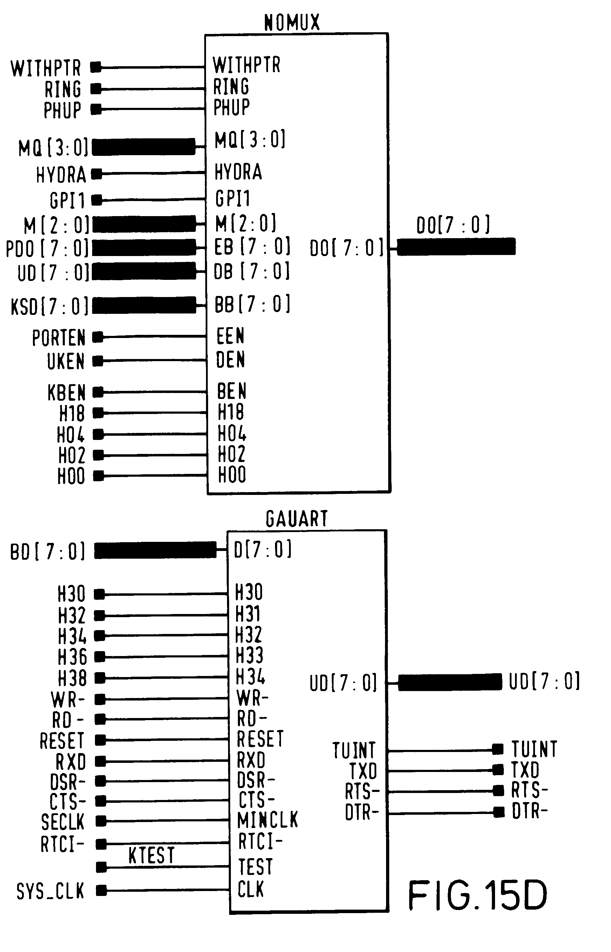

Fig. 15 shows the primary ASIC 46 components.

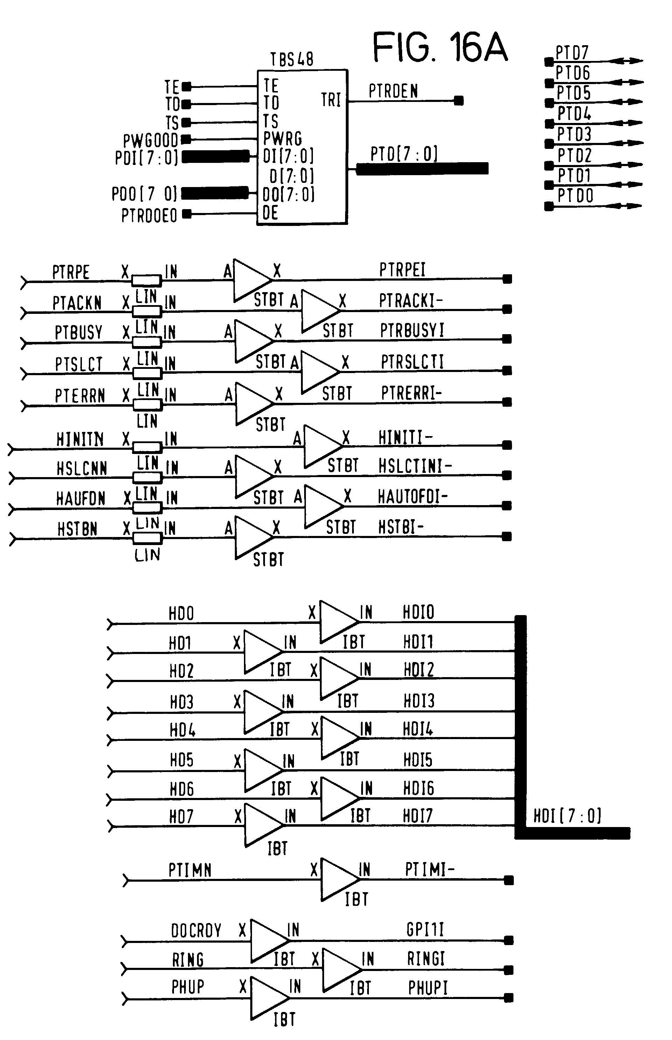

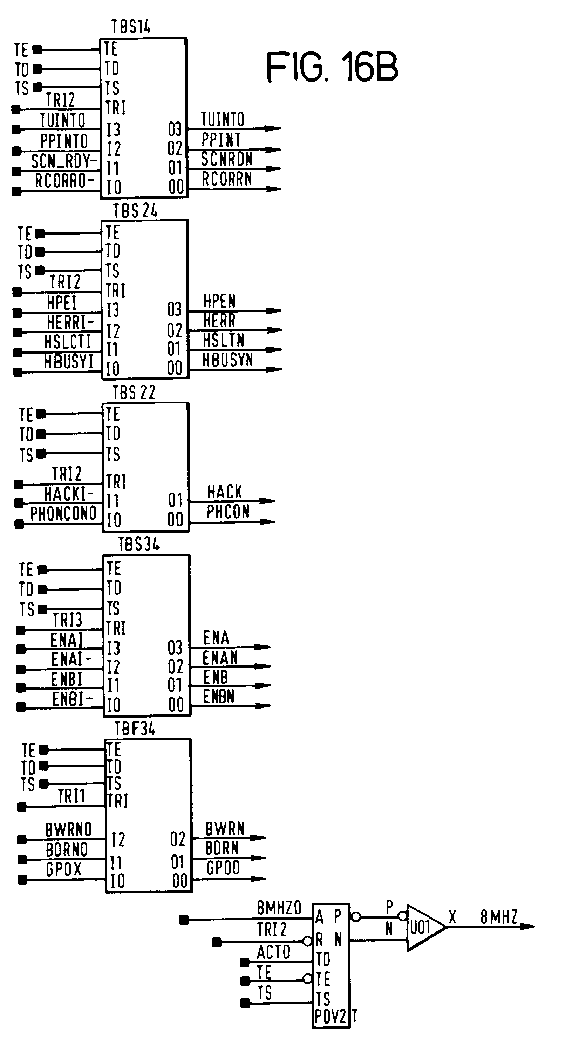

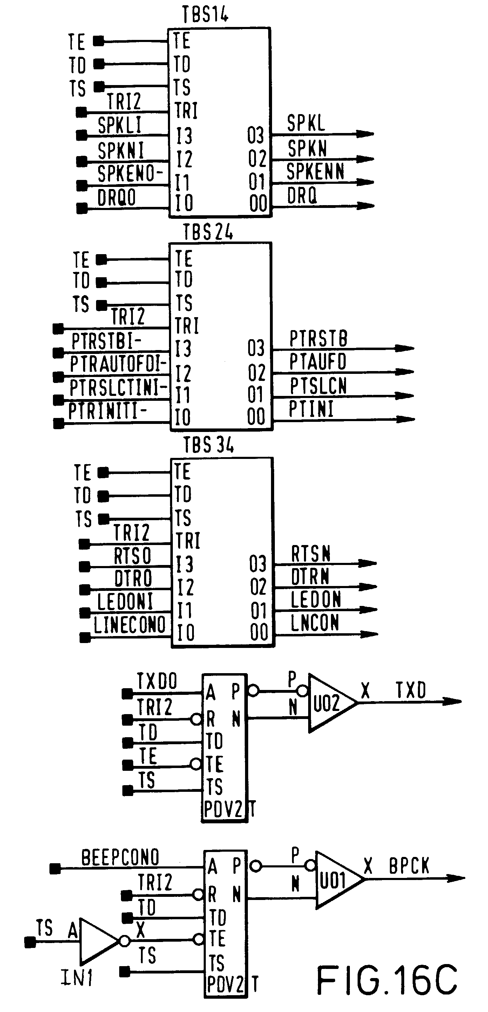

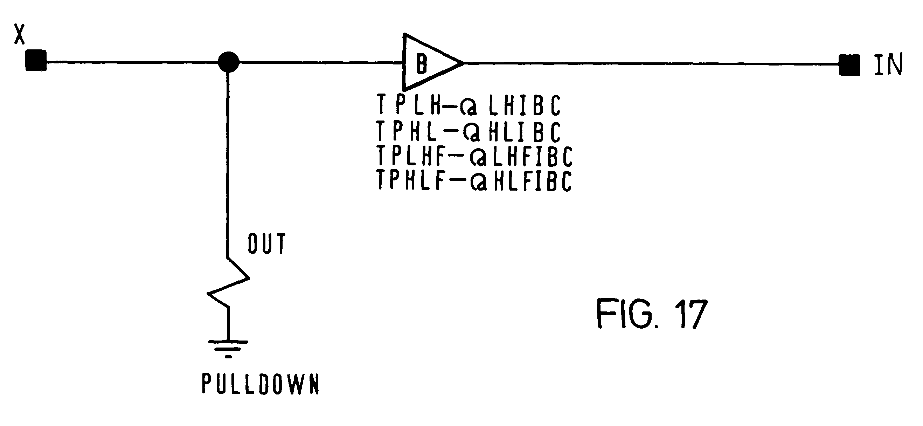

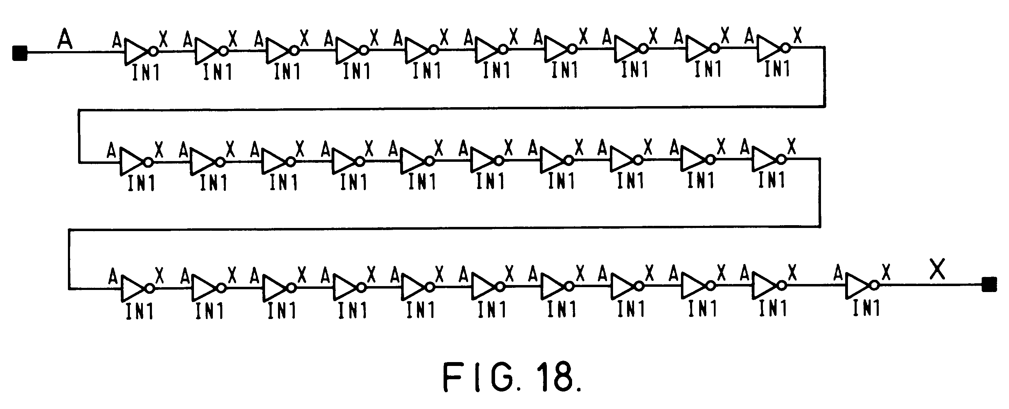

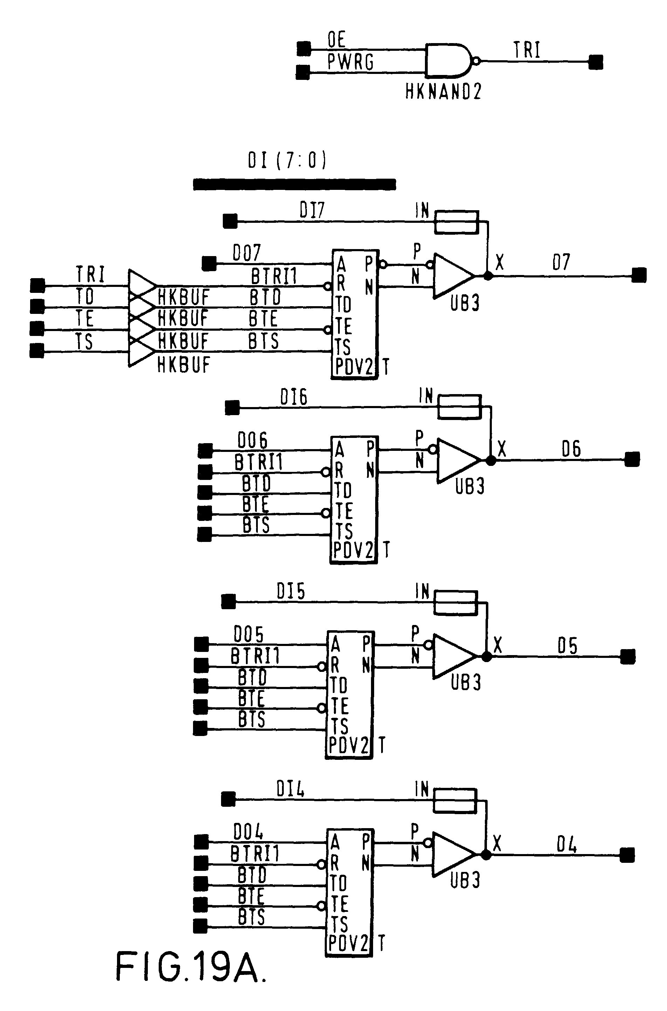

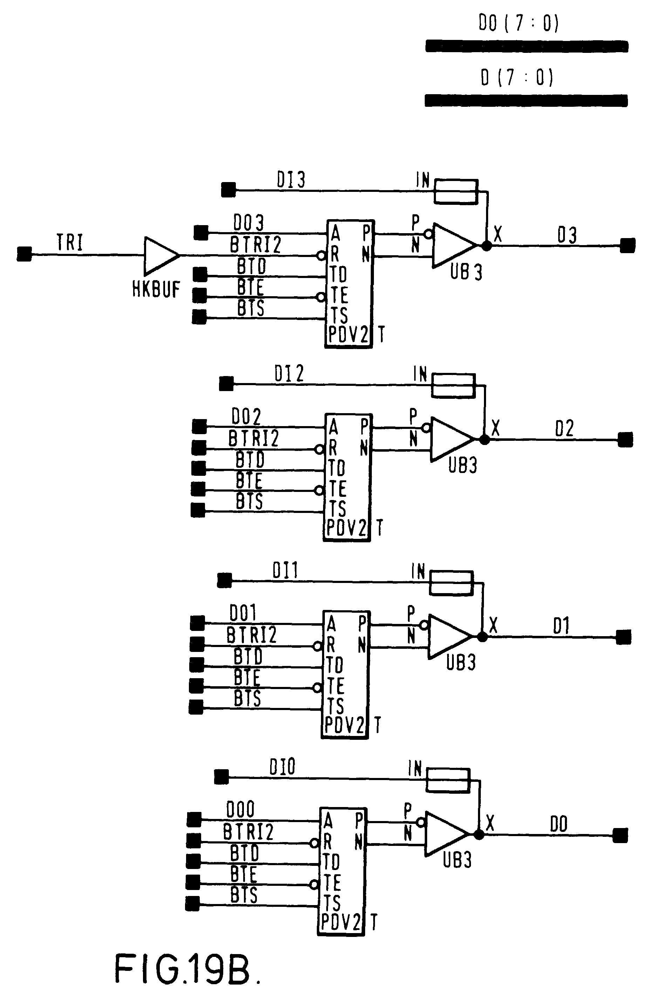

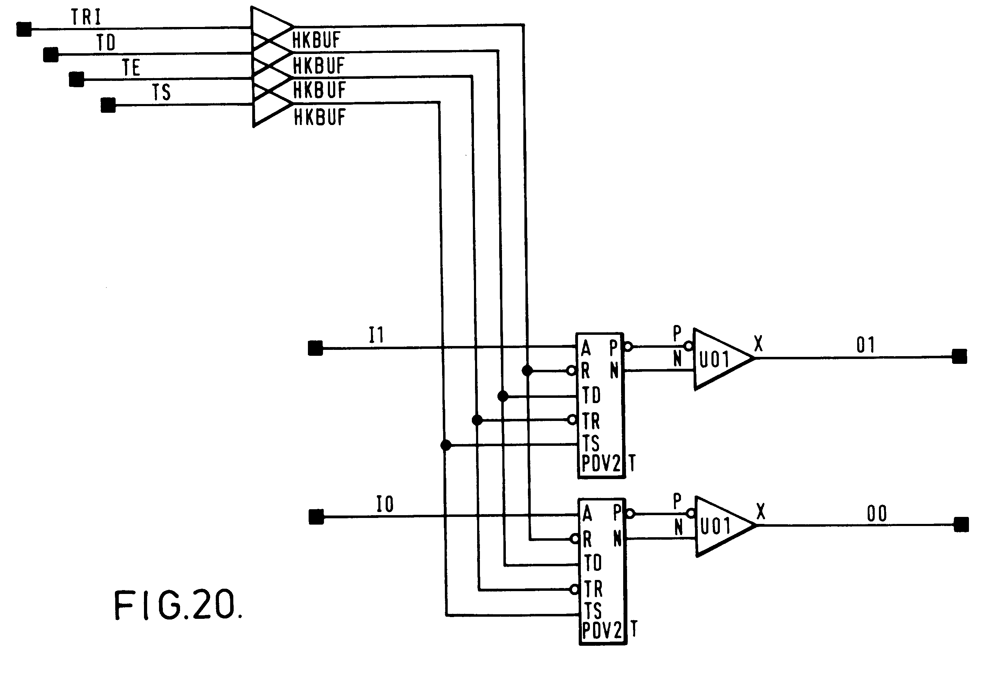

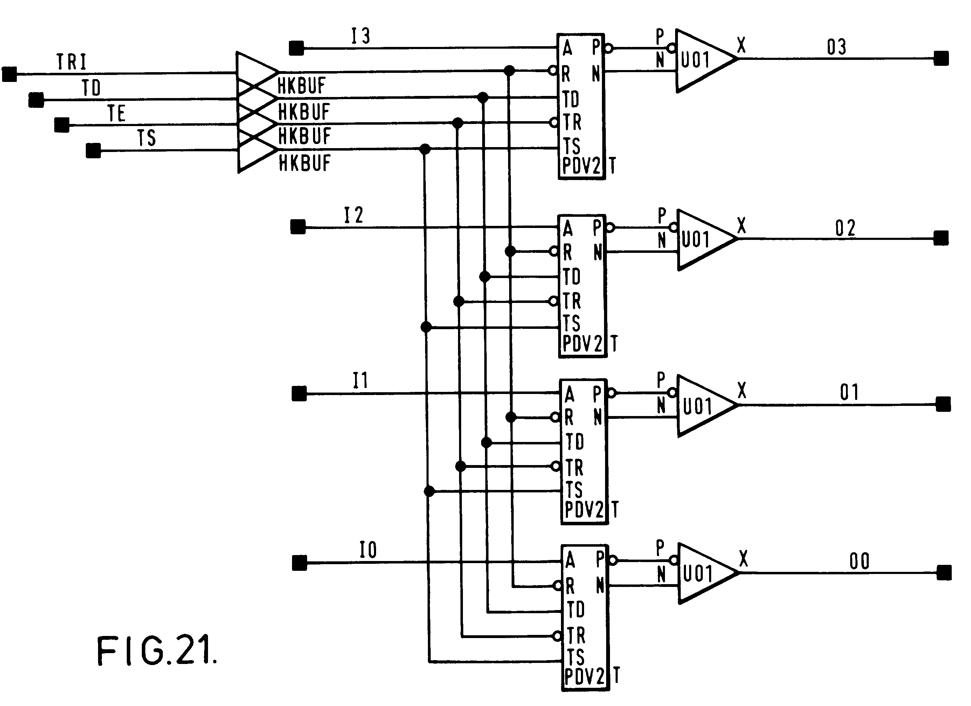

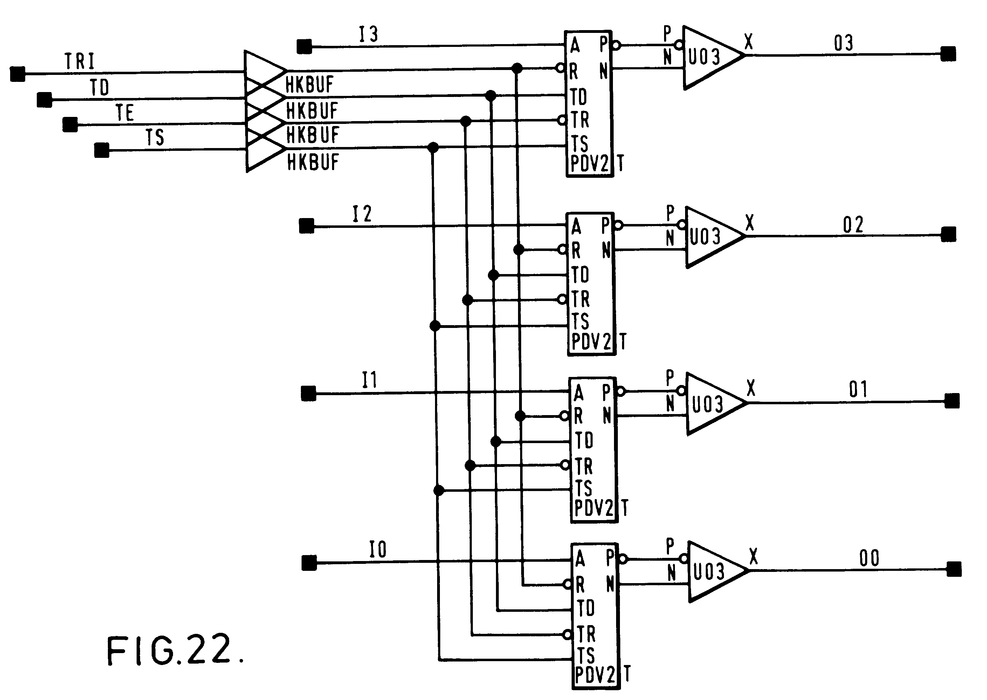

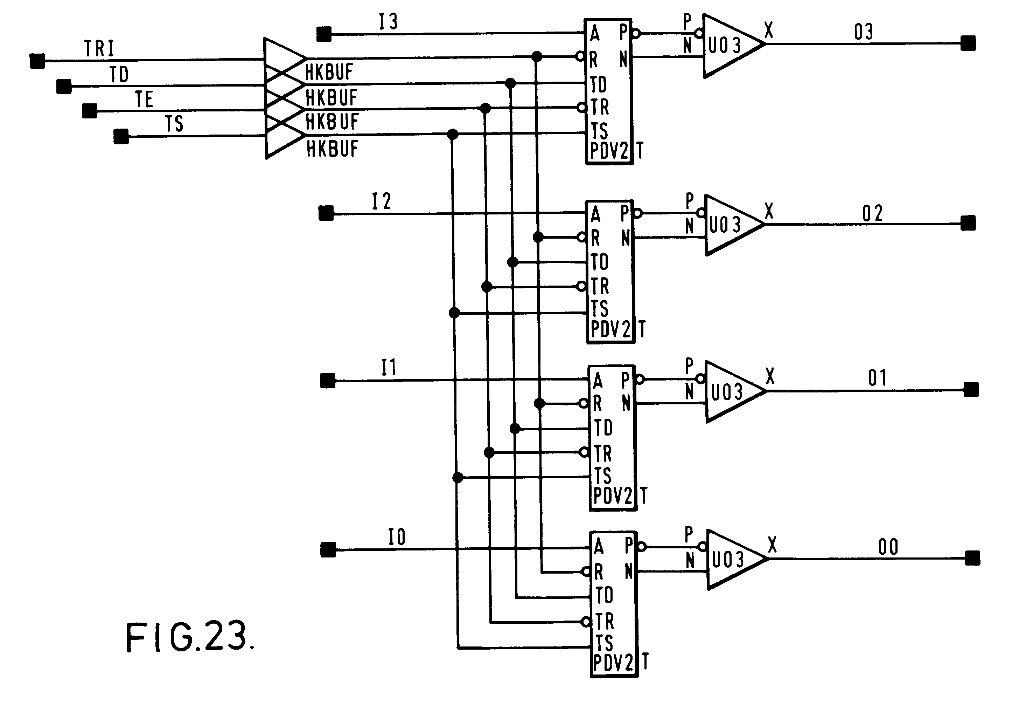

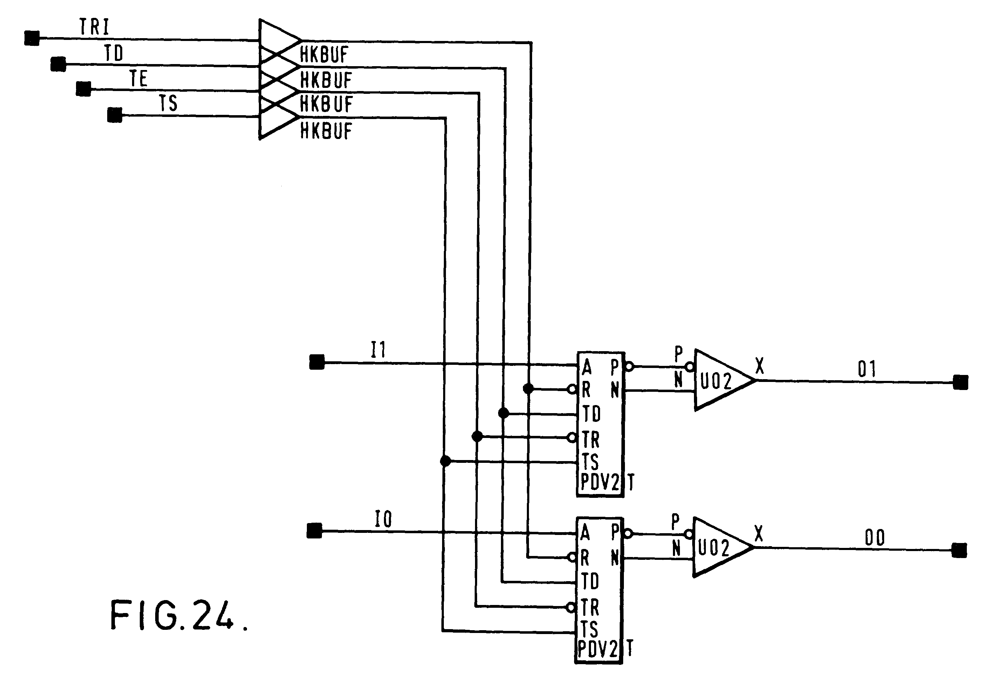

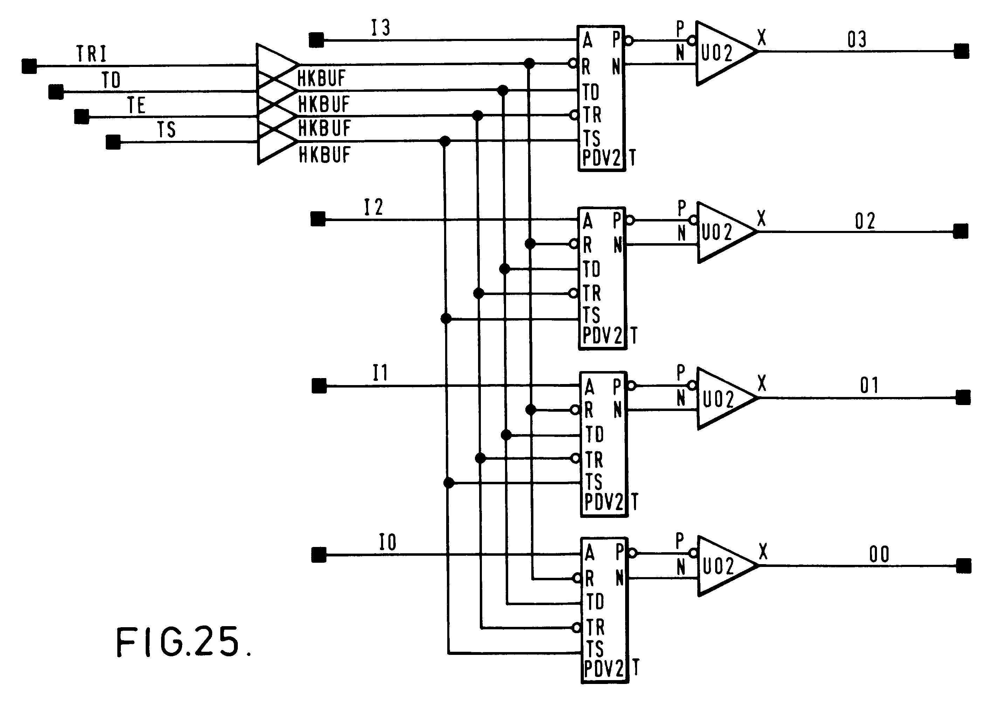

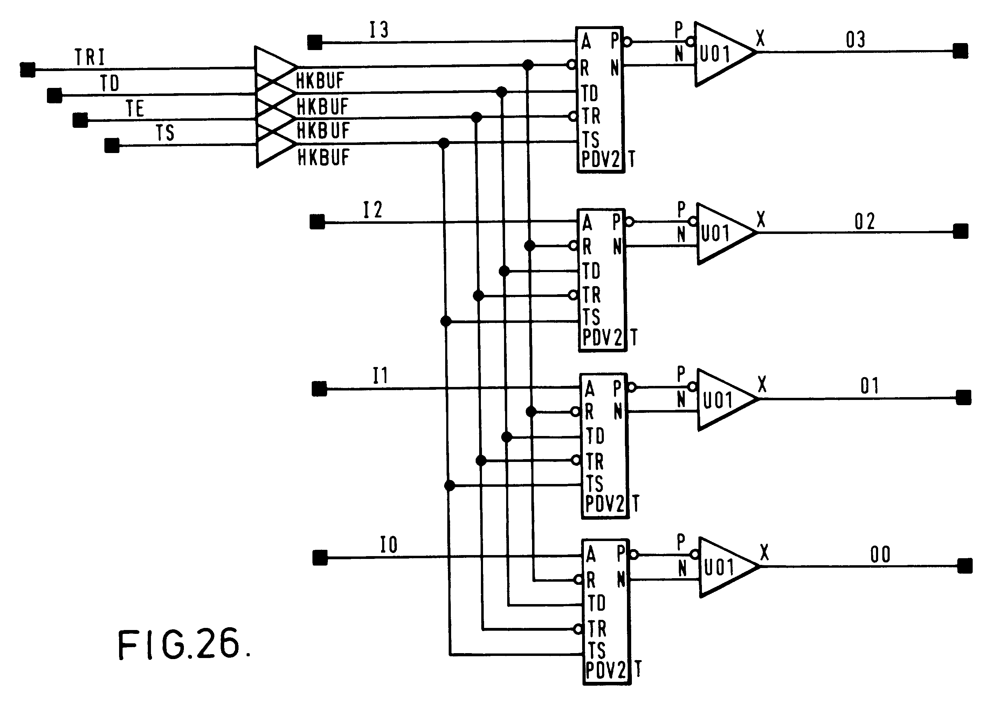

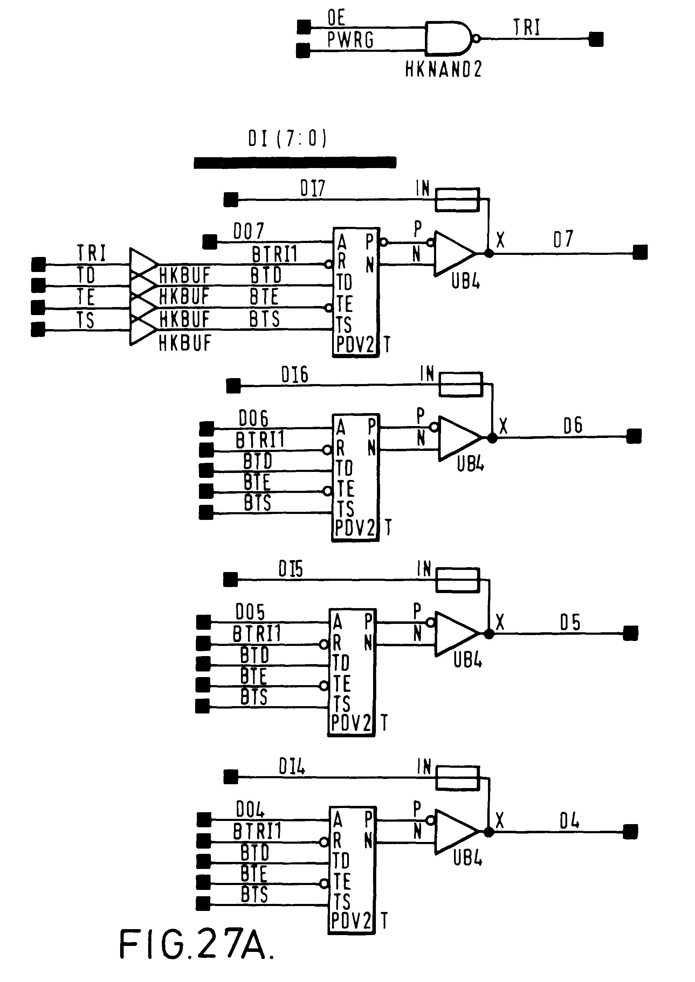

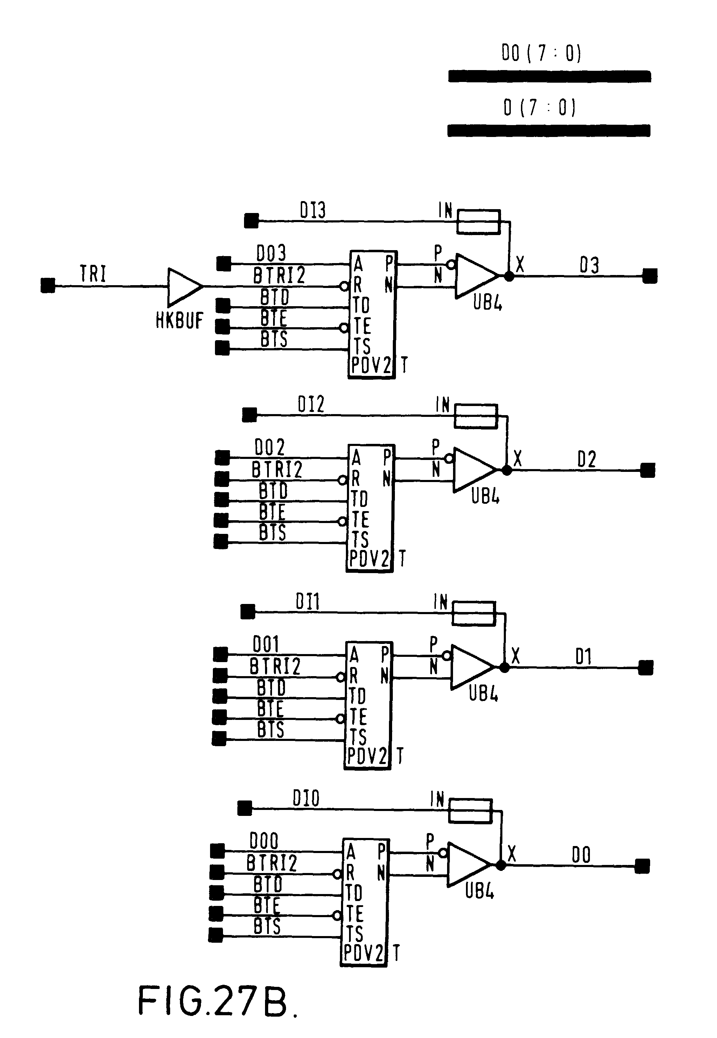

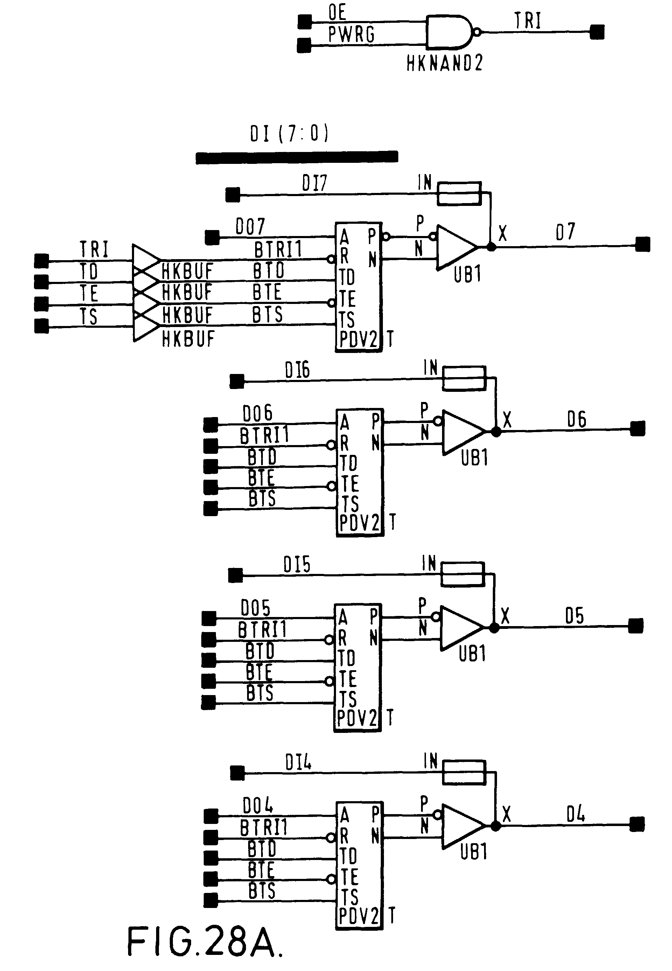

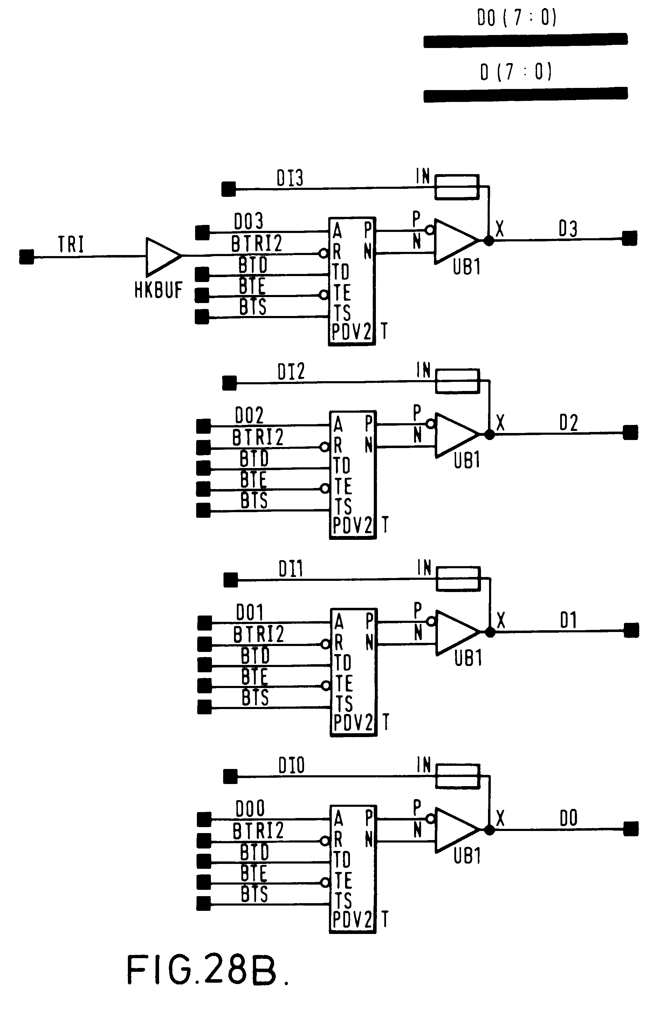

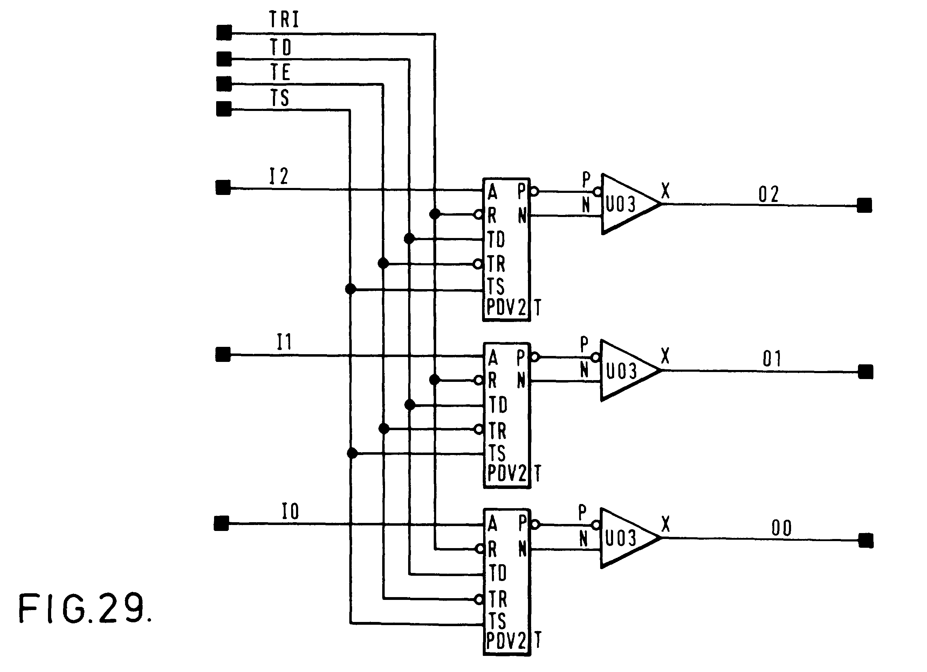

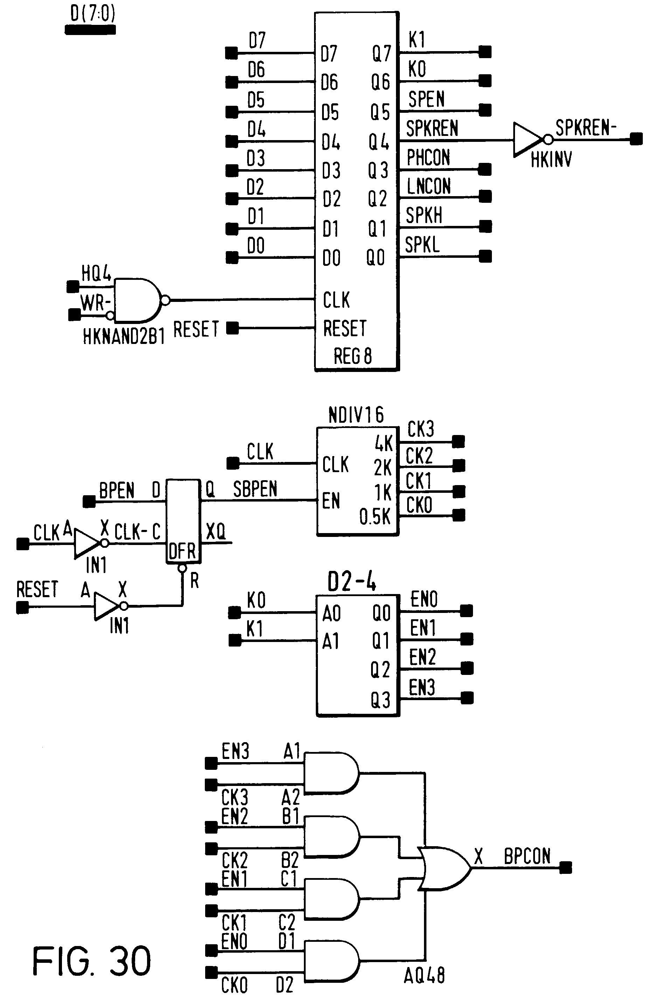

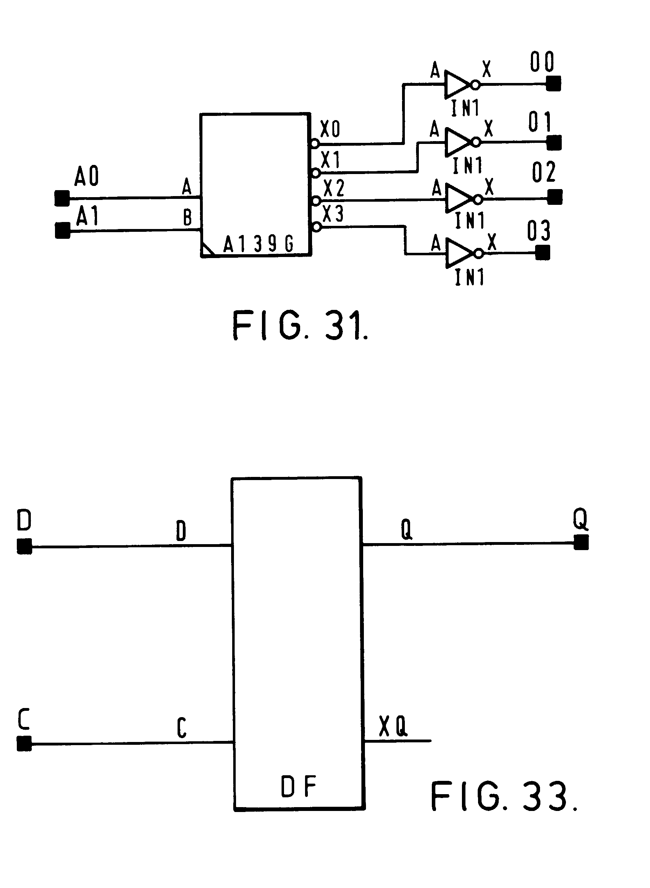

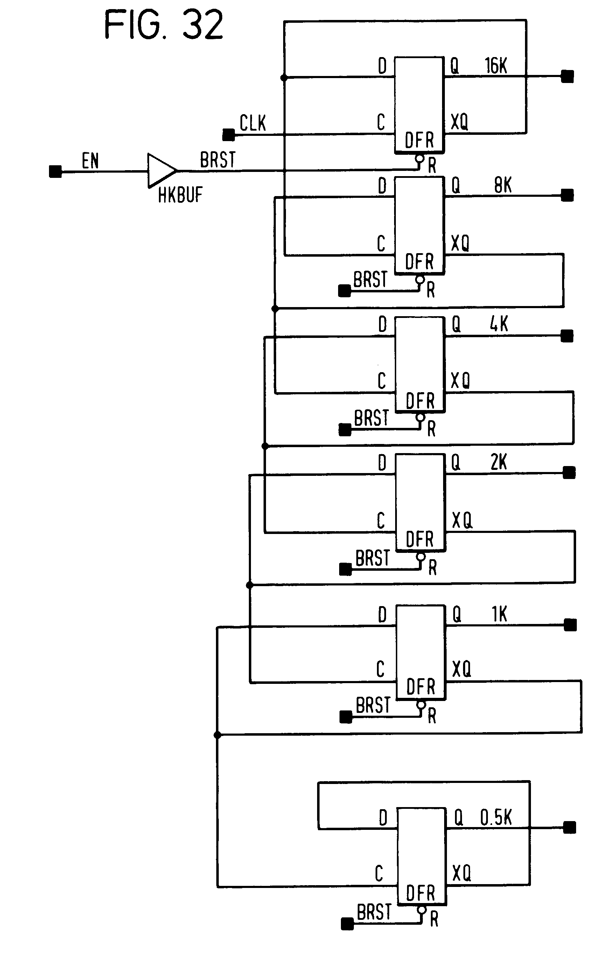

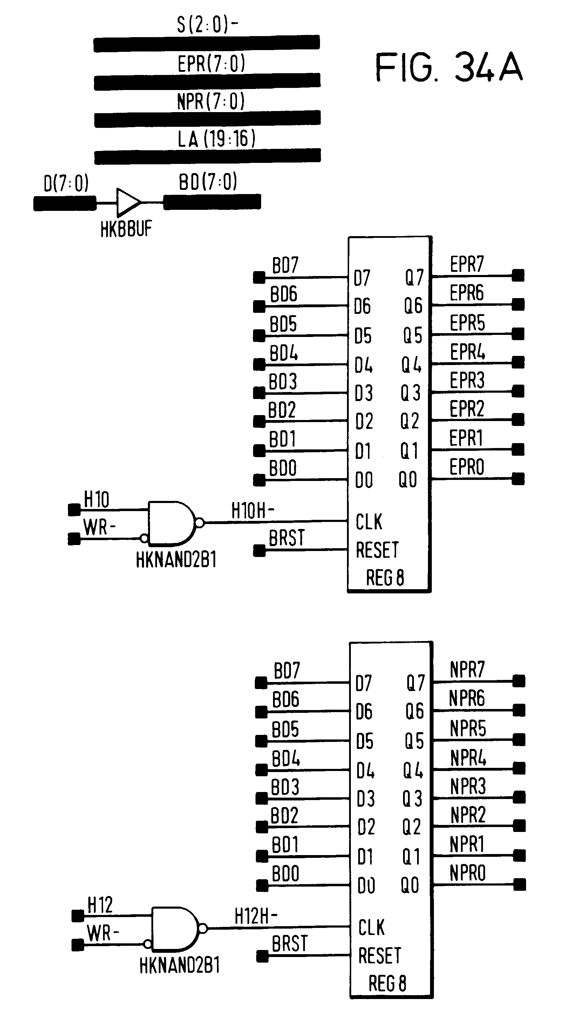

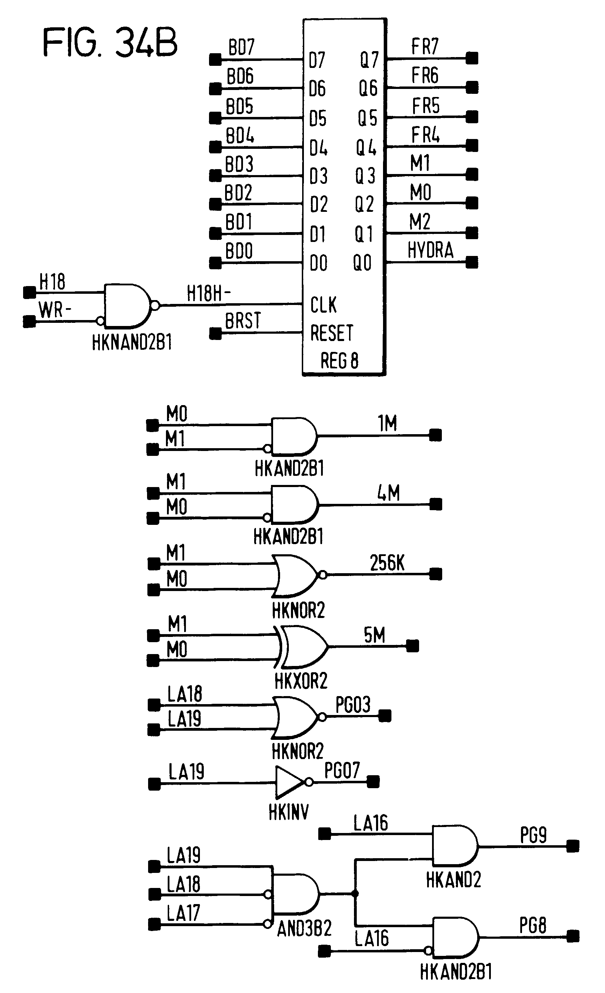

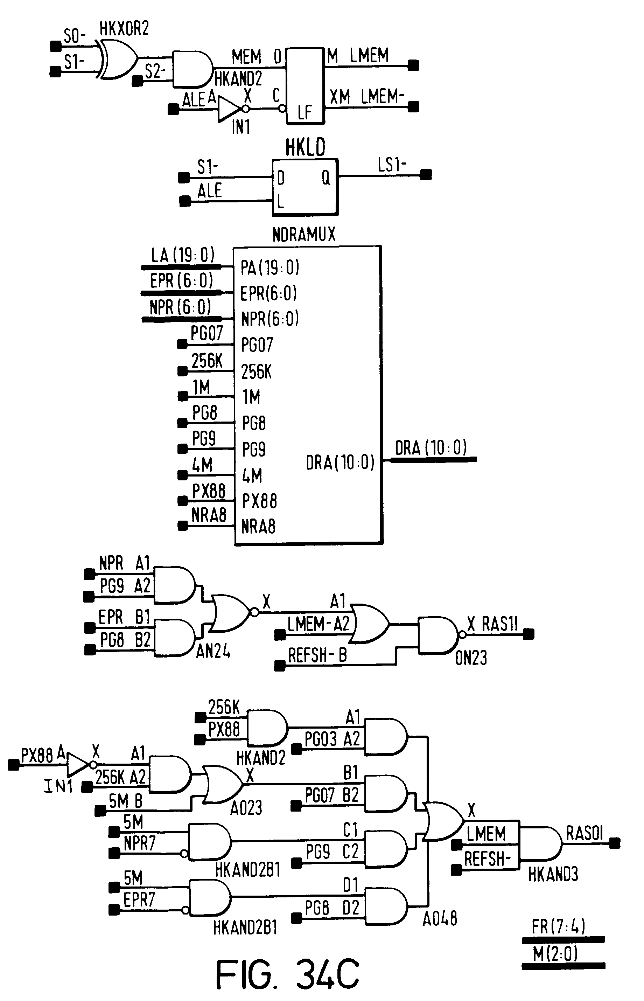

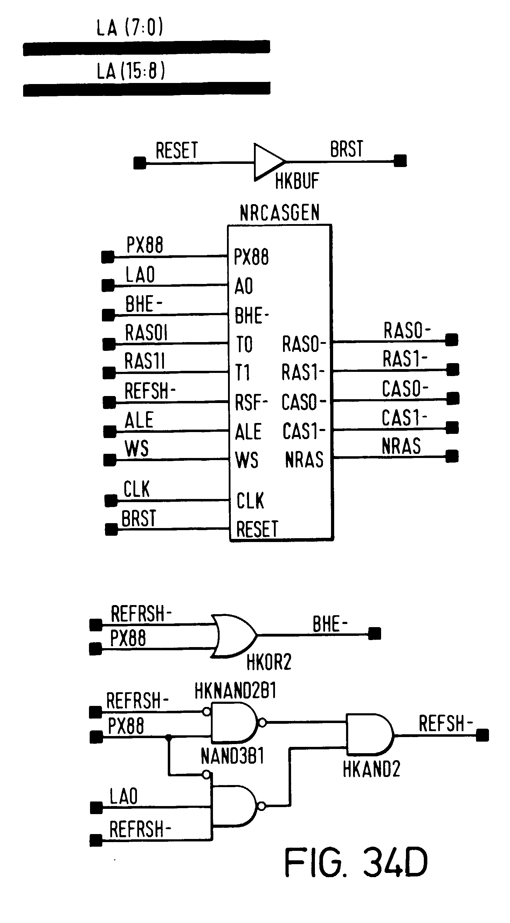

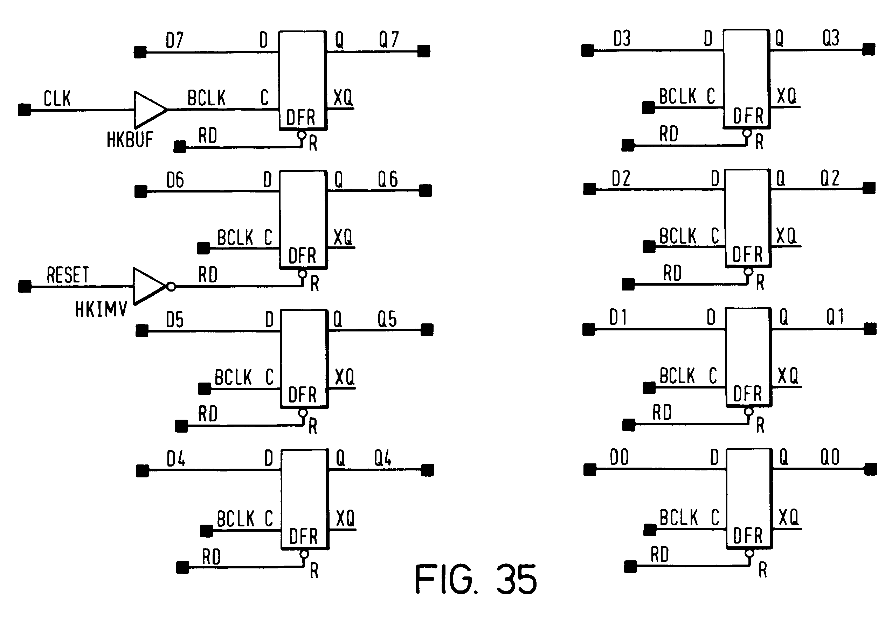

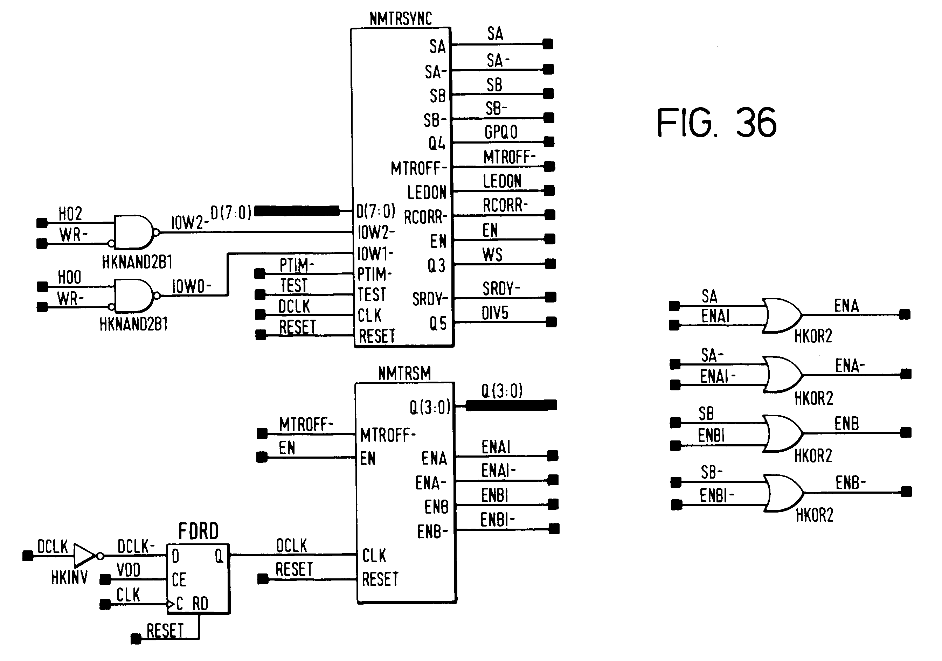

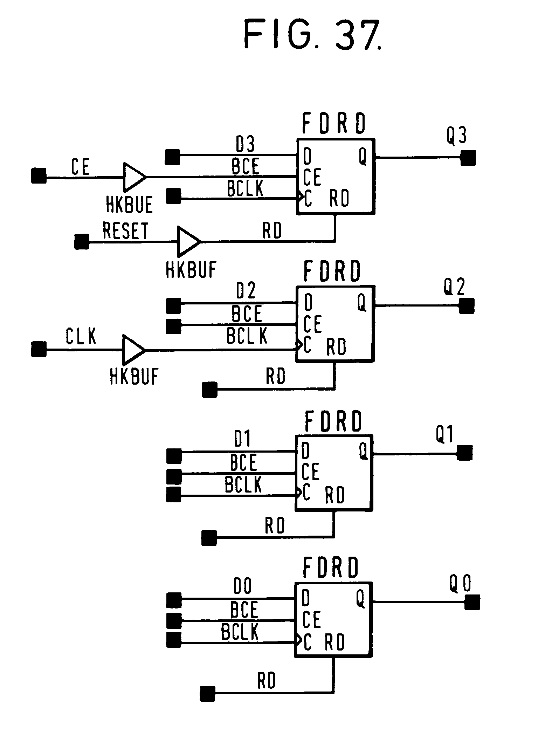

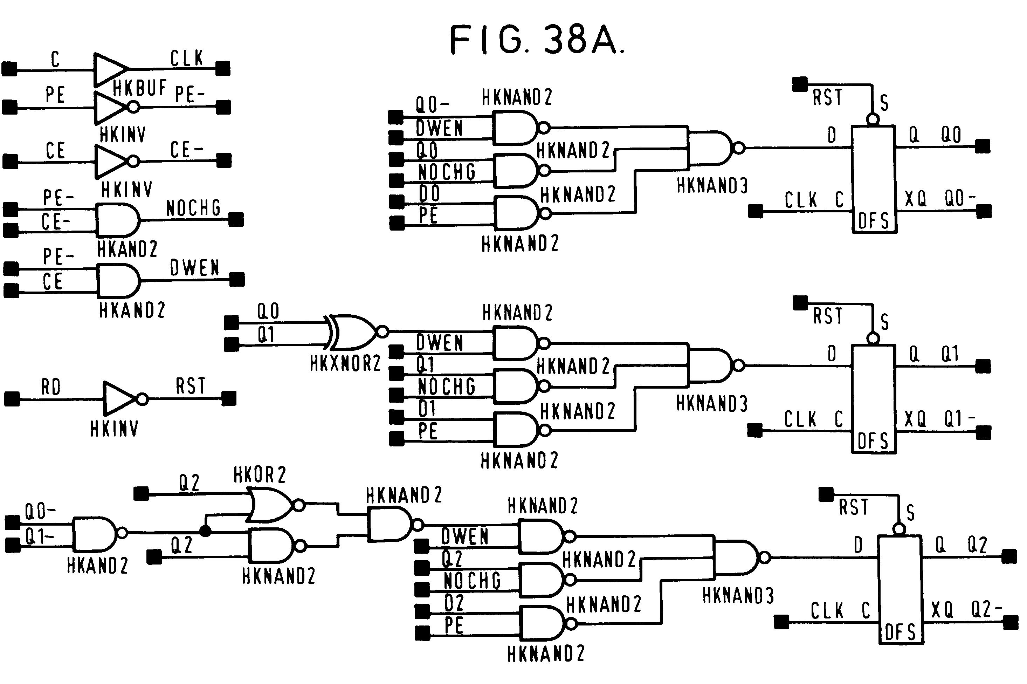

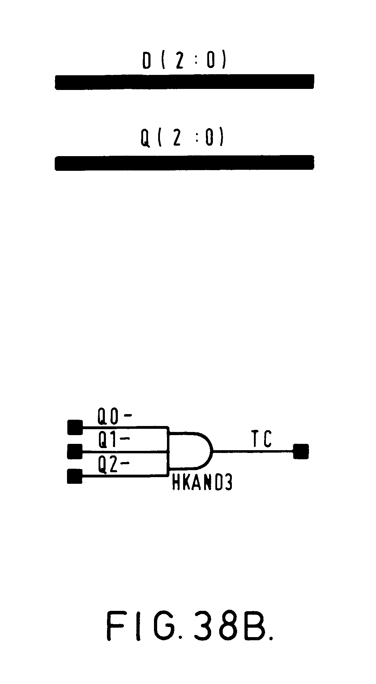

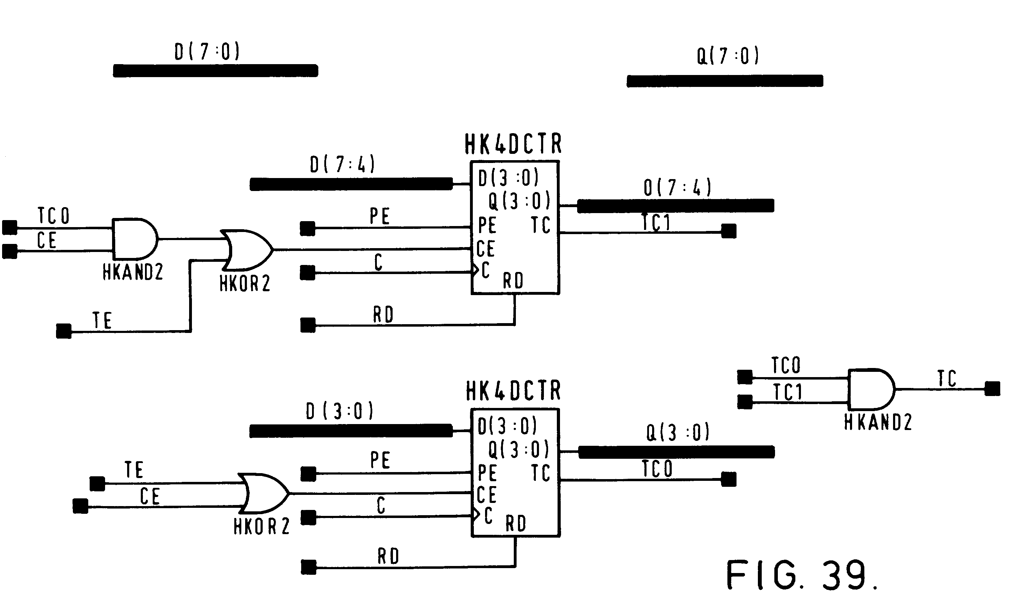

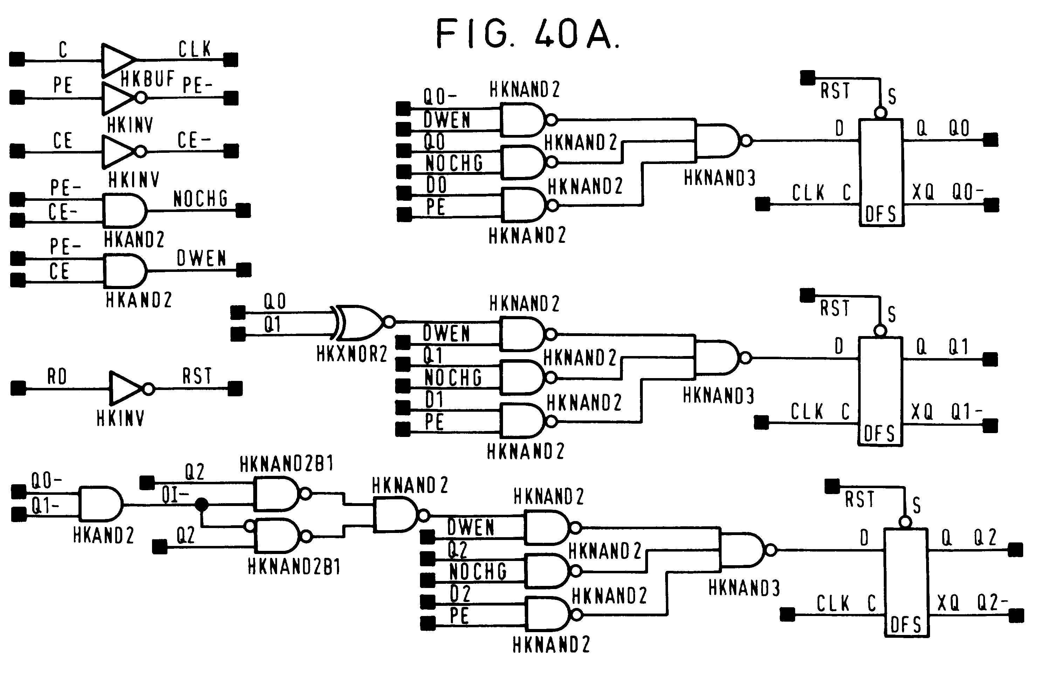

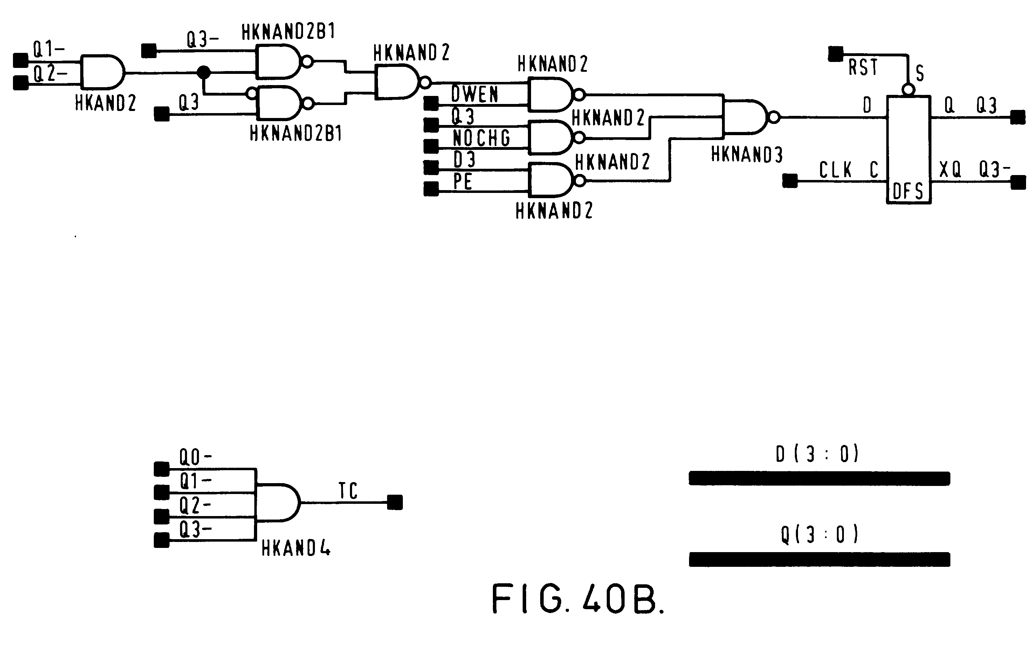

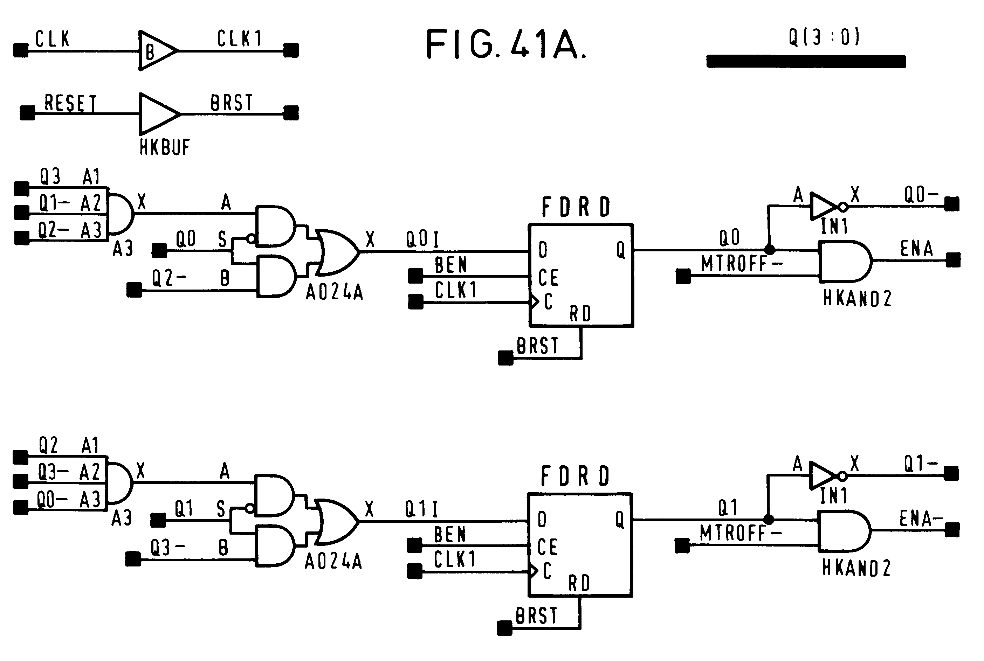

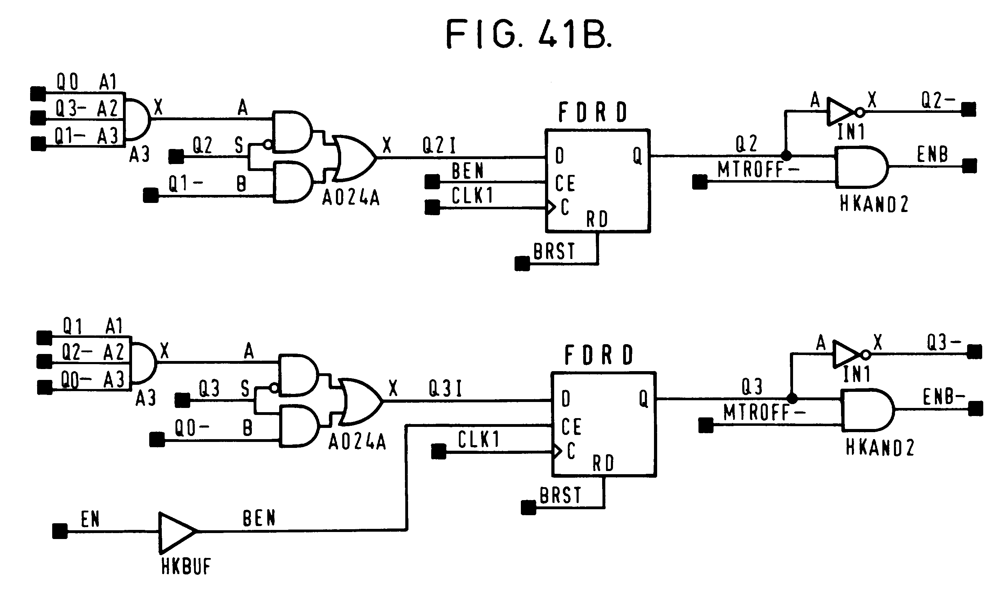

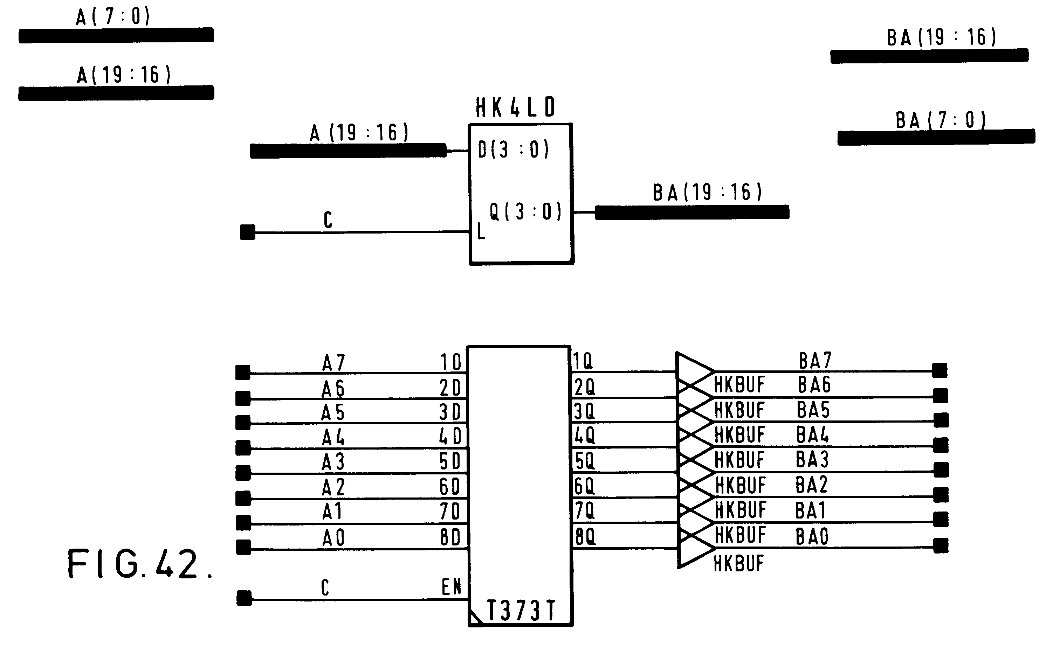

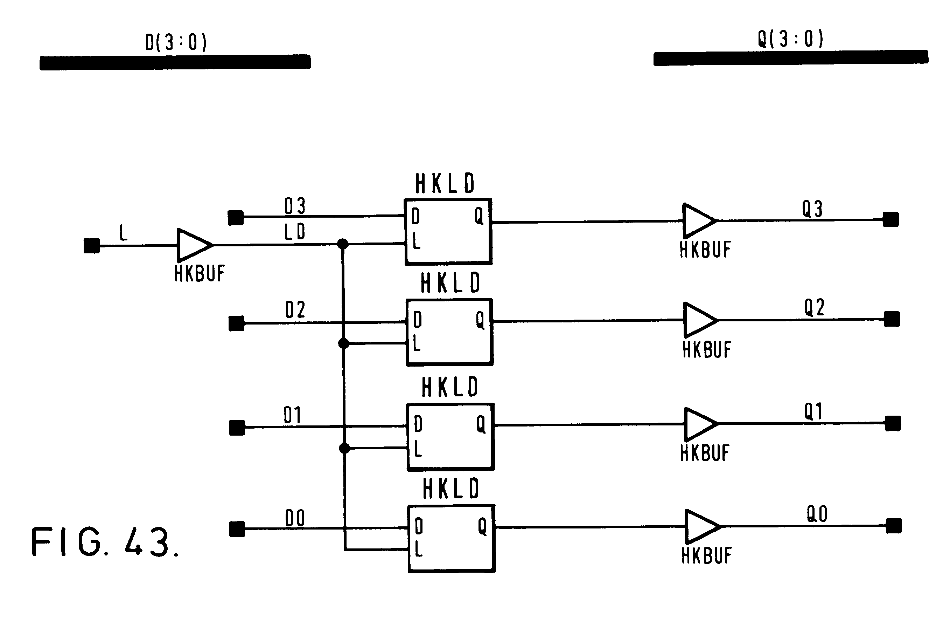

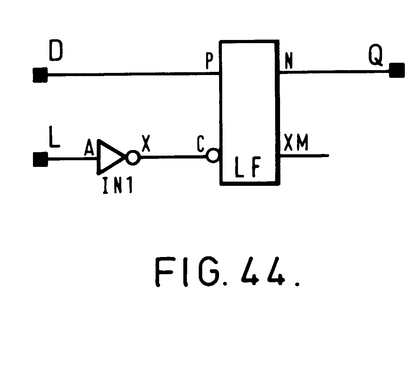

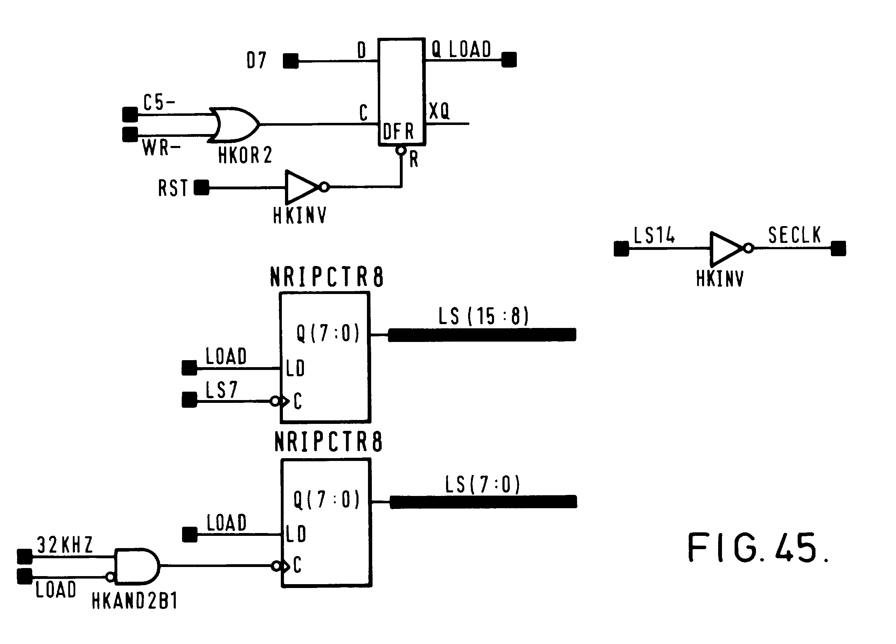

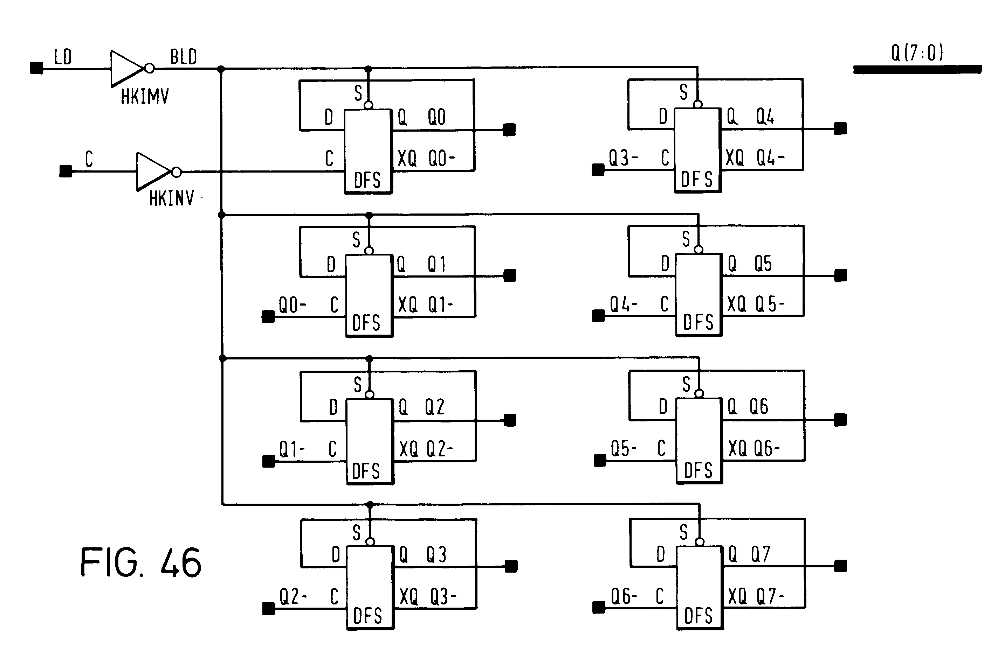

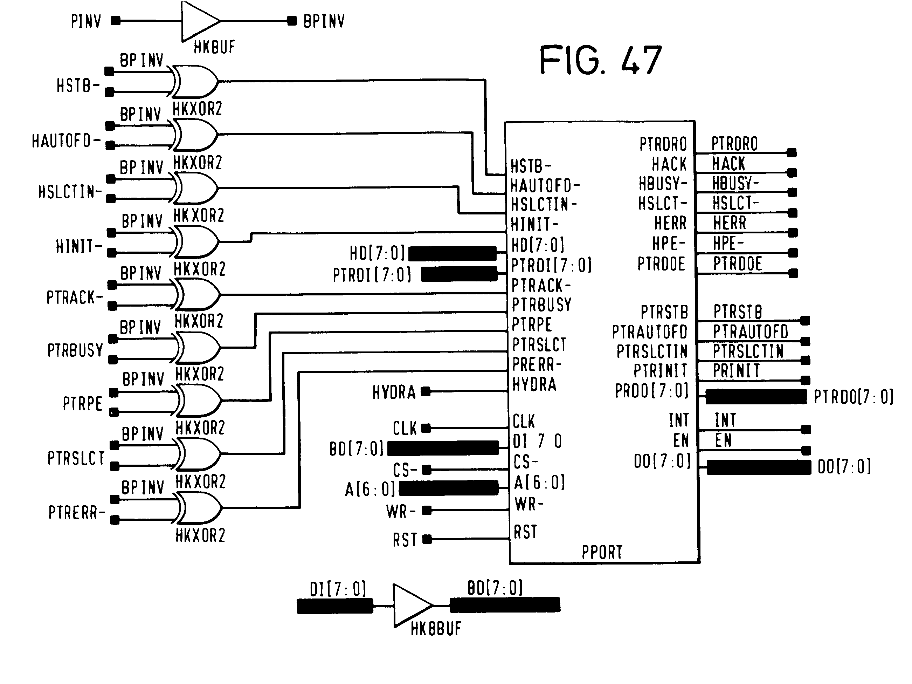

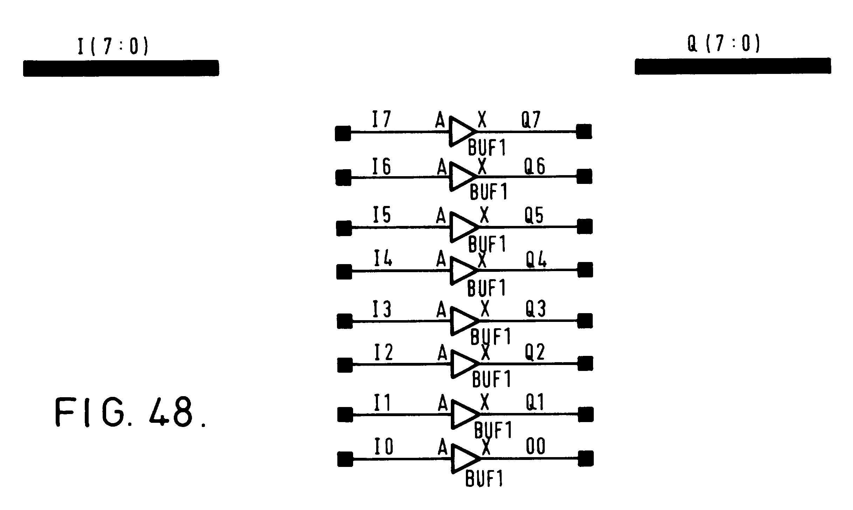

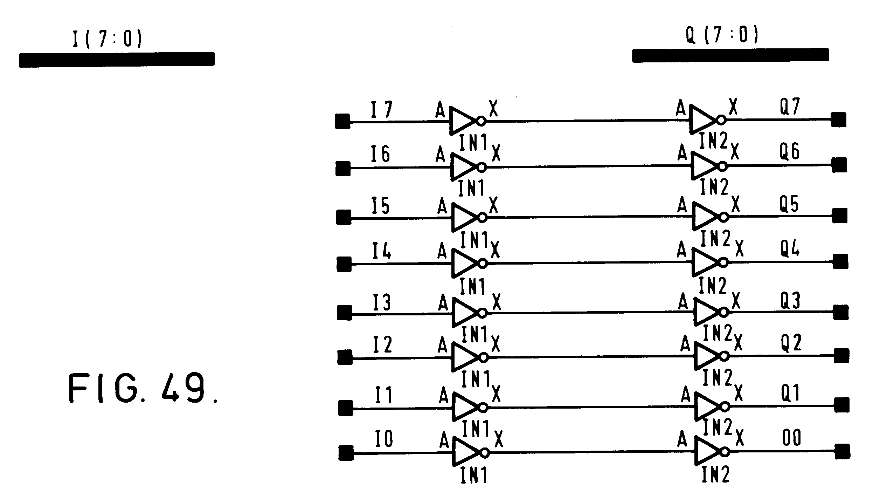

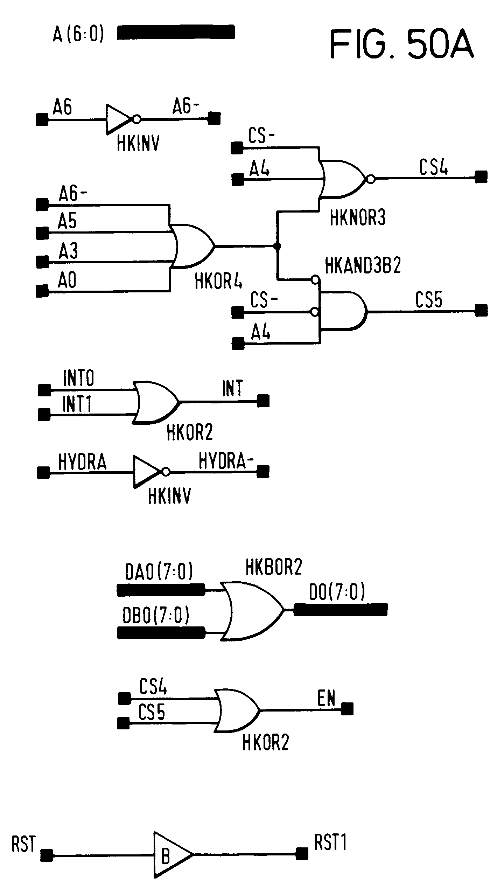

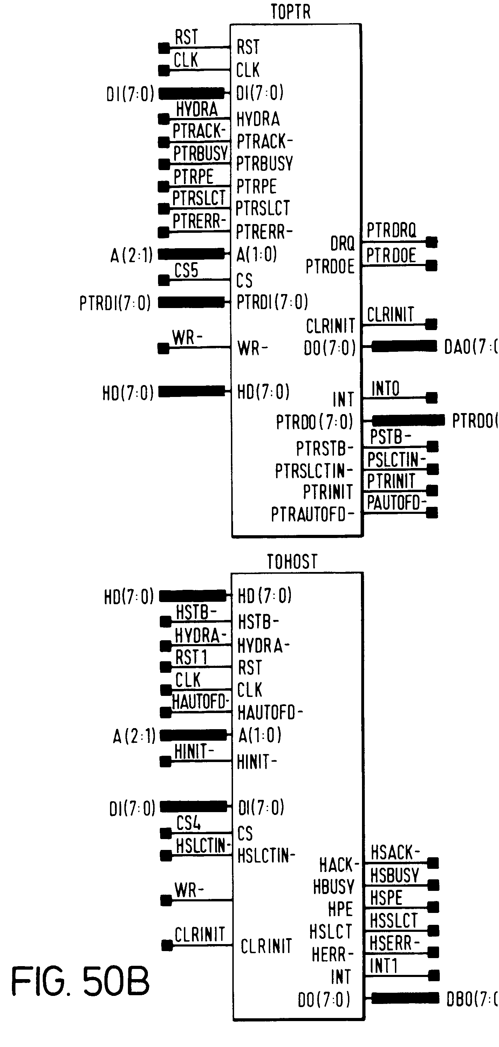

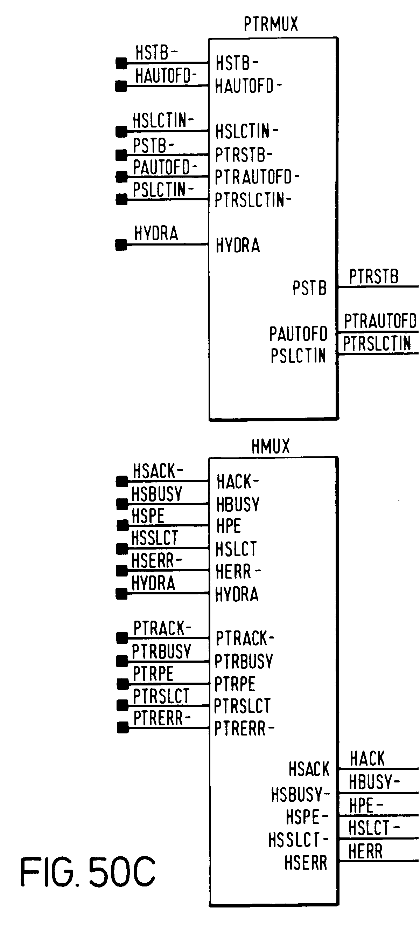

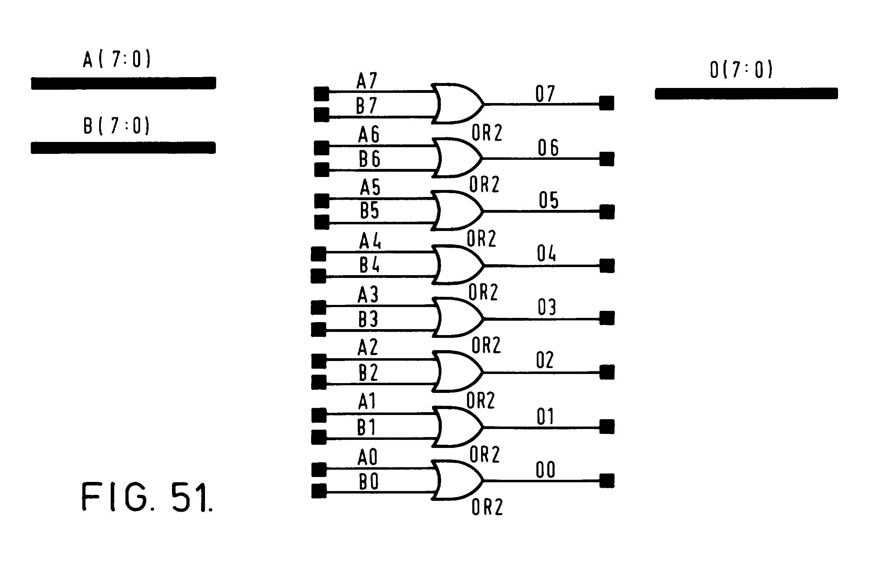

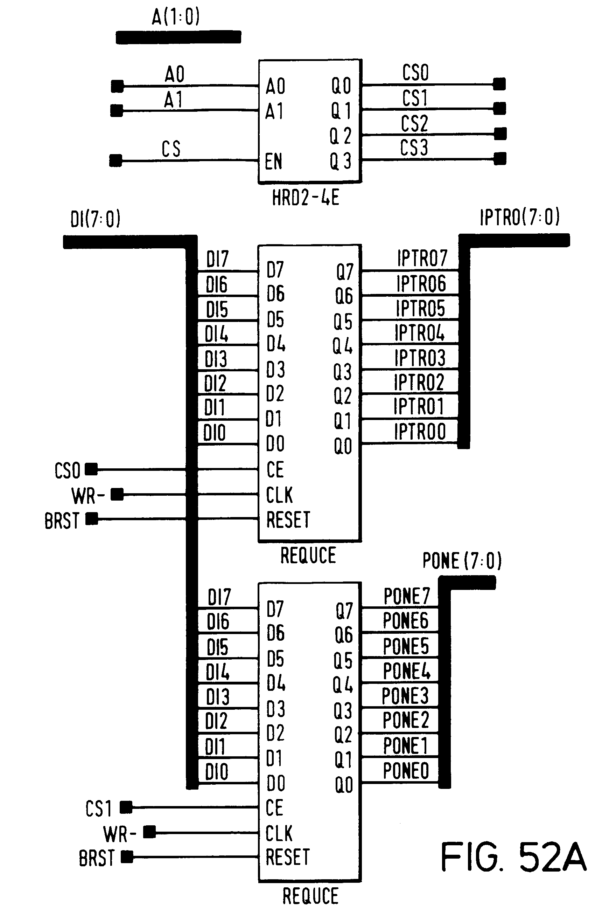

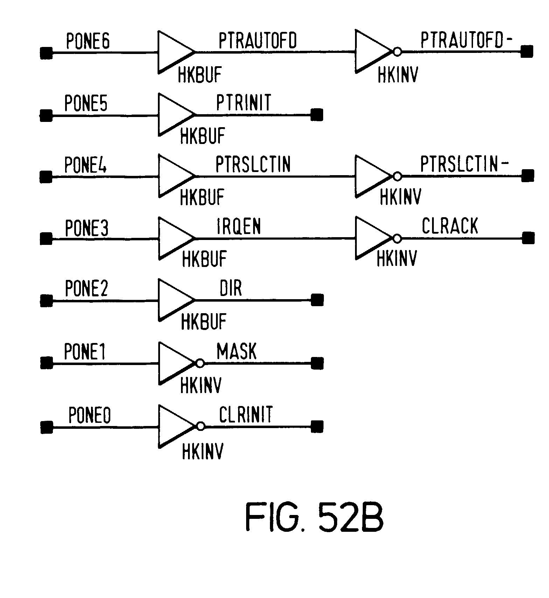

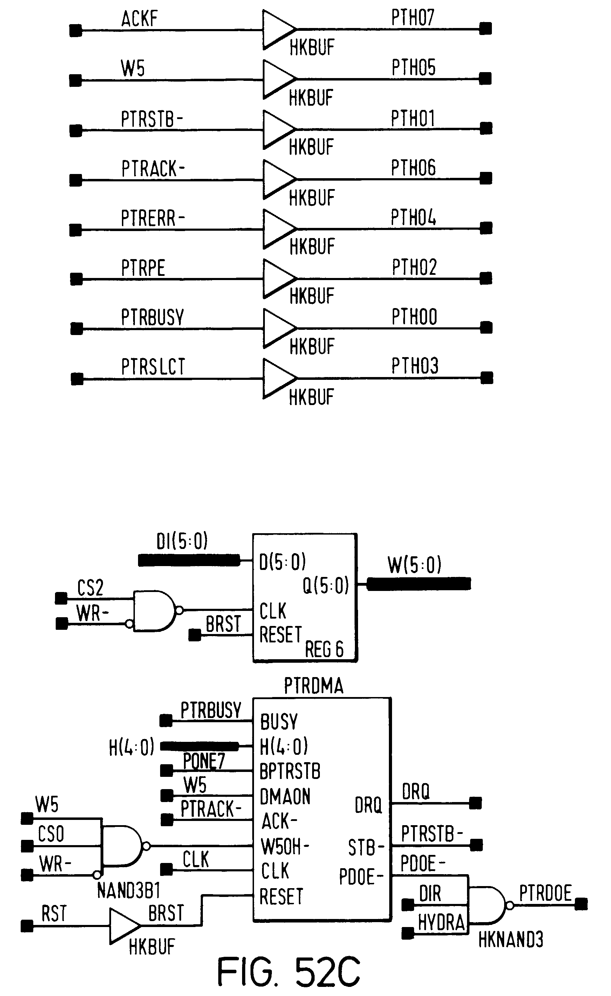

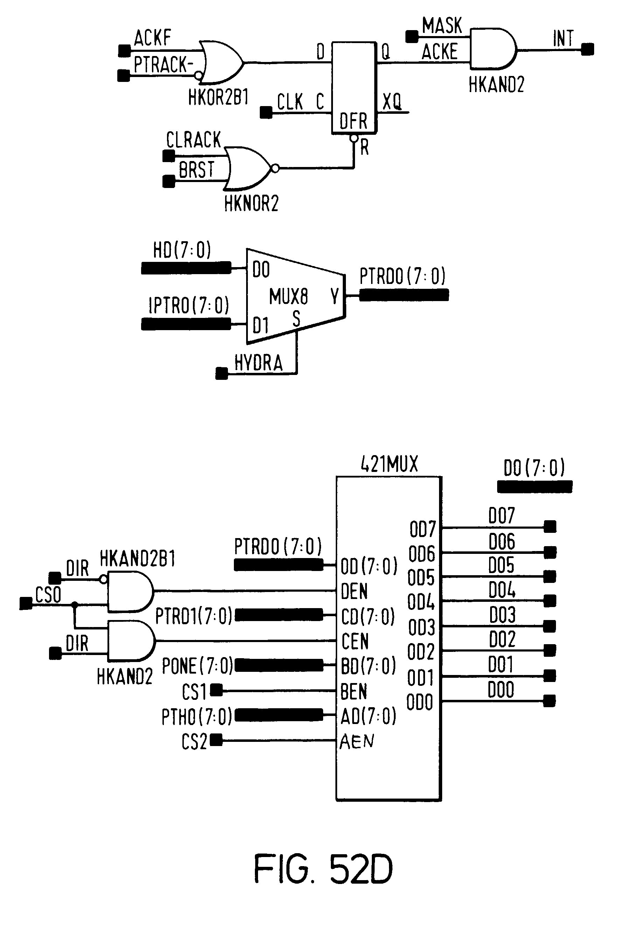

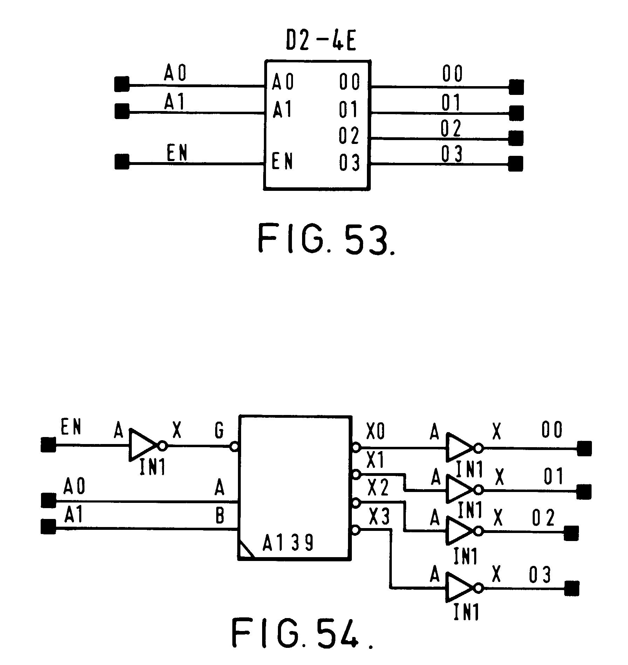

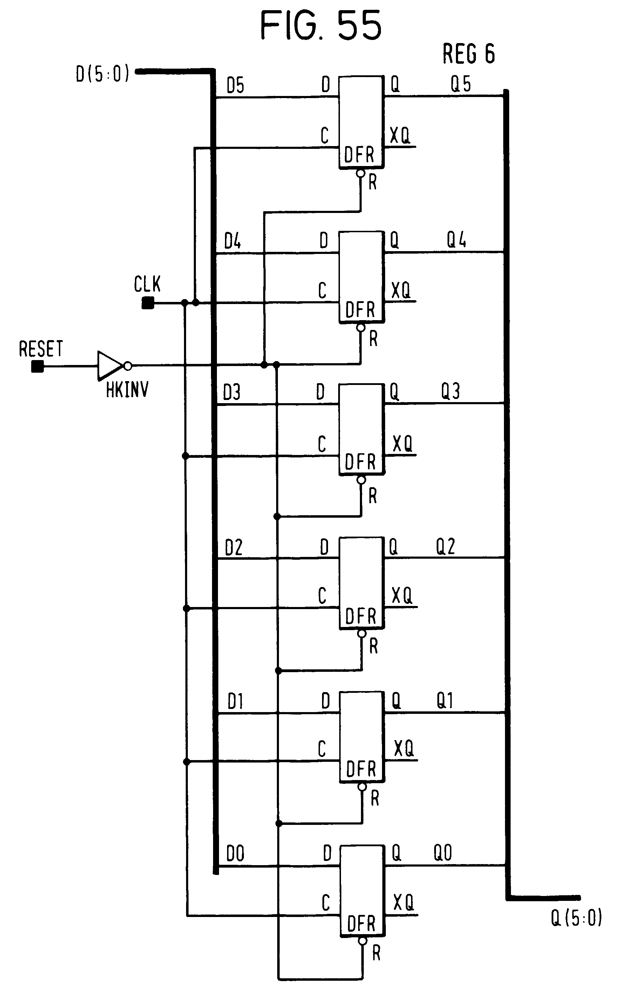

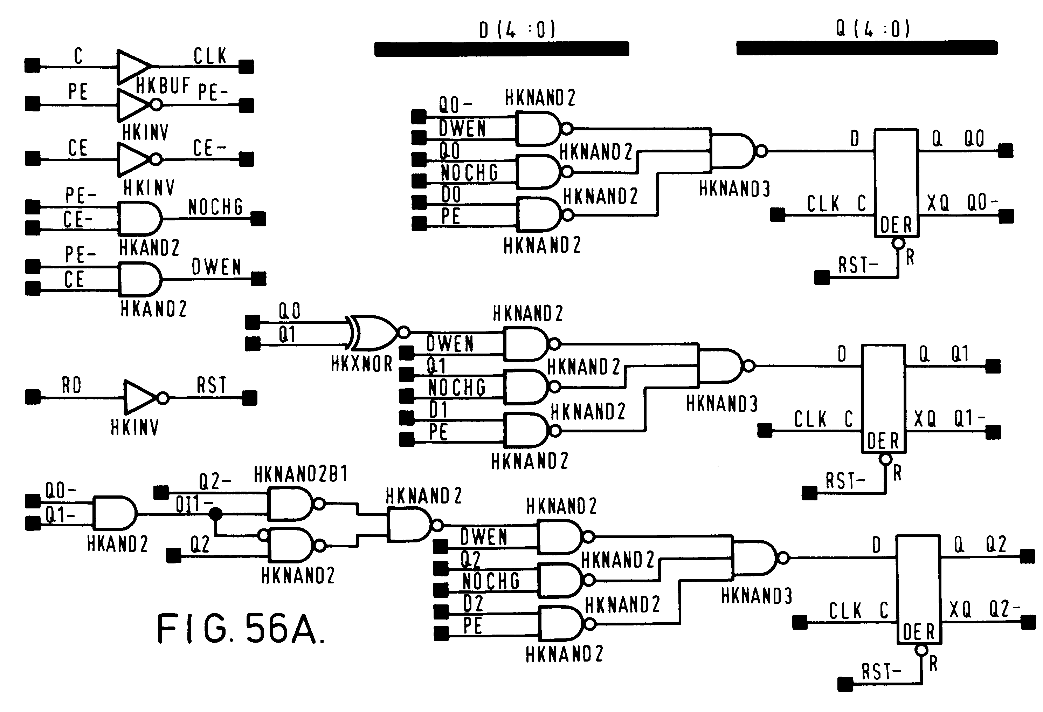

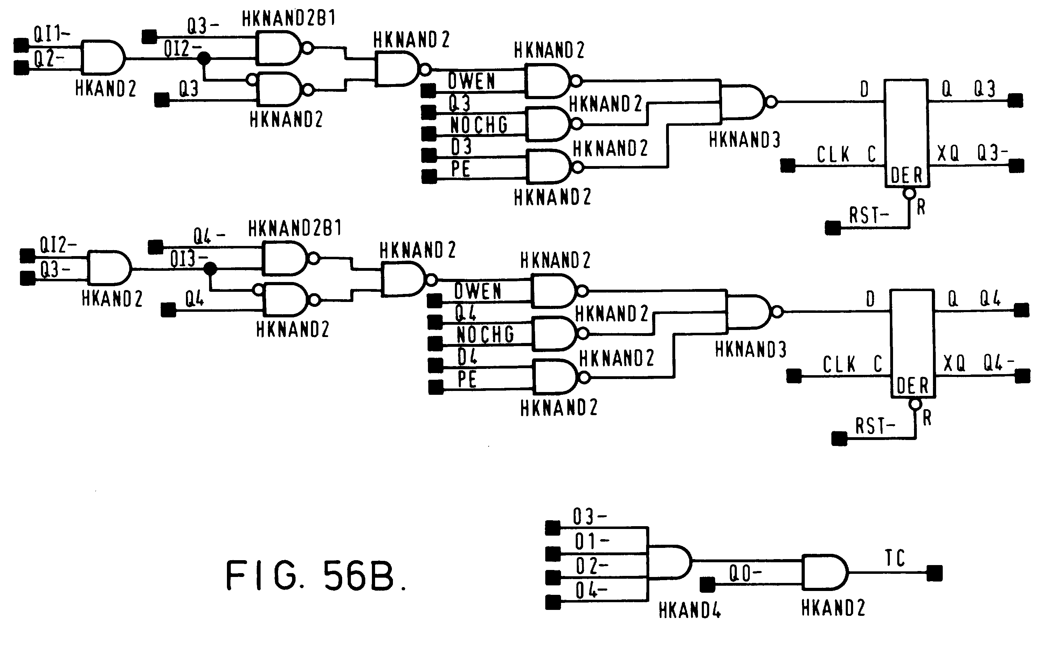

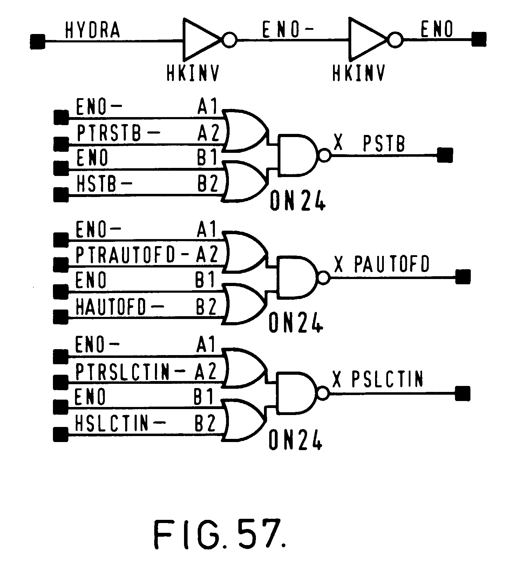

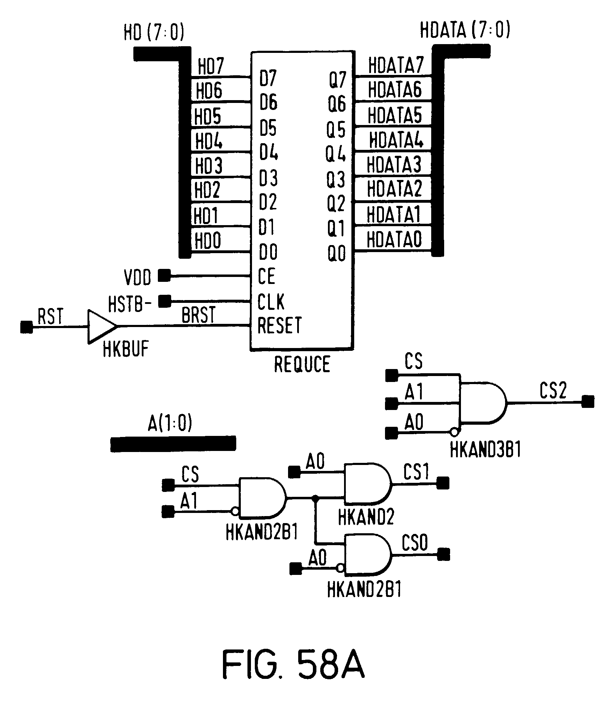

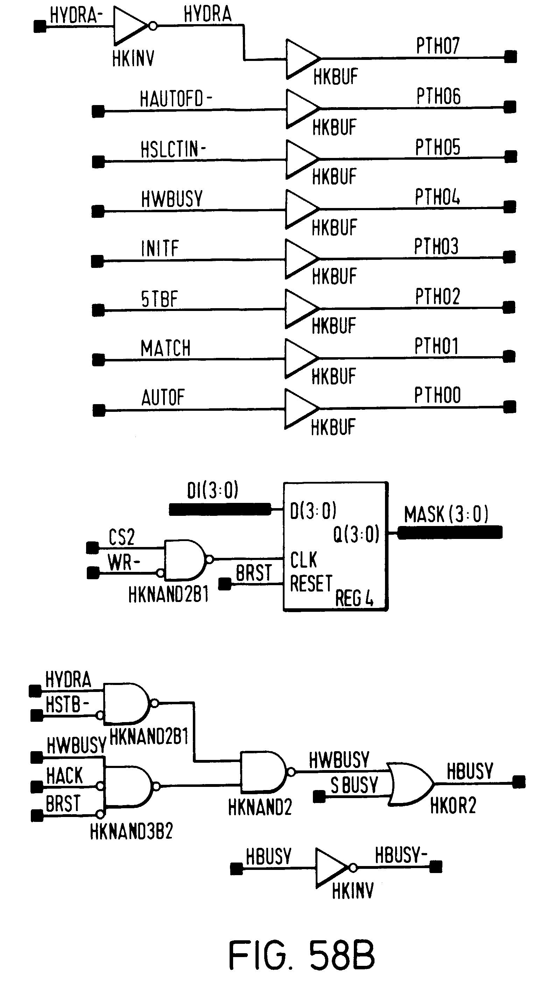

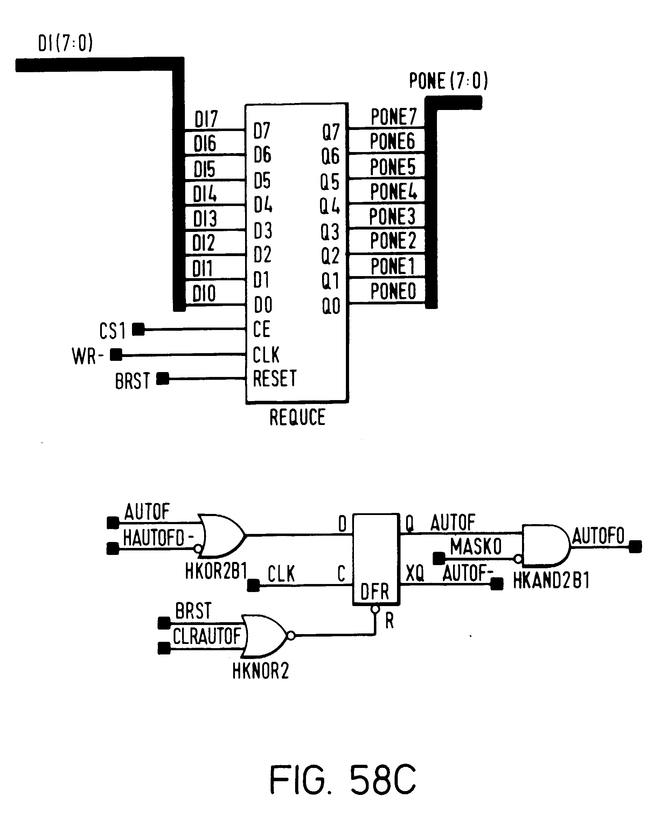

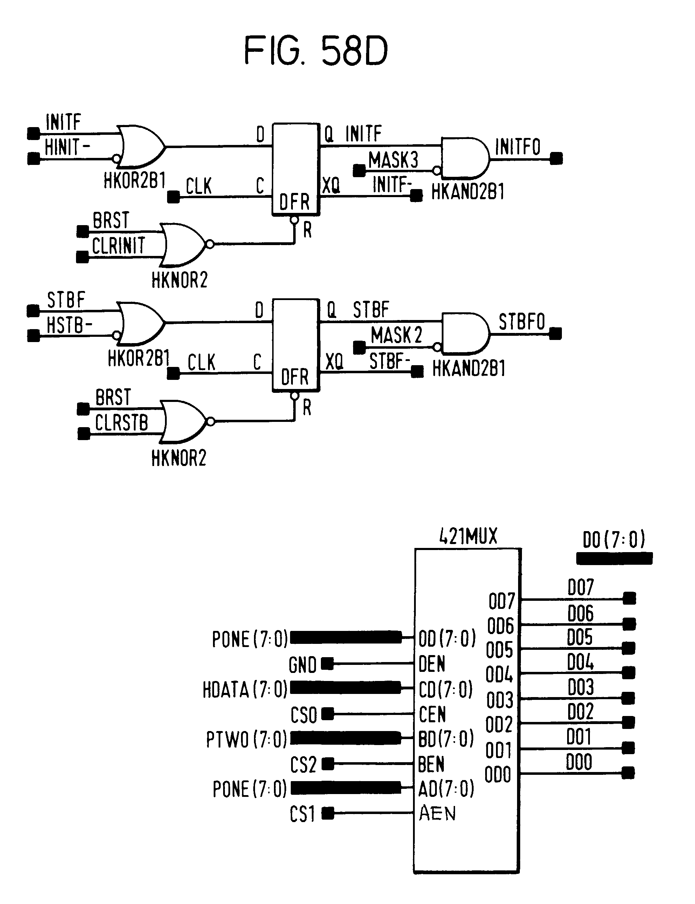

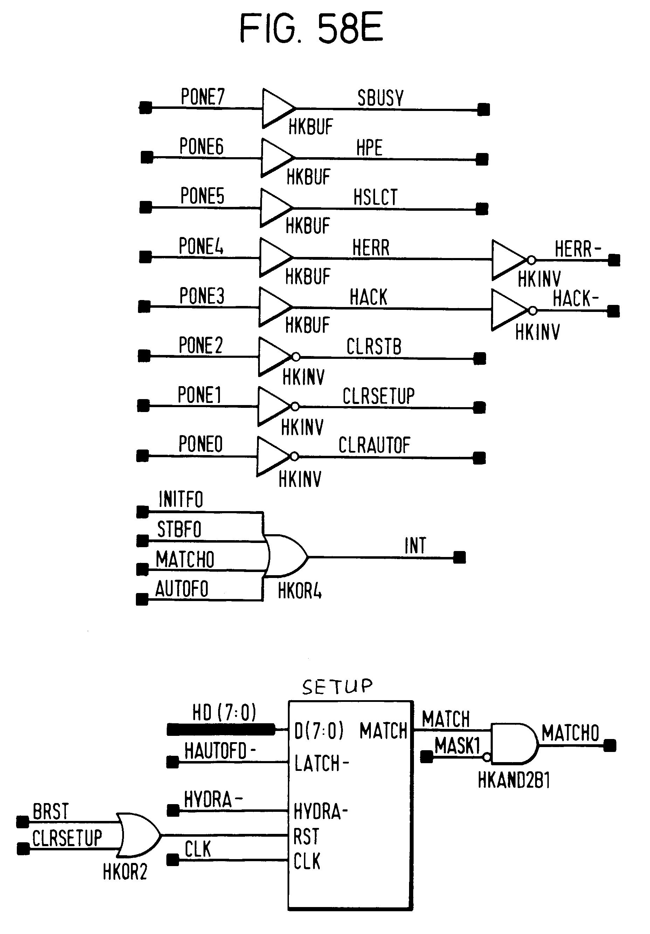

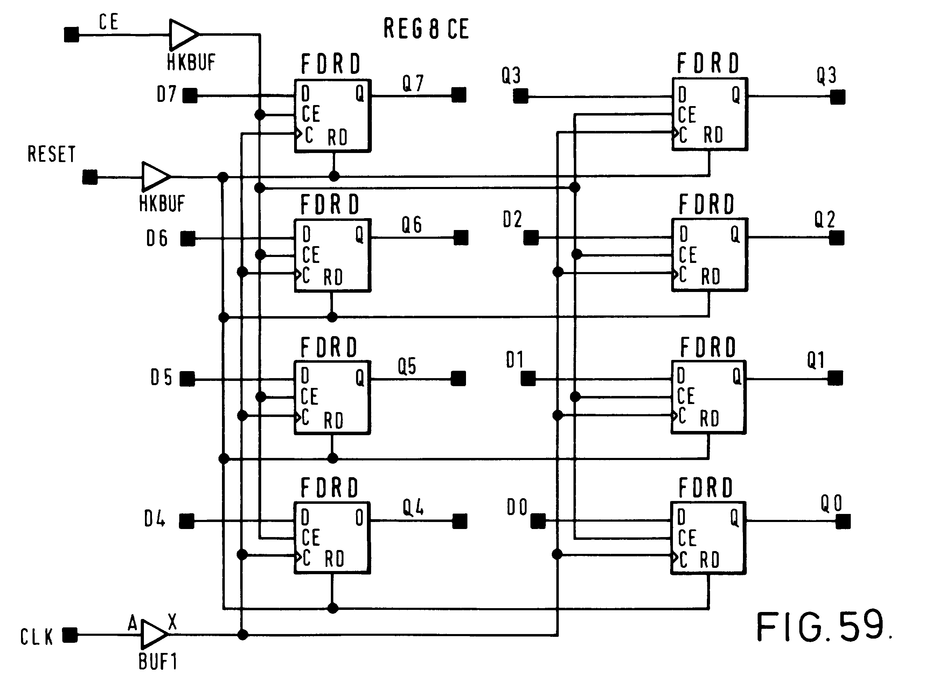

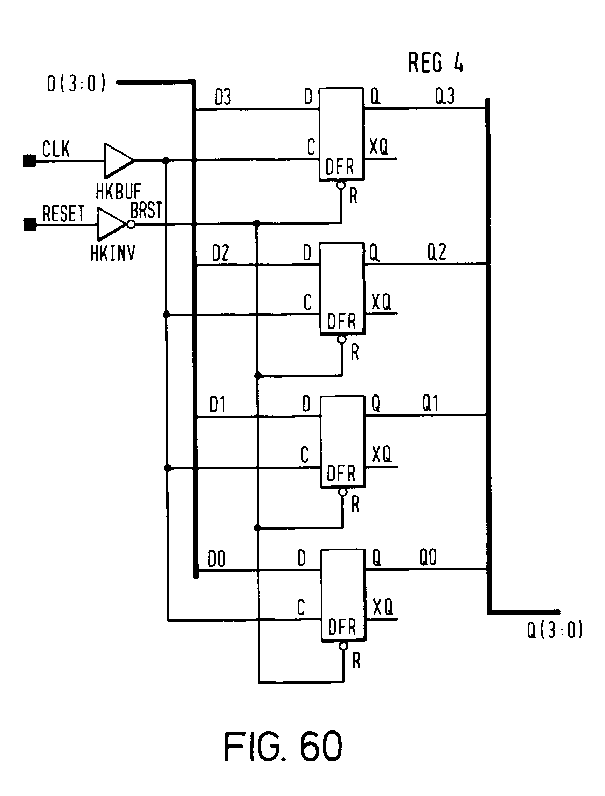

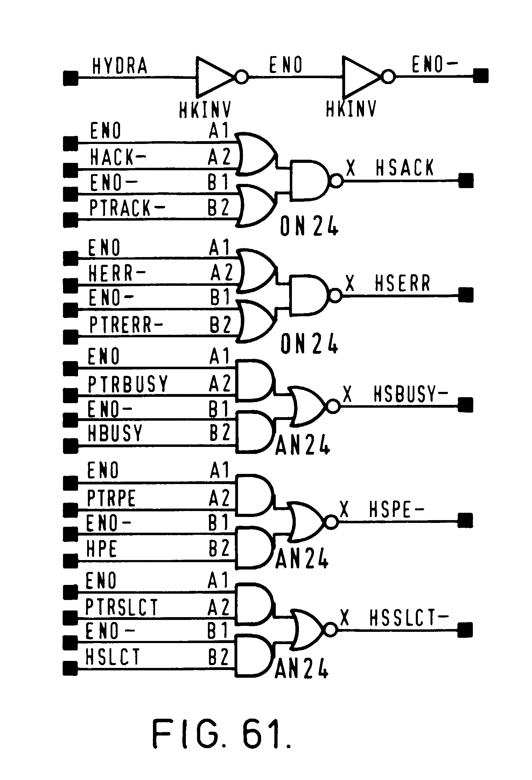

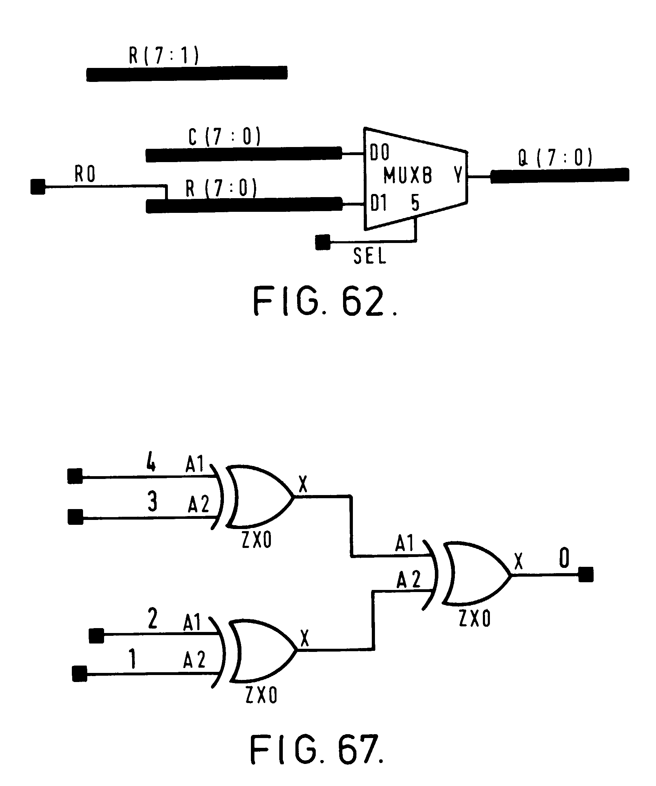

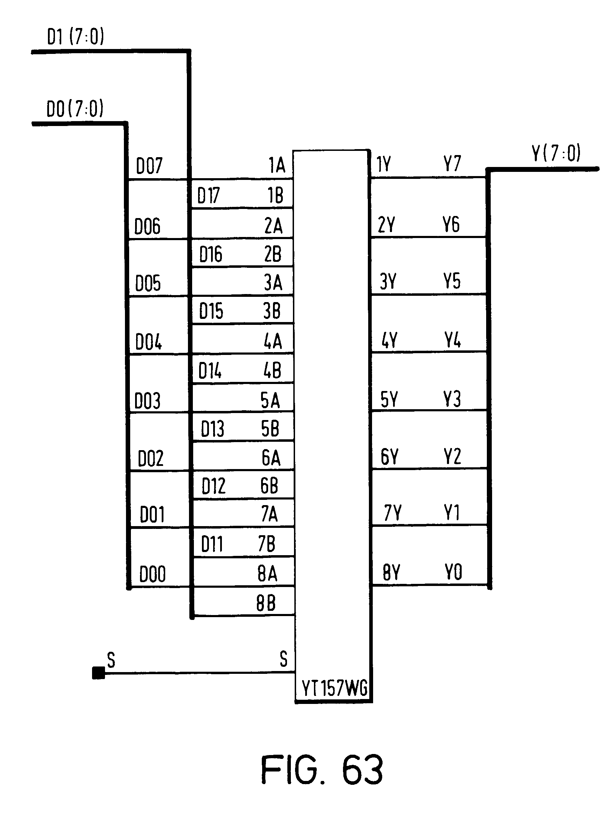

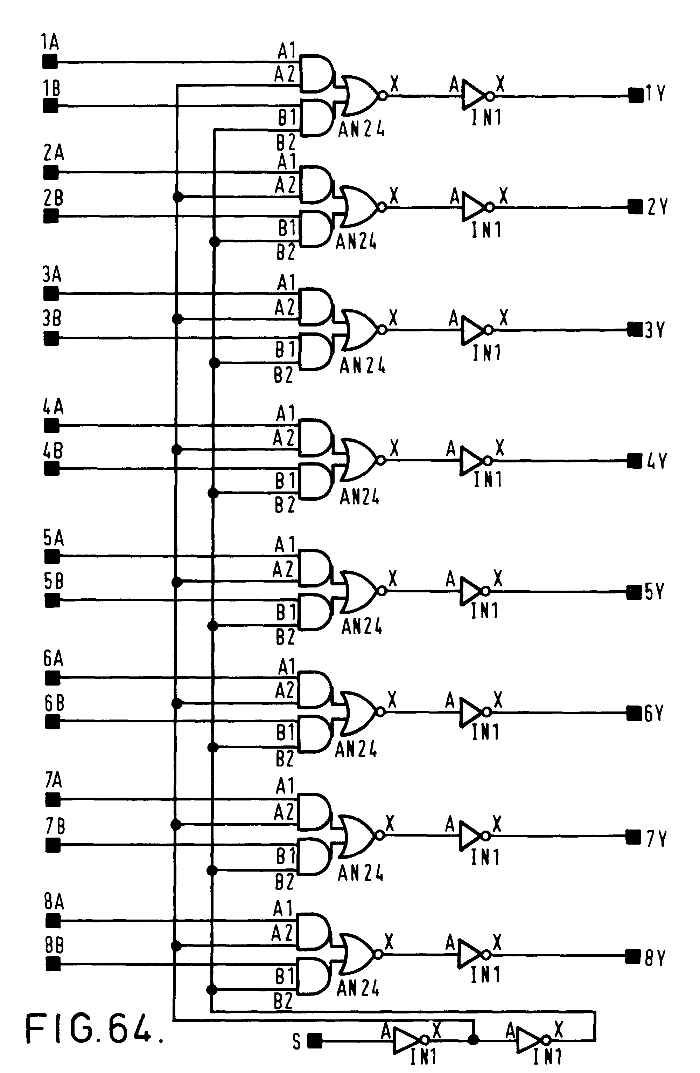

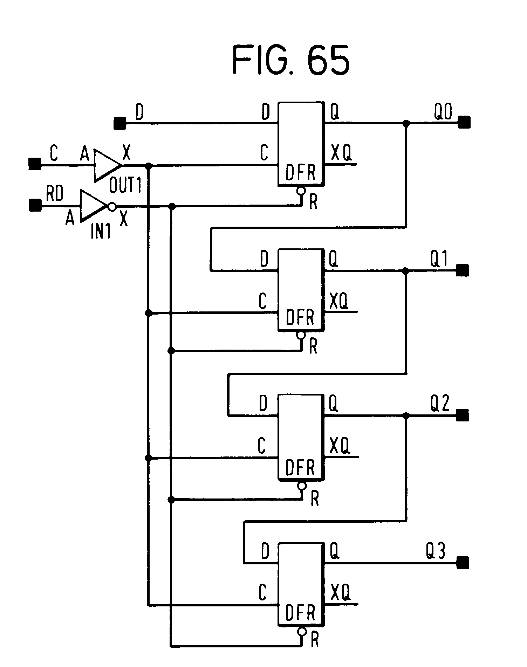

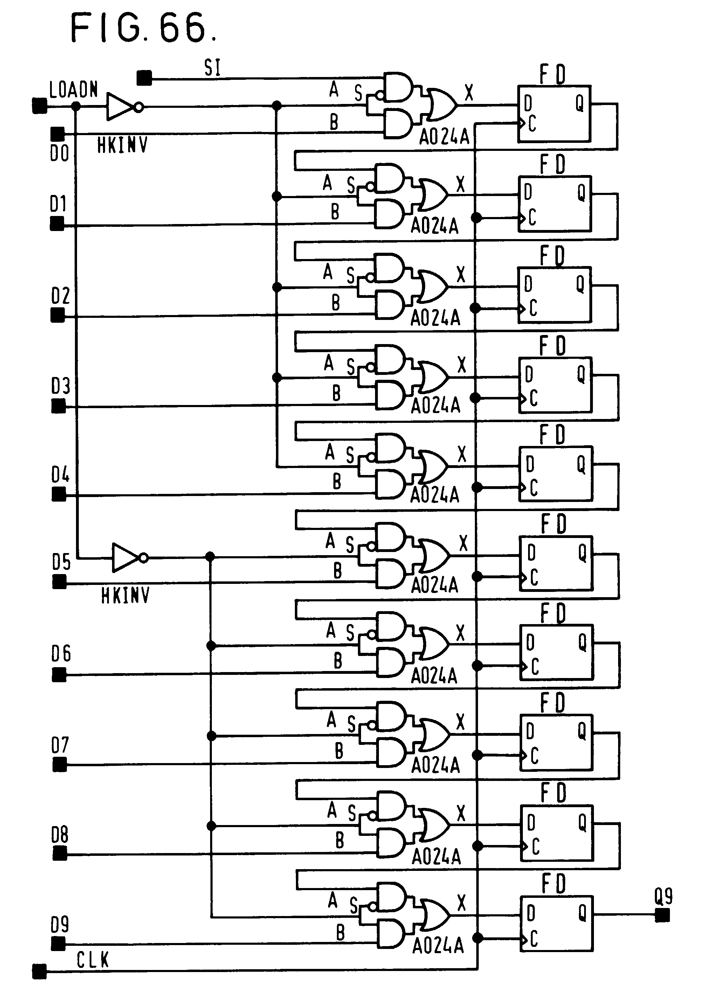

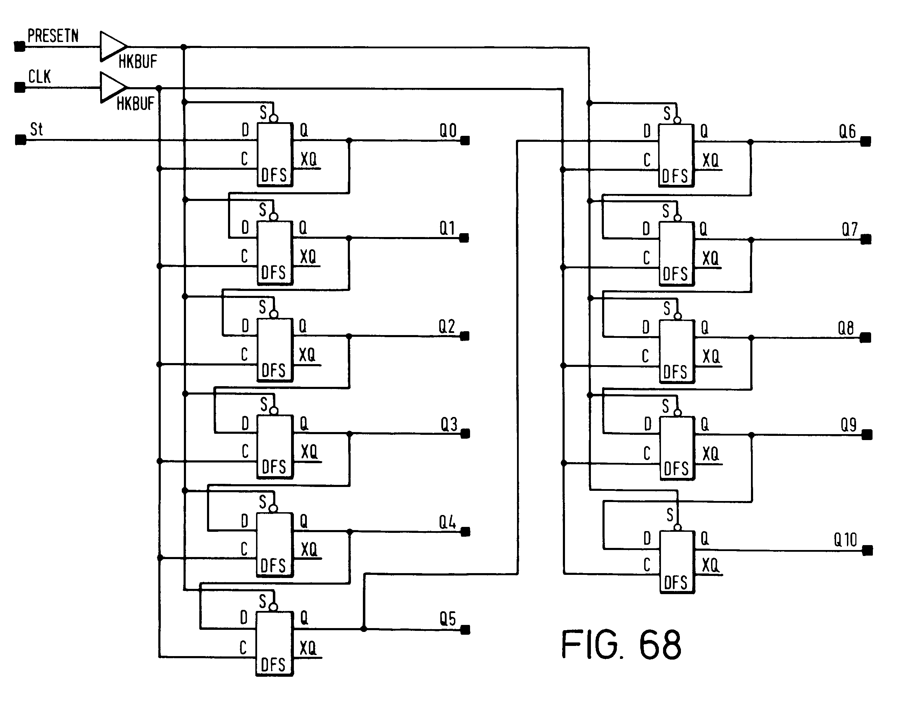

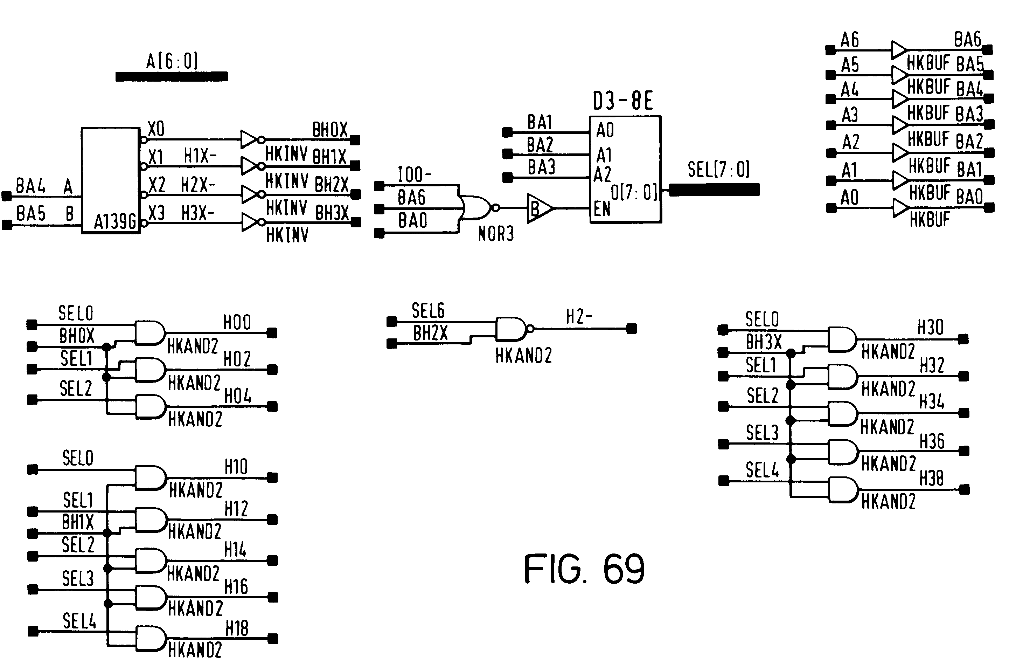

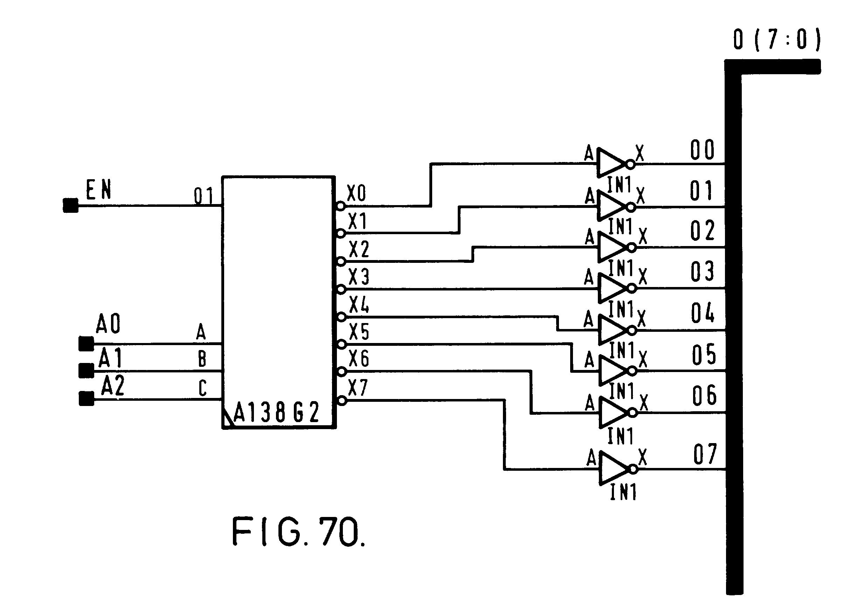

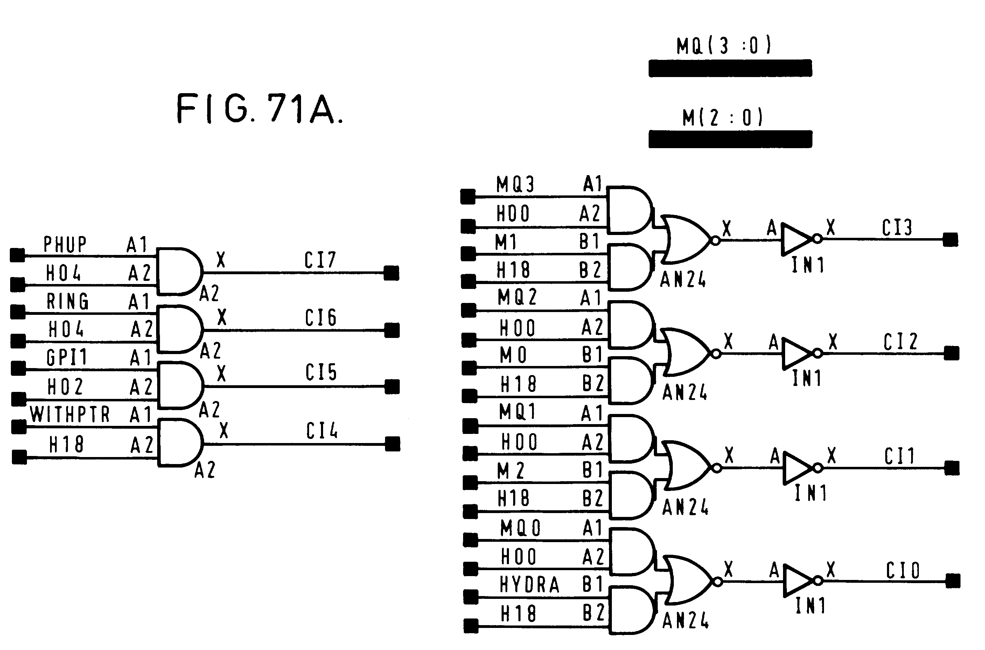

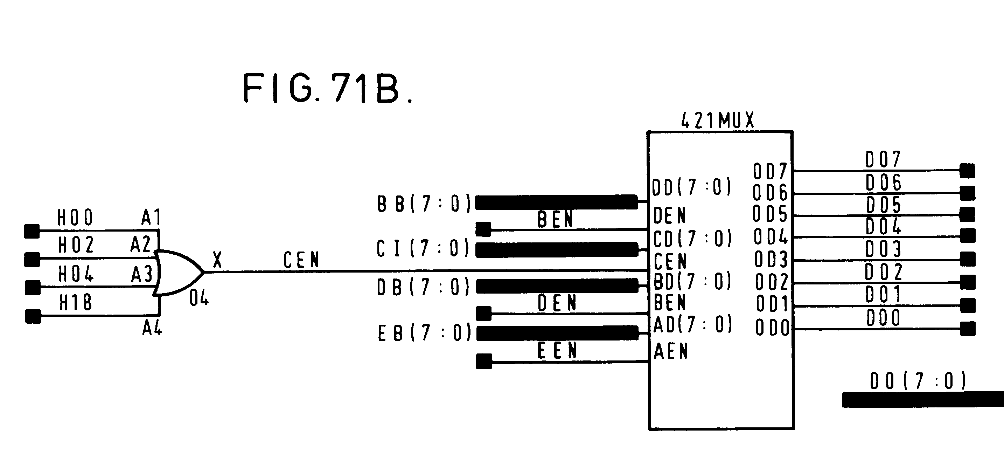

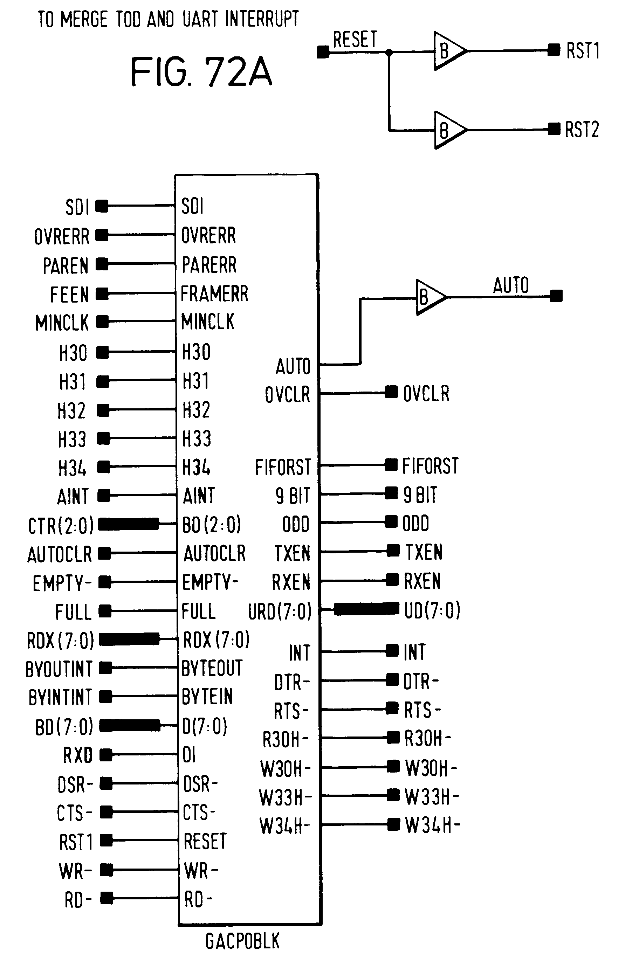

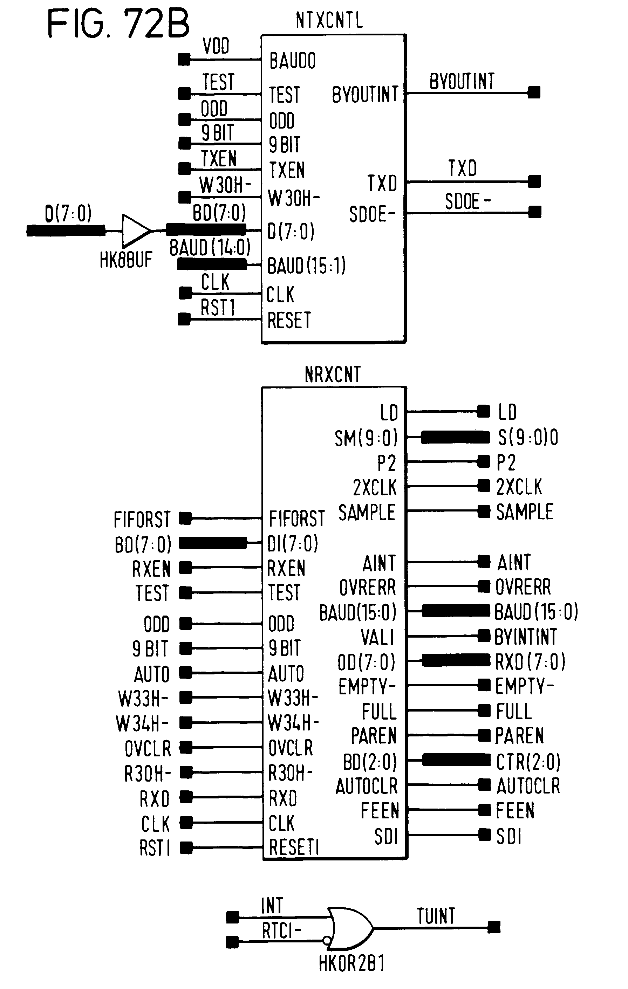

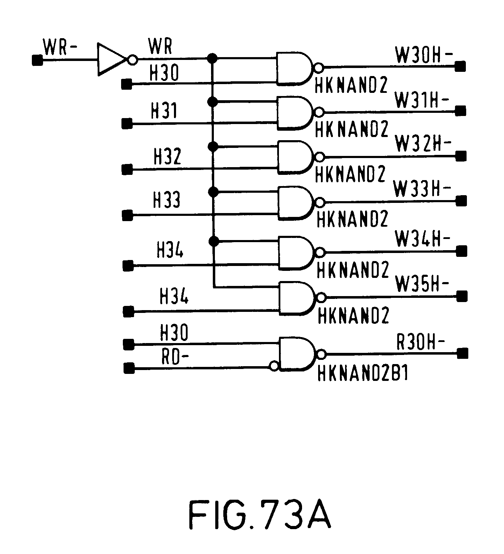

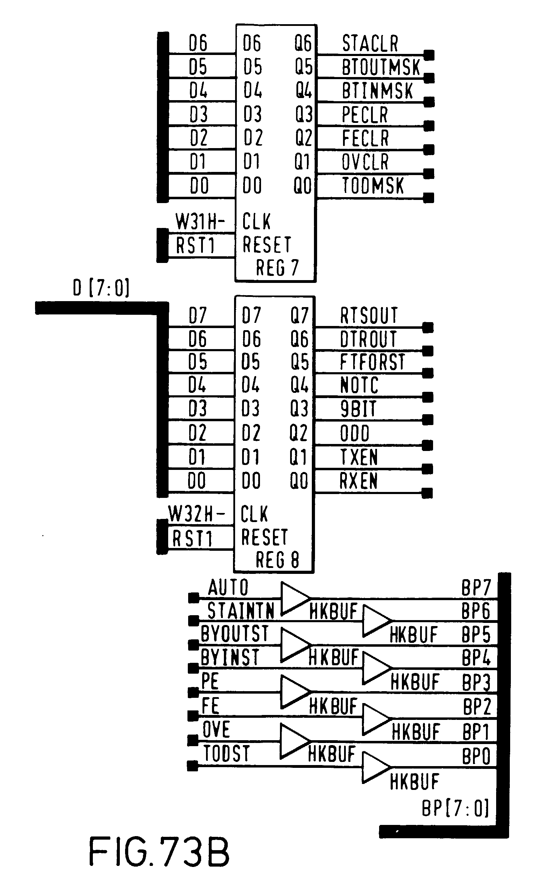

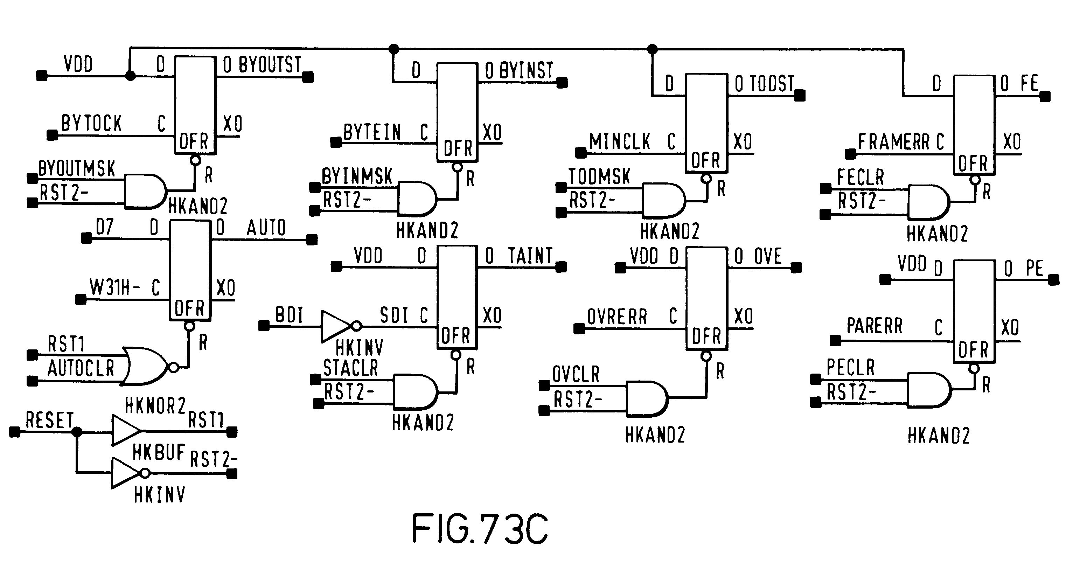

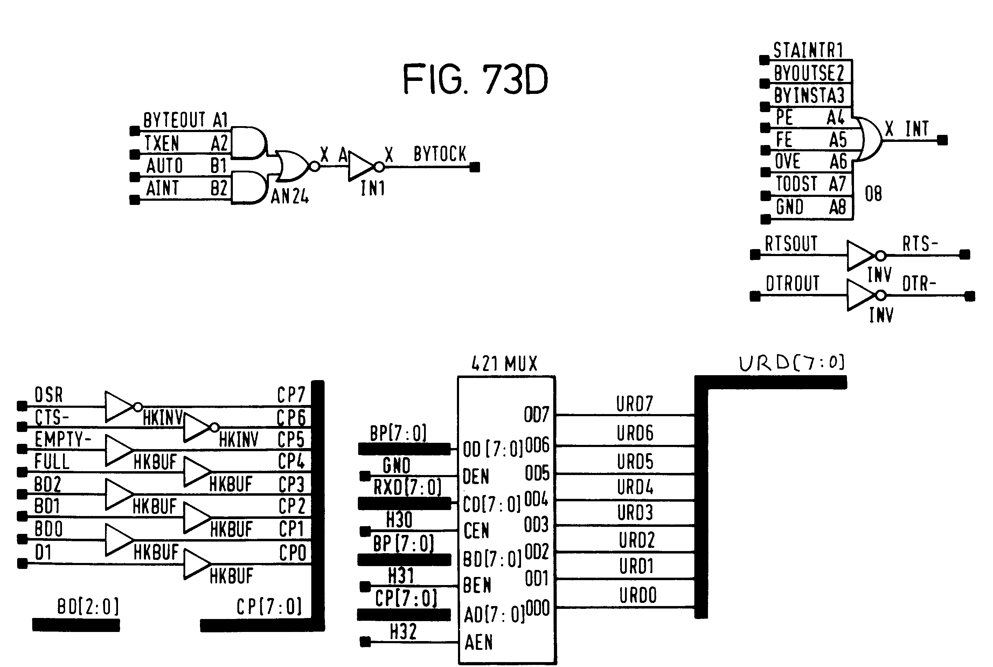

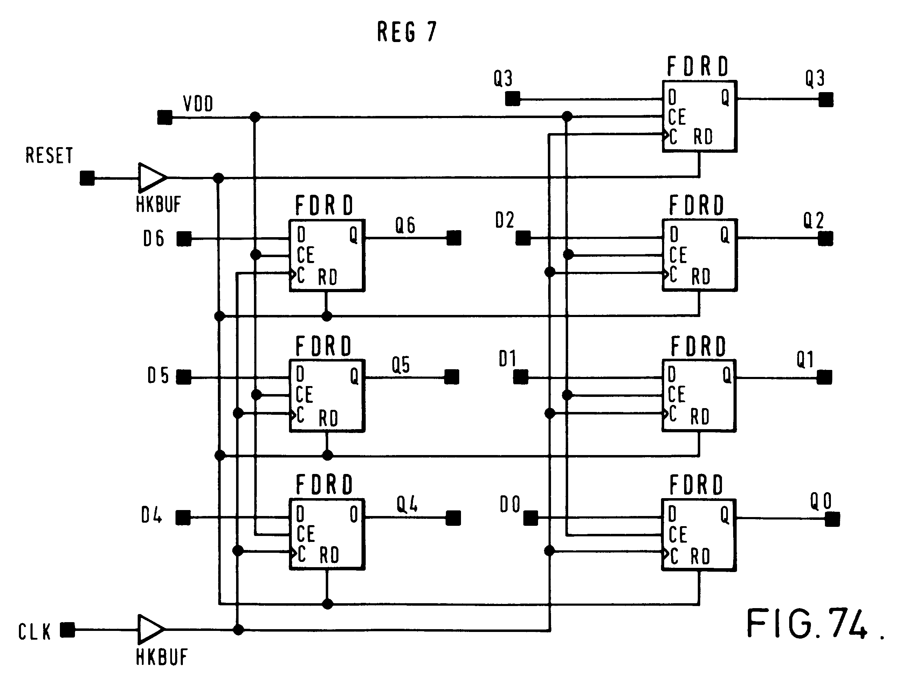

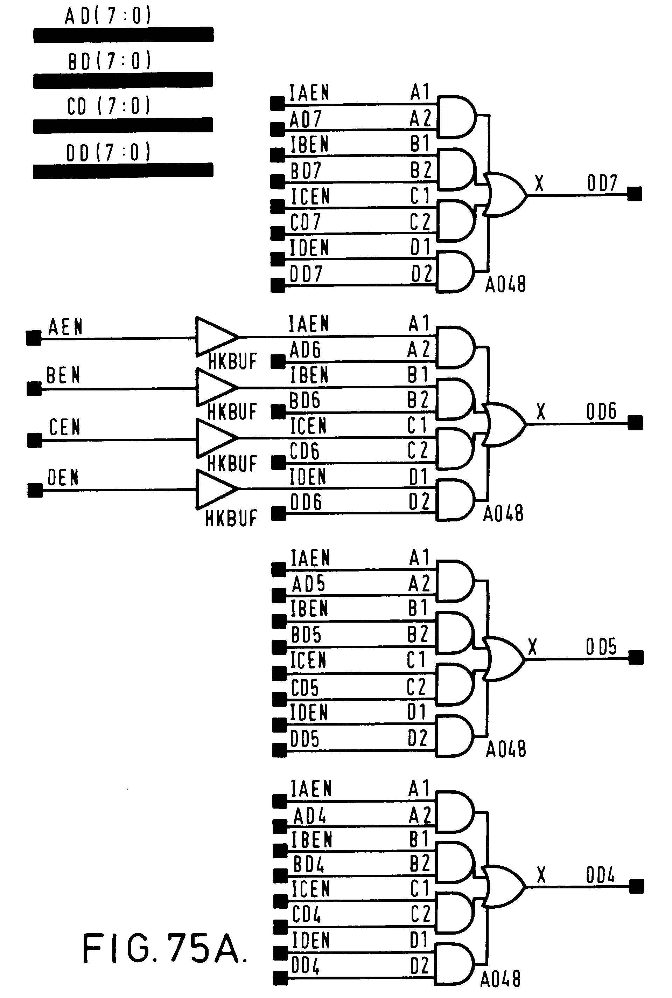

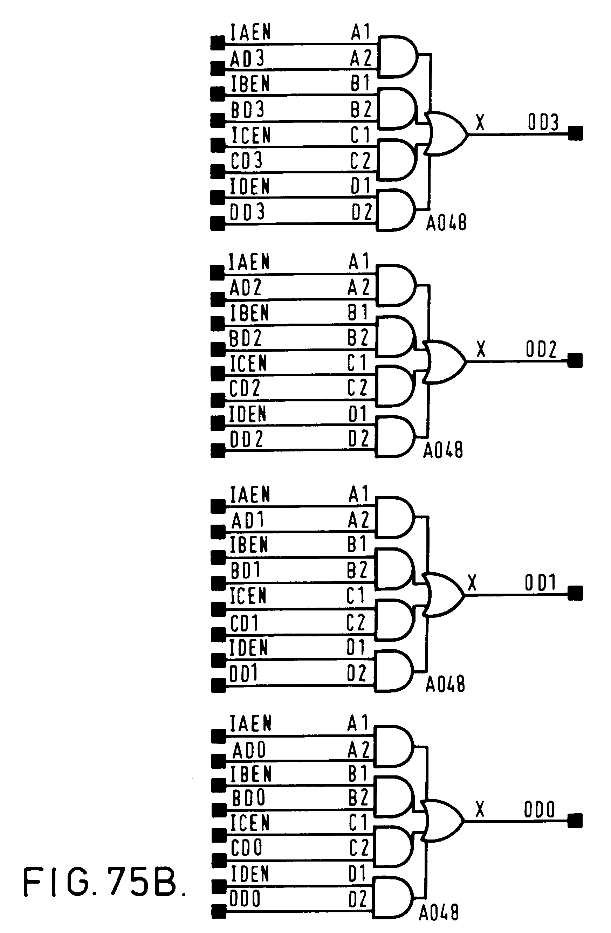

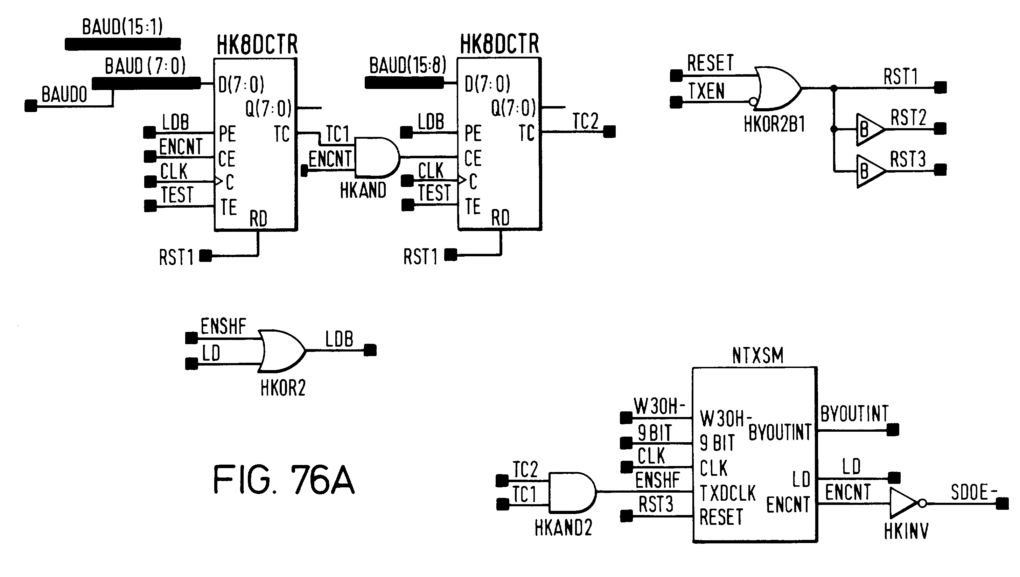

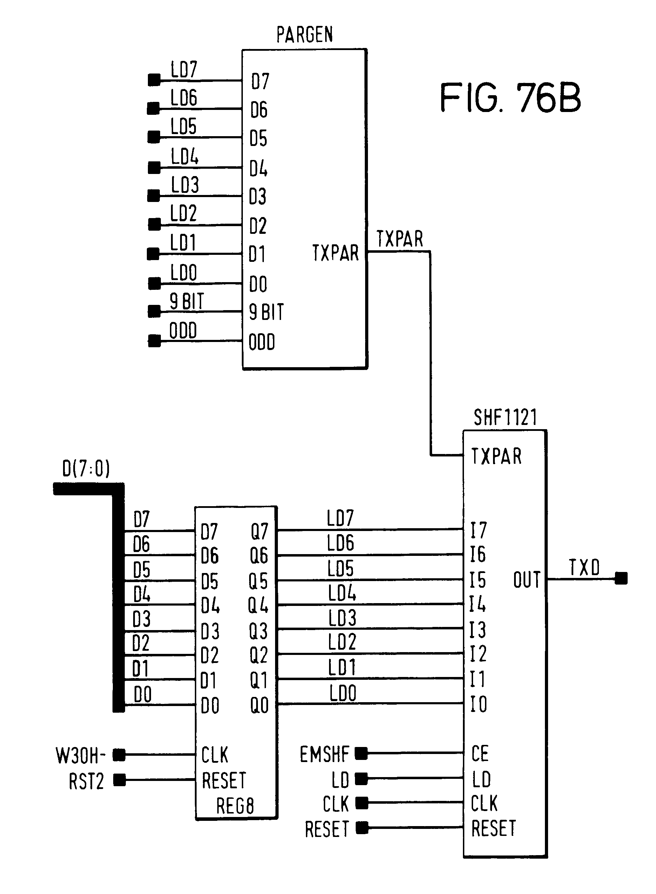

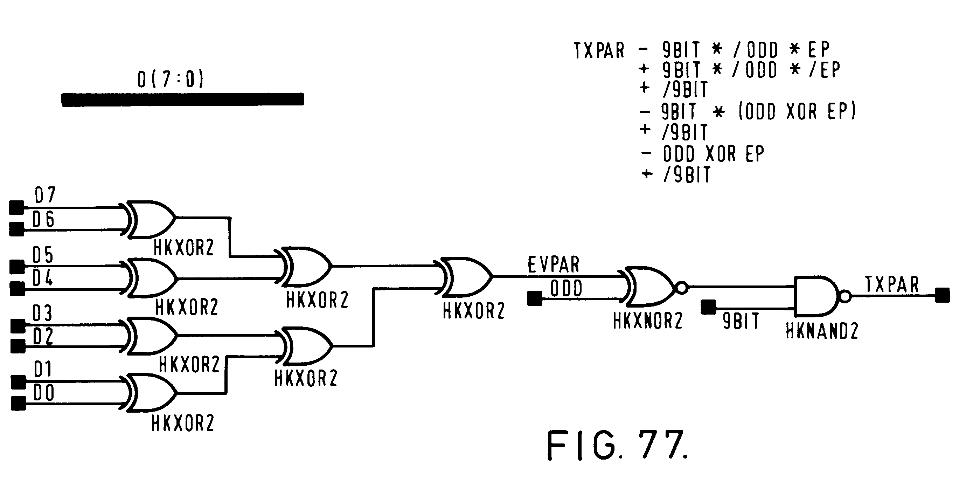

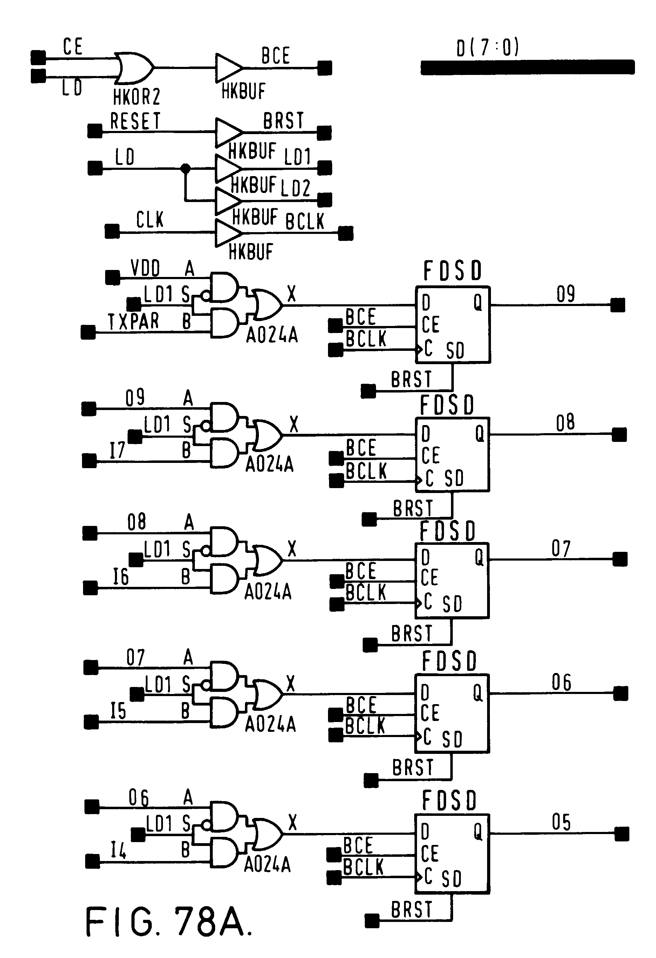

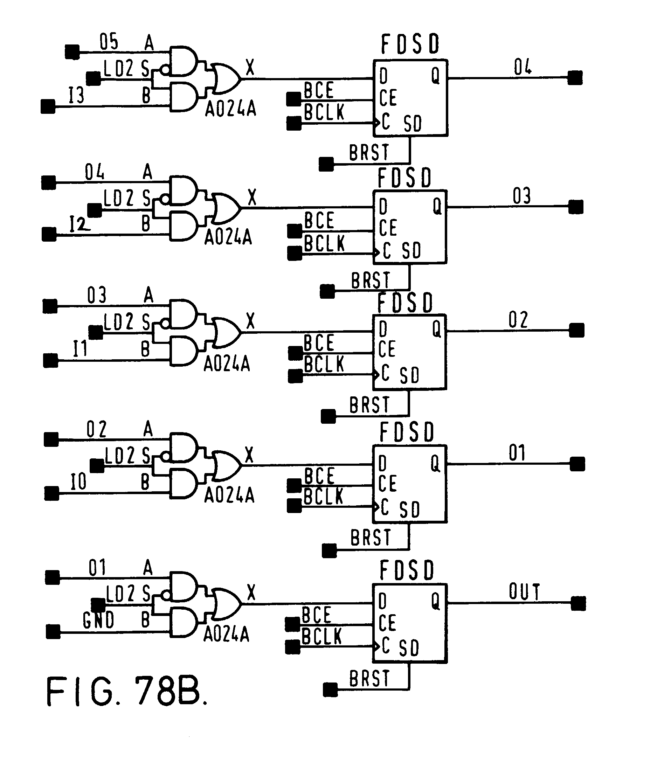

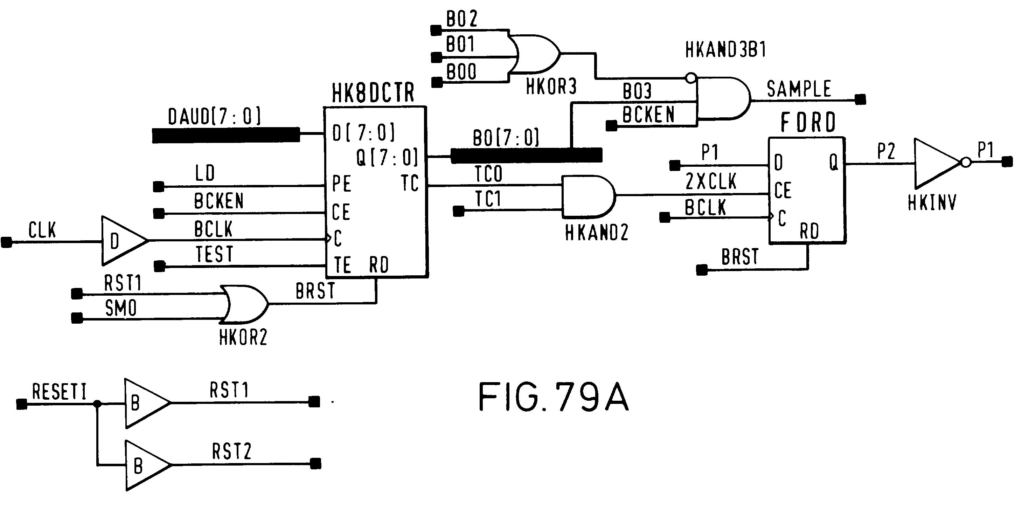

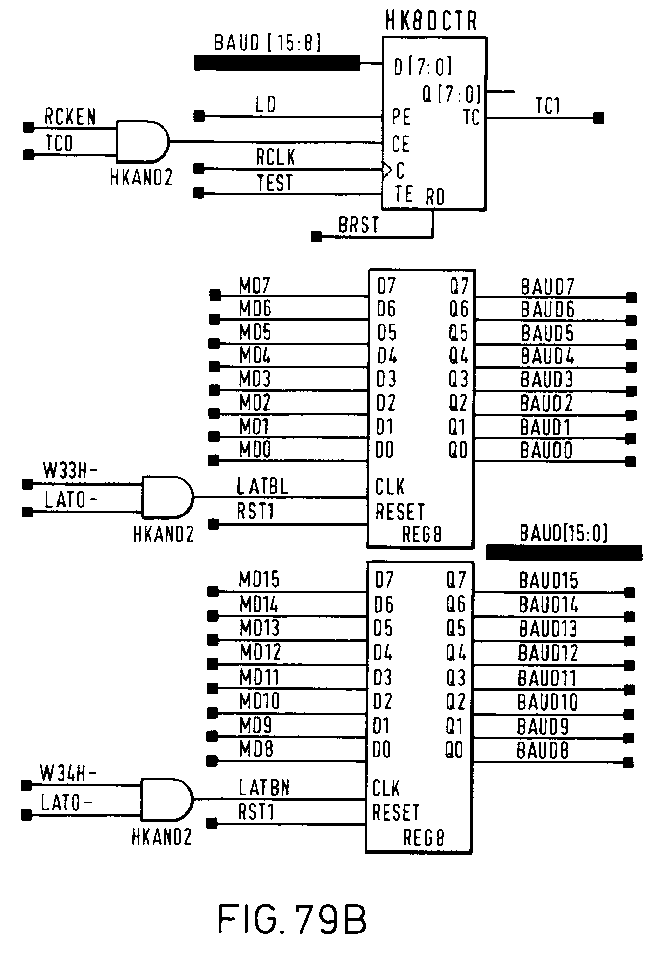

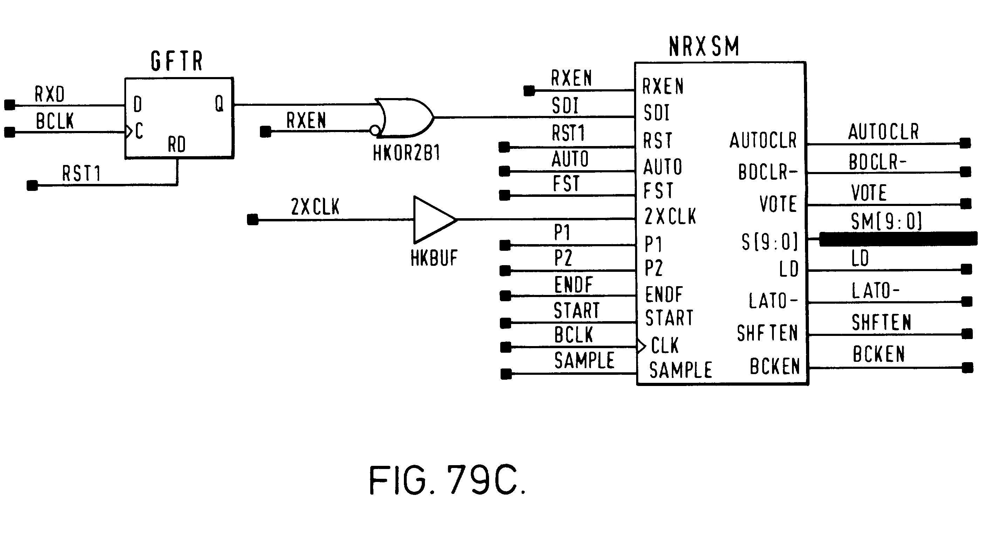

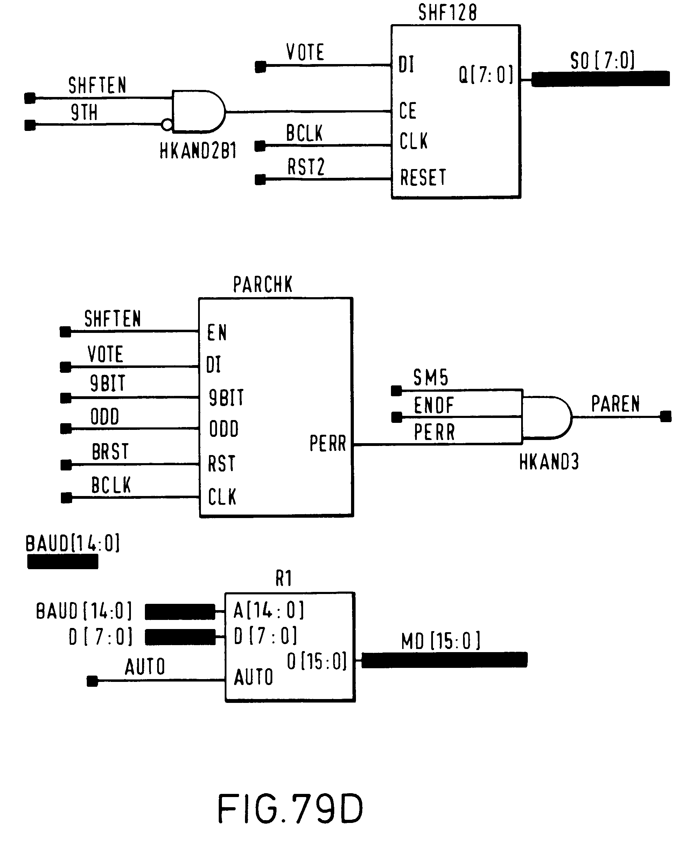

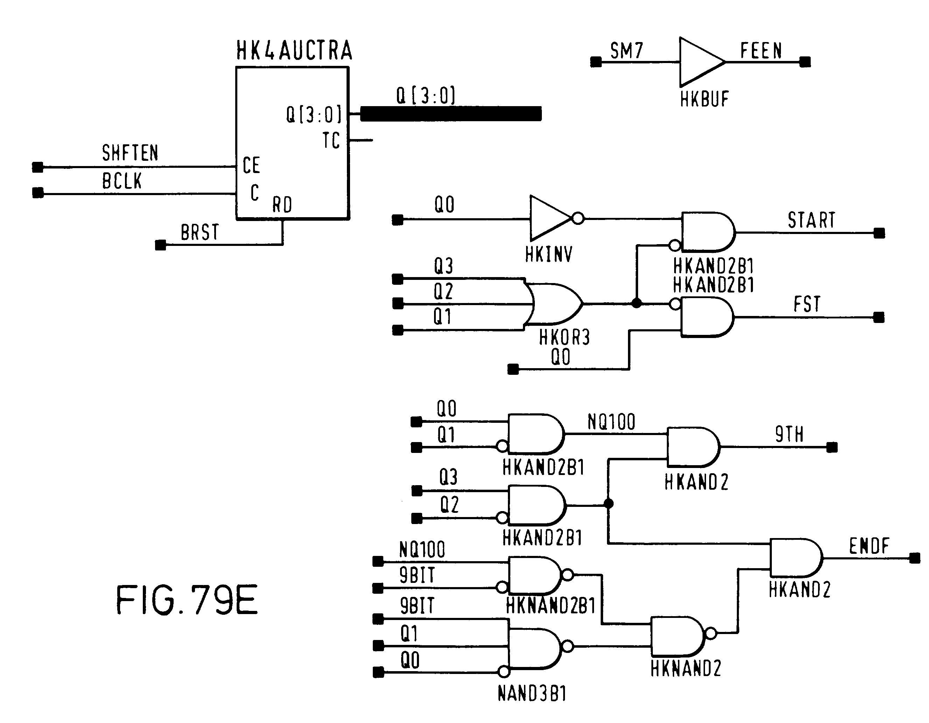

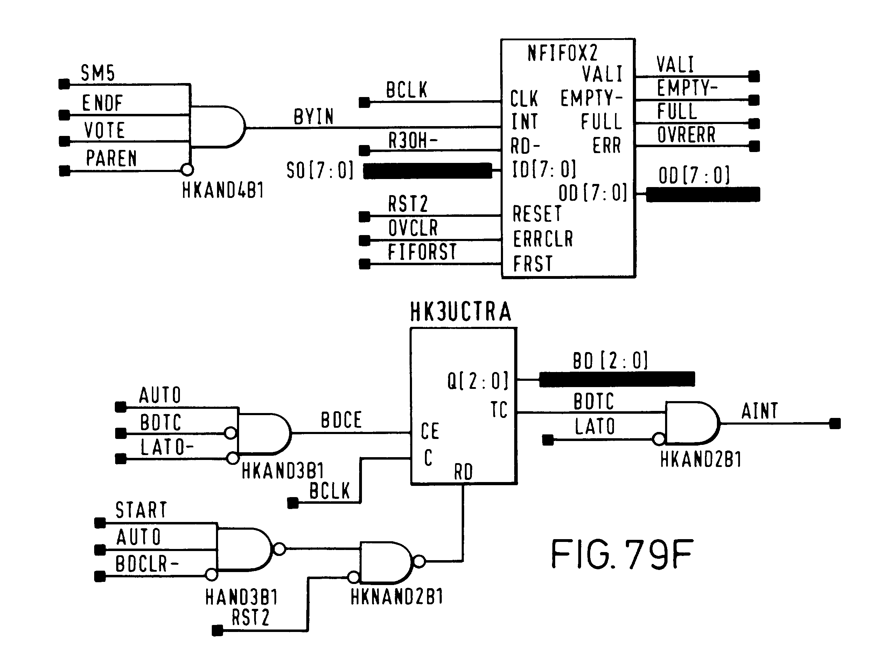

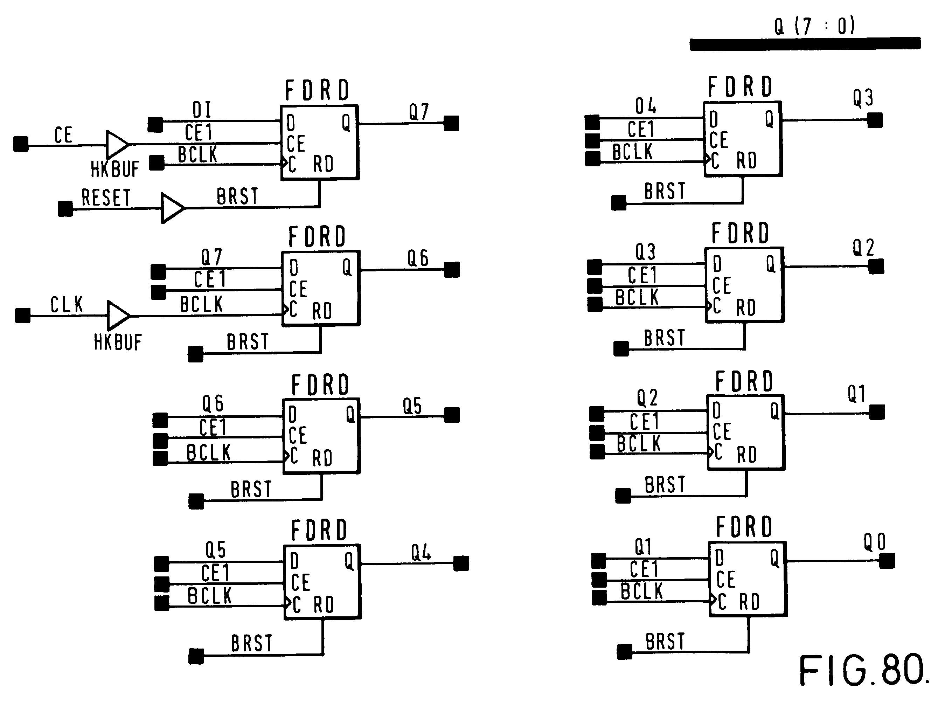

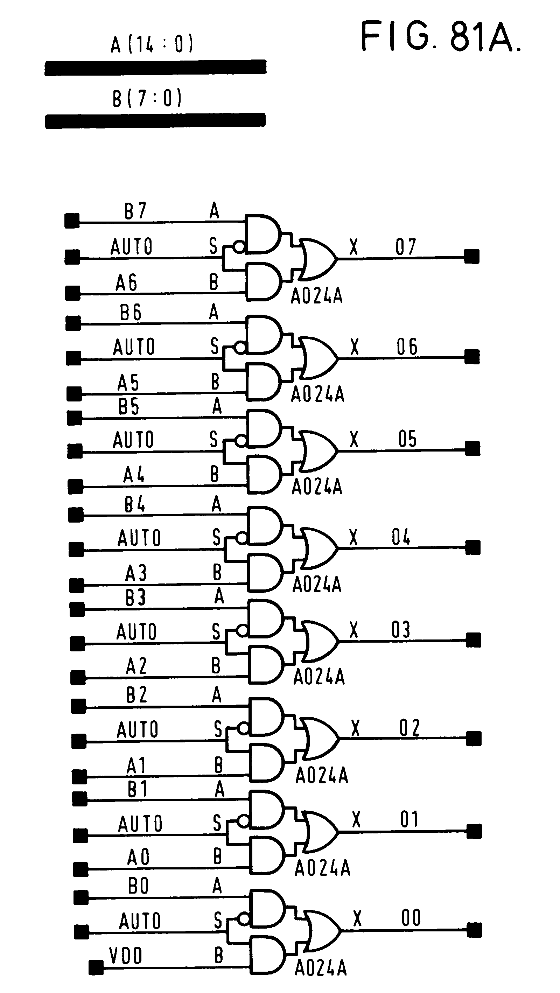

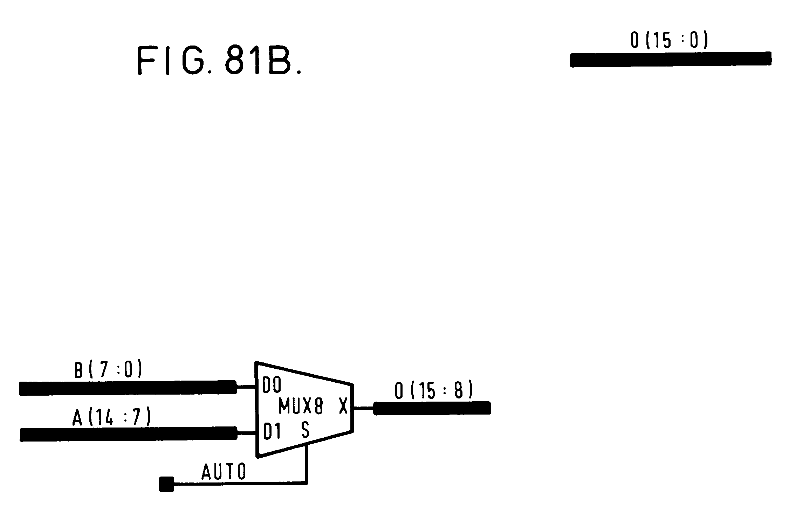

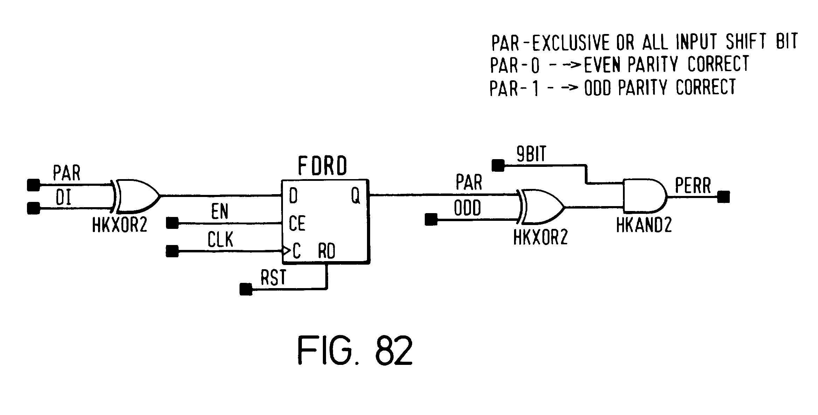

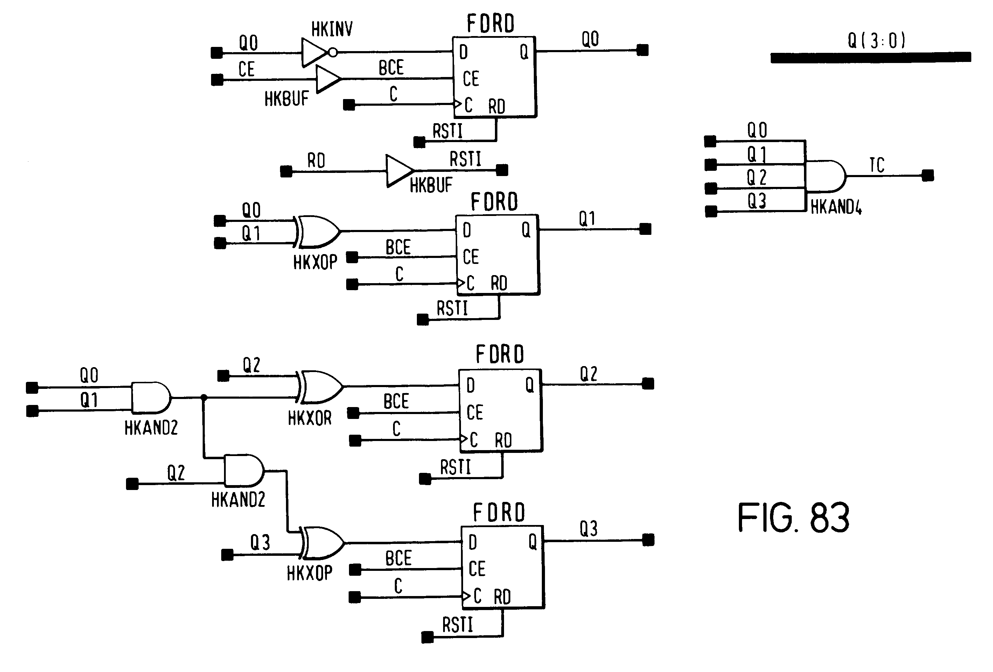

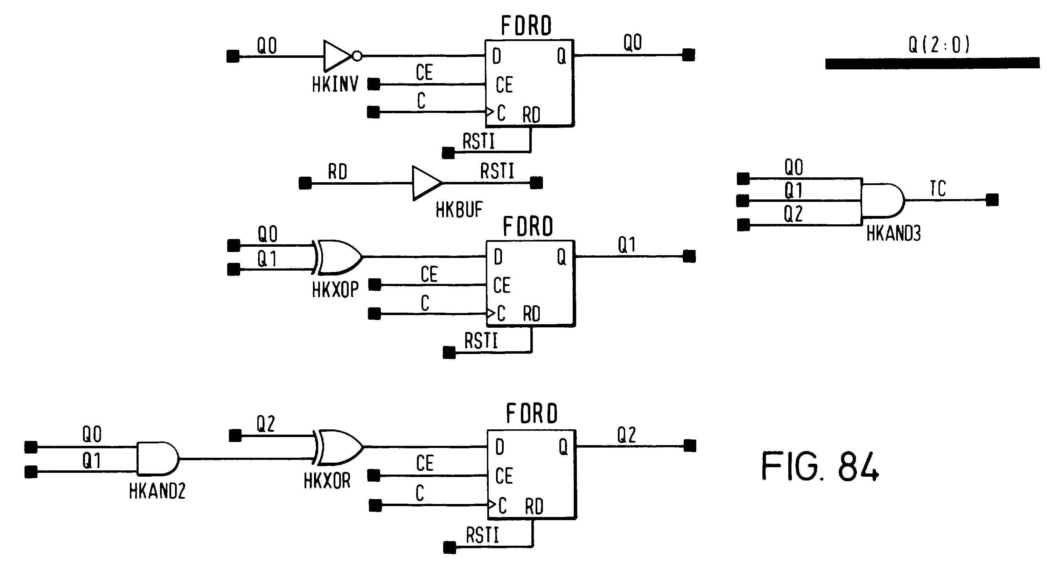

Figs. 16-84 show the ASIC 46 circuitry at varying levels of further detail.

### DETAILED DESCRIPTION OF THE INVENTION

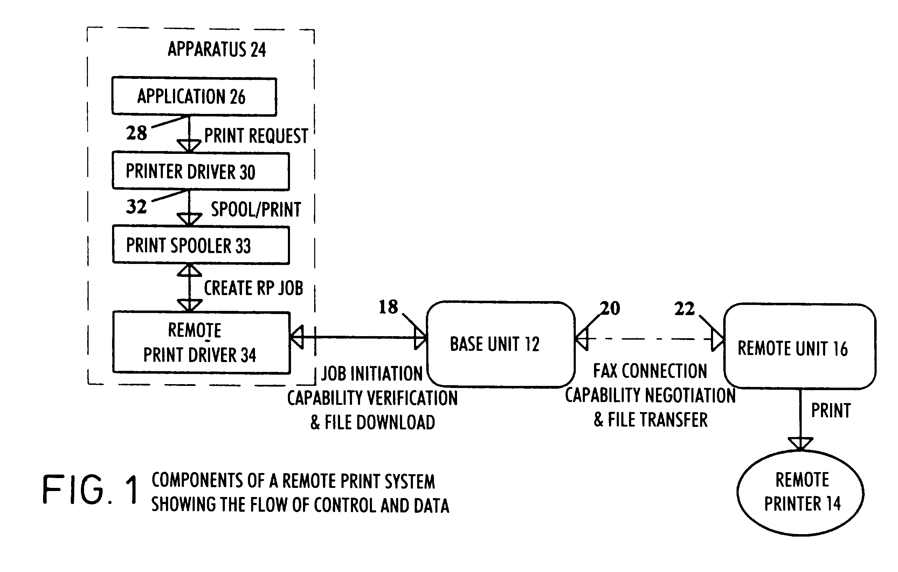

Fig. 1 is a block diagram of a system 10 in accordance with the present invention. The system 10 transmits data signals from a base unit 12 at a first location to a peripheral device 14 (e.g., a printer) connected to a remote unit 16 at a second location. The base unit 12 has a terminal 18 for receiving the data signals to be transmitted. The base unit 12 modulates the data signals received at the terminal 18 to produce a facsimile-encoded data signal. For example, the data signals are modulated according to a facsimile error correcting protocol, such as CCITT T.4 and T.434. The base unit 12 also generates a base-to-remote facsimile-encoded control signal.

The base unit 12 provides the base-to-remote facsimile-encoded control signal and the facsimile-encoded data signal to an output terminal 20, to be transmitted to the remote unit 16, in the same session, via a public carrier network. The public carrier network may be, for example, a Public Switched Telephone Network ("PSTN", provided by a public carrier such as AT&T or Pacific Bell) or an Integrated Services Digital Network ("ISDN"). The remote unit 16 receives, at an input terminal 22, the base to remote facsimile encoded control signal and the facsimile encoded data signal from the public carrier network. The remote unit 16 has one or more connectors for connecting one or more peripheral devices 14 to the remote unit 16. For example, in Fig. 1 a printer 14 is shown as the peripheral device 14 connected to the remote unit 16. The peripheral device may also be, for example, a computer, to which the data signals can be uploaded, or a plotter.

Also shown in Fig. 1 is an apparatus 24 that creates the data signals to be transferred from the base unit 12 to the remote unit 16. For example, the apparatus 24 may be an x86-based personal computer executing the Microsoft Windows operating system. In such a case, an application program 26 (e.g., Microsoft Word) would be used to create a data signal file. The data signal file would be formatted by a print driver program 30 (well known in the art) for a particular type of printer (e.g., an HP LaserJet III). Then, a print spooler 33 (e.g., Windows Print Manger) "prints" the formatted data signals to a logical port 32. The application program 26, the printer driver 30, and the print spooler 33 are conventional.

In accordance with an embodiment of the invention, a remote print driver program 34 captures, from the print spooler 33, the data signals which could otherwise be locally printed to an attached printer (not shown, but which would be connected to the apparatus 24 much like the base unit 12). Or, as discussed above, the data signals captured by the printer driver 34 may be a binary file which is destined to a computer which is a peripheral connected to the remote unit 16. The binary file may be, for example, specified by a user responsive to prompts from the remote printer driver. The remote printer driver 34 provides a telephone number and scheduling information (e.g. time to send) to the base unit 12 via the input terminal 18. The base unit 12 then initiates a call via the public carrier network to establish a communication link between the base unit 12 and the remote unit 16. Upon answering the call, the remote unit 16 and the base unit 12 initiate a "handshake" routine in accordance with well-known facsimile protocols. Before the base unit 12 and remote unit 16 establish the parameters of the session (e.g. the baud rate), the remote unit 16 generates, and transmits to the base unit 12, a remote-to-base facsimile-encoded control signal that indicates the peripheral device or devices connected to the remote unit. For example, if the peripheral device 14 is an HP LaserJet III printer, the remote-to-base facsimile-encoded control signal will so indicate. In addition, the remote-to-base facsimile encoded control signal generated by the remote unit 16 identifies that the remote unit 16 is a compatible remote device (i.e. one which can direct a facsimile encoded data signal to a particular peripheral device represented by a base to remote facsimile encoded control signal). If the base unit 12 does not receive such an indication, then the remote transfer session is terminated.

Furthermore, the base unit 12 determines, from the received remote-to-base facsimile-encoded control signal, whether a particular desired peripheral device is connected to the remote unit 16. If not, the remote transfer session is terminated. For example, if the application program 26 formatted a data signal file for printing to a HP LaserJet III, or for binary transfer to a computer, and the remote-to-base control signal indicates that only an Epson FX Printer is connected to the remote unit, the base unit 12 will terminate the remote transfer session.

In one embodiment, however, the base unit 12 may allow the remote transfer session to continue if the peripheral device 14 indicated in the remote-to-base control signal is indicated as being one which is a superset of the optimally-desired format. For example, a data signal file formatted for printing on an HP LaserJet III printer may also be printed on an HP LaserJet+ printer, even though the HP LaserJet+ printer may not recognize all of the printer commands embedded in the data signal file.

In addition, the remote print driver 34 records, in a location associated with the remote unit 16 phone number, the existence or non-existence of the particular desired type of peripheral device. Thus, when further requests are made to transfer data signals to this type of peripheral device 14 at this phone number, the user can be informed, even before a call is placed, that on previous attempts this type of peripheral device 14 was not found at the remote unit 16 with this phone number. Since it is possible that the peripheral device 14 may now be found, the user is given an opportunity to have the call placed anyway.

Also, if the facsimile encode data signal received at the input terminal 22 of the remote unit 16 does not have associated with it a facsimile encoded control signal, the remote unit 16 prints the received facsimile encoded data signal to the peripheral printer 14 in a bitmap format at 200 dpi. That is, the remote unit 16 can function as a conventional facsimile machine.

Figs. 2-11 are flowcharts which illustrate the details of the processing within a particular embodiment of the invention. The following abbreviations are used throughout the flowcharts:

| | |
|---|---|
| BFT | Binary File Transfer |
| CCITT | International Telephone and Telegraph Consultive Committee (now ITU) |
| DB | Database |
| DCN | Disconnect |
| ECM | Error Correcting Mode |
| ISDN | Intergrated Services Digital Network |
| NSF | Non-Standard Facilities |
| NSS | Non-Standard Setup |
| PSTN | Public Switched Telephone Network |
| RP | Remote Print |
| RX | Receive |
| TX | Transmit |
| UI | User Interface |

In step 1 of the flowchart of Fig. 2, the remote print manager begins to execute. The remote print manager supervises the operations of the remote print driver 34. In step 2, the remote print driver 34 sets up an interface to the print spooler 33. In step 3, the remote print driver 34 sets up an interface to the base unit 12. In step 4, a data signal file is created by the application 26 and formatted for a particular printer by the printer driver 30, and spooled by the print spooler 33. Additionally, in step 4, the remote print driver 34 captures the print-formatted data signals from the print spooler 33. In step 5, the print-formatted data signals are transferred by the remote print driver 34 to the base unit 12. Also in step 5, both the facsimile-encoded control signal and the base-to-remote facsimile-encoded data signal are transferred to the remote unit 16 via a public carrier network in a single session. In conjunction with the processing in step 5, in step 6 the remote unit 16 provides to the base unit 12 the remote-to-base facsimile-encoded control signal and receives from the base unit 12 the base-to-remote facsimile-encoded control signal and the facsimile-encoded data signals. In step 7, the remote print driver 34 removes the interface to the base unit 12 which was installed in step 3. In step 8, the remote print driver 34 removes the interface to the print spooler 33 which was set up in step 2. Finally, in step 9, the print manager 33 ceases to execute.

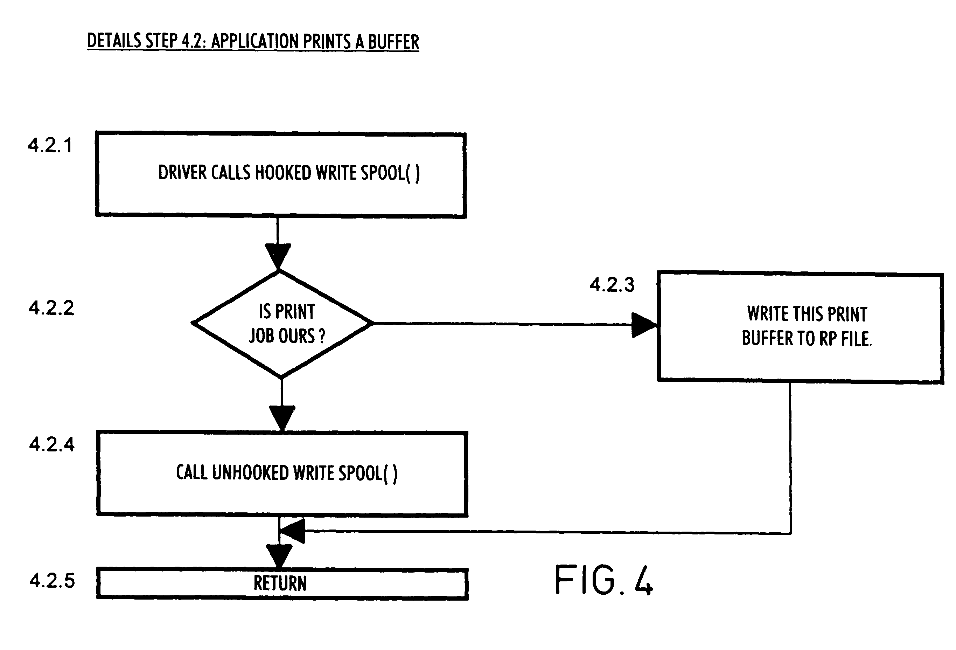

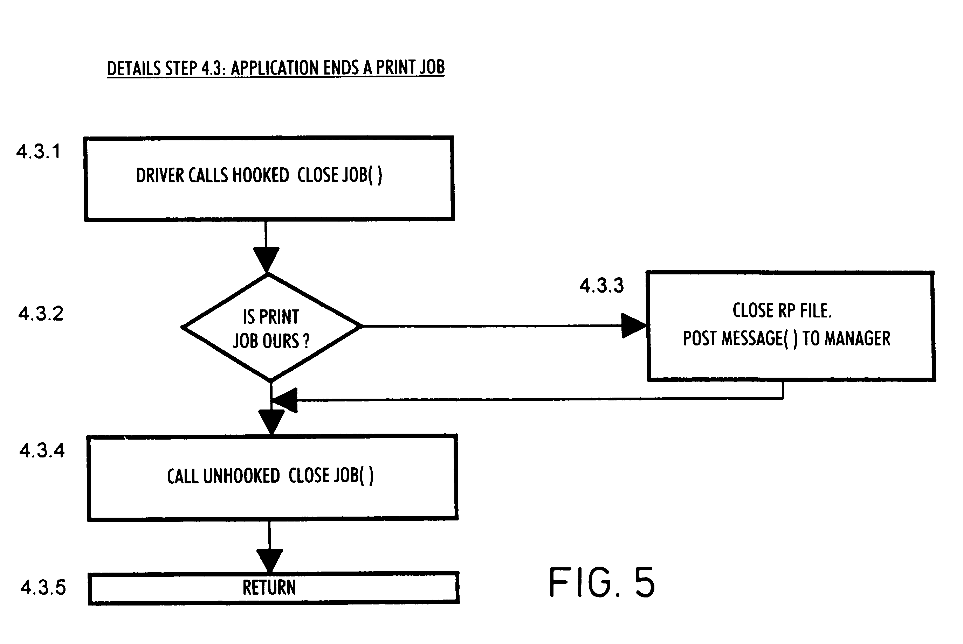

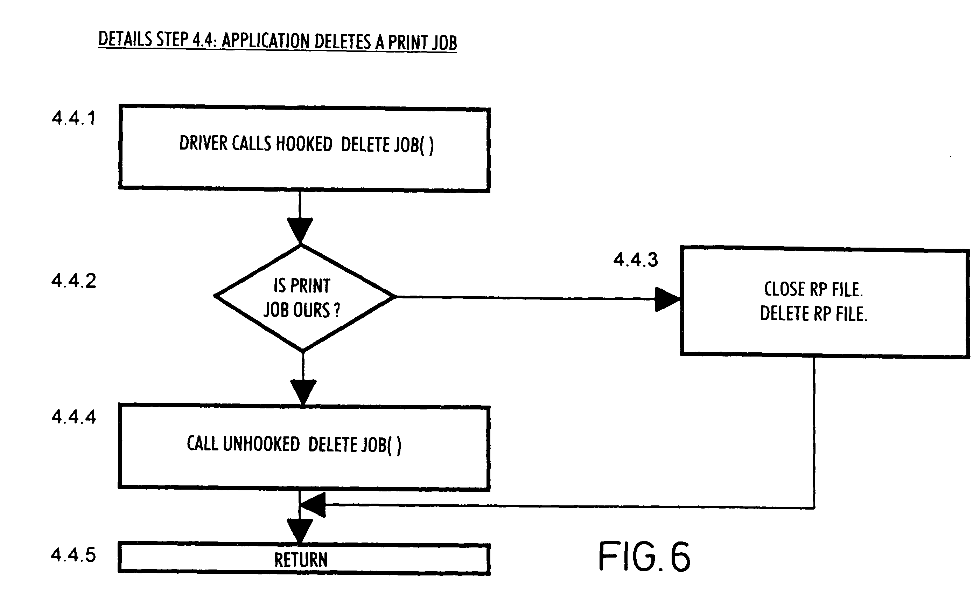

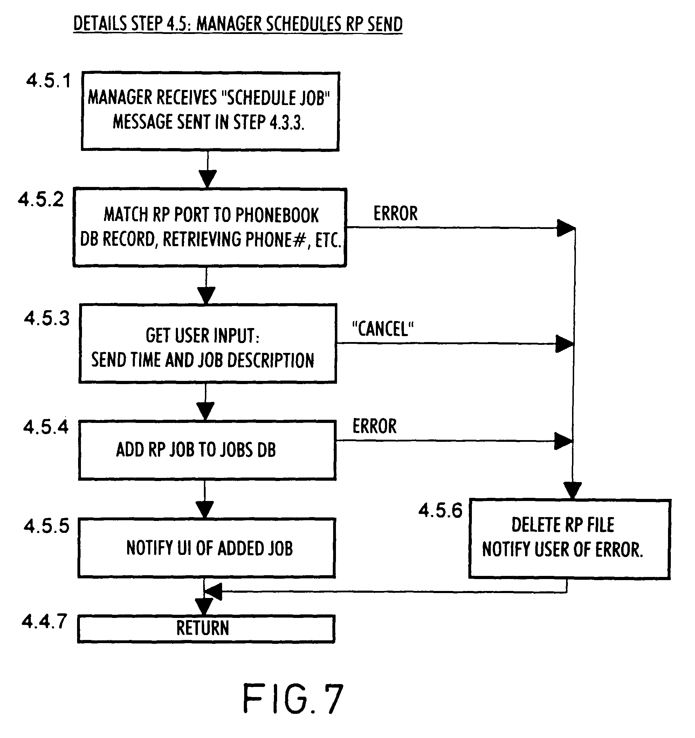

Figs. 3-7 are flowcharts which show the details of the Fig. 2 step 4 processing within the remote print driver 34 for capturing data signals from the print spooler 33, including beginning a print job (Fig. 3), printing buffers (Fig. 4), ending a print job (Fig. 5), and deleting a print job (Fig. 6). In addition, Fig. 7 shows the processing within the remote print driver 34 for scheduling a transfer of data signals to the base unit 12.

Fig. 8 is a flowchart which shows the details of the user interface (Ul) to the remote print driver 34. As can be seen from Fig. 8, the remote print driver has extensive error detection capabilities.

Fig. 9 is a flowchart which shows the processing within the base unit 12 and the remote print driver for verifying from the remote-to-base control signal that the desired peripheral is connected to the remote unit 16.

Fig. 10 is a flowchart which shows the processing within remote unit 16. At steps 6. 1 and 6.2, the remote unit 16 answers the call from the base unit 12 and transmits the remote-to-base control signal to the base unit 12 to inform the base unit 12 that the remote unit 16 is one which can generally direct a facsimile-encoded data signal to a particular peripheral device represented by a base-to-remote facsimile-encoded data signal and to inform the base unit of the particular peripheral or peripherals connected to the remote unit 16.

At steps 6.3 and 6.4, the remote unit 16 receives the facsimile-encoded data signal from the base unit 12. At steps 6.5-6.8, the remote unit 16 decodes the data signals (i.e. strips the facsimile headers) and directs the data signals to the peripheral device represented by the base-to-remote facsimile-encoded control signal.

Fig. 11 shows the details of the processing within the remote unit 16 in step 6.2 of Fig. 10.

In a particular embodiment of the invention, shown in Fig. 12, a base unit 12 and a remote unit 16 are combined into a single unit 41 at a first location for communication of data signals and control signals with a similarly combined unit 41 comprising a remote unit 16 and a base unit 12, respectively, at a second location. In the single unit 41, executable software is stored in an EPROM 40 for execution by a CPU 42, both of which are attached to an ADDRESS bus and a DATA bus. The CPU is a 80188 microprocessor, available from Intel or AMD. A RAM 44, also attached to the ADDRESS bus and the DATA bus, provides working memory. An Application Specific Integrated Circuit ("ASIC") provides circuitry for the CPU to interface to a first buffer 48 of a parallel port 49 (to which a computer, as a peripheral 14, may be attached); to a second buffer 50 of a second parallel port 51 (to which a printer, as a peripheral 14, may be attached); to an EIA transceiver 52 which controls a serial port 54; to a first driver 56 of a light source 58; to a second driver 60 of a stepper motor 62 of a paper feeder; and to a keyboard 64 which interfaces to an LCD 66. A real time clock ("RTC") 68 and a scanner 70, attached to a charge coupling device 72, are also attached to the ADDRESS bus and the DATA bus. A modem 74 attached to the ADDRESS bus and the DATA bus is connected to a Digital Analog Access ("DAA") interface 76 to a phone line.

When the single unit 41 functions as a base unit 12, the signal from the apparatus 24 is received by the parallel port 49. Software in the EPROM 40, executed by the CPU 42, generates a header signal which contains a control signal, depending upon the printer desired. The control signal, when facsimile encoded, becomes the facsimile encoded control signal. The software in the EPROM 40, executed by the CPU 42, directs the control signal and the data signal through the ASIC 46 to the modem 74. The modem 74 modulates the control signal and the data signal supplied thereto in accordance with the facsimile protocol and supplies the modulated signals to the DAA 76, to the public carrier network.

When the single unit 41 functions as a remote unit 16, the signal from the public carrier network is received by the DAA 76 and the modem 74. The signal is then demodulated and processed by the software in the EPROM 40 executed by the CPU 42. If there is no control signal in the header, the demodulated data signal is decompressed and is supplied to the second parallel port 51 as a "conventional" facsimile image. If there is a control signal, then the control signal is used by the CPU 42 to direct the data signal, uninterpreted, to the buffer 50 to the second parallel port 51.

A top level ASIC 46 schematic is shown in Fig. 13. Fig. 13 shows the top-level ASIC printouts, including buffers and inverter circuitry. Fig. 14 shows the signals of the DAA interface 76, RAM 44 control, stepper motor 62 control, scanner 70 control, RTC 68 control, and parallel port 49 and 51 control.

Fig. 15 shows the details of the main ASIC components, including NFAXBLK for controlling the modem 74, a speaker, the DAA 76, an answering machine line, and related connectors. NPPORT controls the parallel interfaces 49 and 51. KBDCTRL controls the keyboard 64, including the LCD 66. GAUART controls the serial communications of the EIA transceiver 52. The remaining blocks are address latches, decoders, multiplexers, and related glue logic.

Figs. 16-84 show the ASIC circuitry at varying levels of further detail.

Appendices A-F contain software code, in the "C" programming language. A portion of the software code resides in the EPROM 40 and executes on the CPU 42 for performing some of the steps of the flowcharts of Figs. 2-11. Another portion of the software code resides and executes in the apparatus 24 for performing others of the steps of the flowcharts of Figs. 2-11. It is noted that there are references in the software code to software functions that are not included in the appendices. These non-included software functions are either conventional or are not relevant to the present invention. For example, "HDB Get Record" in file BFTTX.C is a conventional function to retrieve a record from a data base. As another example, PARSE_FHS displays a message on a liquid crystal display.

Appendix A contains a "header" file, BFT.H, which provides common data and structure definitions for the software modules in Appendices B-D, including definition of a "non-standard frame" in which facsimile-encoded control signals are communicated between the base unit 12 and the remote unit 16. This software is shared between the EPROM 40 and the apparatus 24.

Appendix B contains a software module "RP.C". The individual files contain software for the remote print driver 34 to set up and remove the interface to the print spooler 33 (steps 2 and 8 of the flowchart in Fig. 2) and for beginning a print job (steps 4.1.1 to 4.1.5 of the flowchart in Fig. 3). This software is used only by the apparatus 24.

Appendix C contains a software module "RPPORTS.C". The individual files contain software for the remote print driver 34 to set up and remove an interface to the base unit 12 (steps 3 and 7 of the flowchart in Fig. 2). RPPORTS.C also has software for the user interface to the remote print driver 34 (steps 4.5.2 to 4.5.5 of the flowchart in Fig. 7). User specified data is stored in a database, "DB_PBK". This software is used only by the apparatus 24.

Appendix D contains a software module "BFTTX.C". The individual files contain software for initializing the base unit 12 and remote unit 16 (step 5.1 in the flowchart of Fig. 8); for verifying the remote capabilities (step 5.4 in the flowchart of Fig. 8, including steps 5.4.1 to 5.4.7 in the flowchart of Fig. 9); for composing and sending control signals (step 5.5. in the flowchart of Fig. 8); for handling the details of the processing within the remote unit 16 (steps 6.2 to 6.4 and 6.7 in the flowchart of Fig. 10, including steps 6.2.3 to 6.2.5 in the flowchart of Fig. 11). This software is shared between the EPROM 40 and the apparatus 24.

Appendix E contains a software module "BFT.C". The software within this module handles remote unit 16 processing, including answering a call and exchanging facsimile capabilities (step 6.2 in the flowchart of Fig. 10) and facsimile receive (step 6.3 in the flowchart of Fig. 10). The software within this module also performs file handling and call progress during a data signal transfer (steps 5.2 and 5.5 to 5.7 in the flowchart of Fig. 8) and upload to a computer (step 6.2.6 in the flowchart of Fig. 11). This software is used only in the EPROM 40.

Appendix F contains a software module "MCTFAX.C" which contains software to directly manages an ongoing data signal transfer, including dialing, parameter negotiation, session monitoring, and transfer of the transferred data signals from the remote unit 16 to a connected peripheral 14 (steps 5.3 and 5.7 to 5.9 in the flowchart of Fig. 8; step 6.1 and 6.5 to 6.8 in the flowchart of Fig. 10; and steps 6.2.2 and 6.2.7 to 6.2.9 in the flowchart of Fig. 11). This software is used only in the EPROM 40.

There are many advantages to the method and apparatus of the present invention. First, and foremost is that because the transmission and reception uses well-known facsimile protocol, the remote unit 16 can receive a standard facsimile transmission, and print that transmitted document, in facsimile image on the associated remote printer 14. In addition, of course, the remote unit 16 can also receive facsimile encoded signal from the base unit 12, and print them on the associated printer 14, in the same print quality as if the printer 14 were locally connected to the apparatus 24. Finally, with the facsimile encoded control signal, the base unit 12 can even direct the printing of the signals to one of a plurality of possibly connected remote printers 14 (if a plurality were so connected).

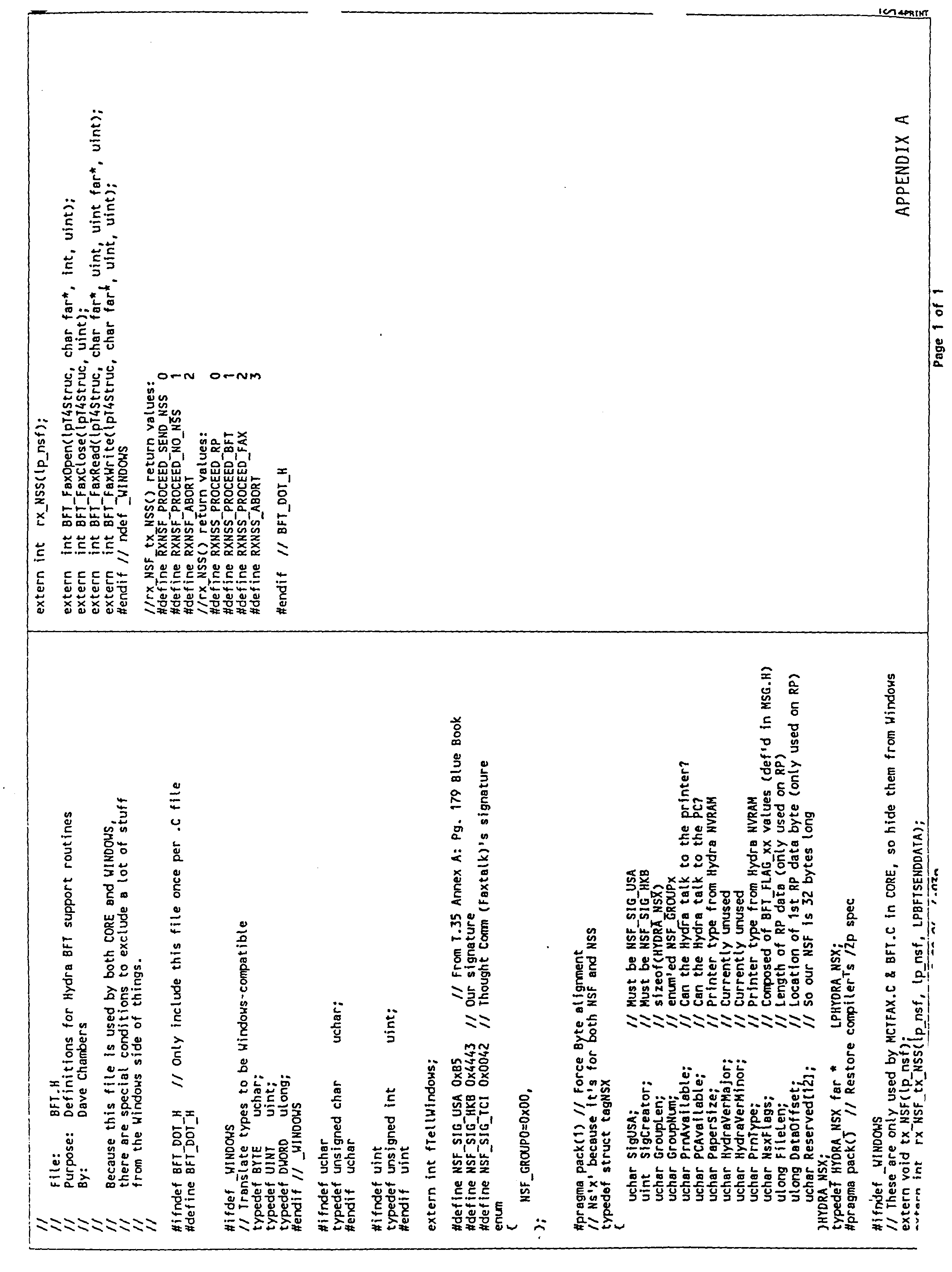

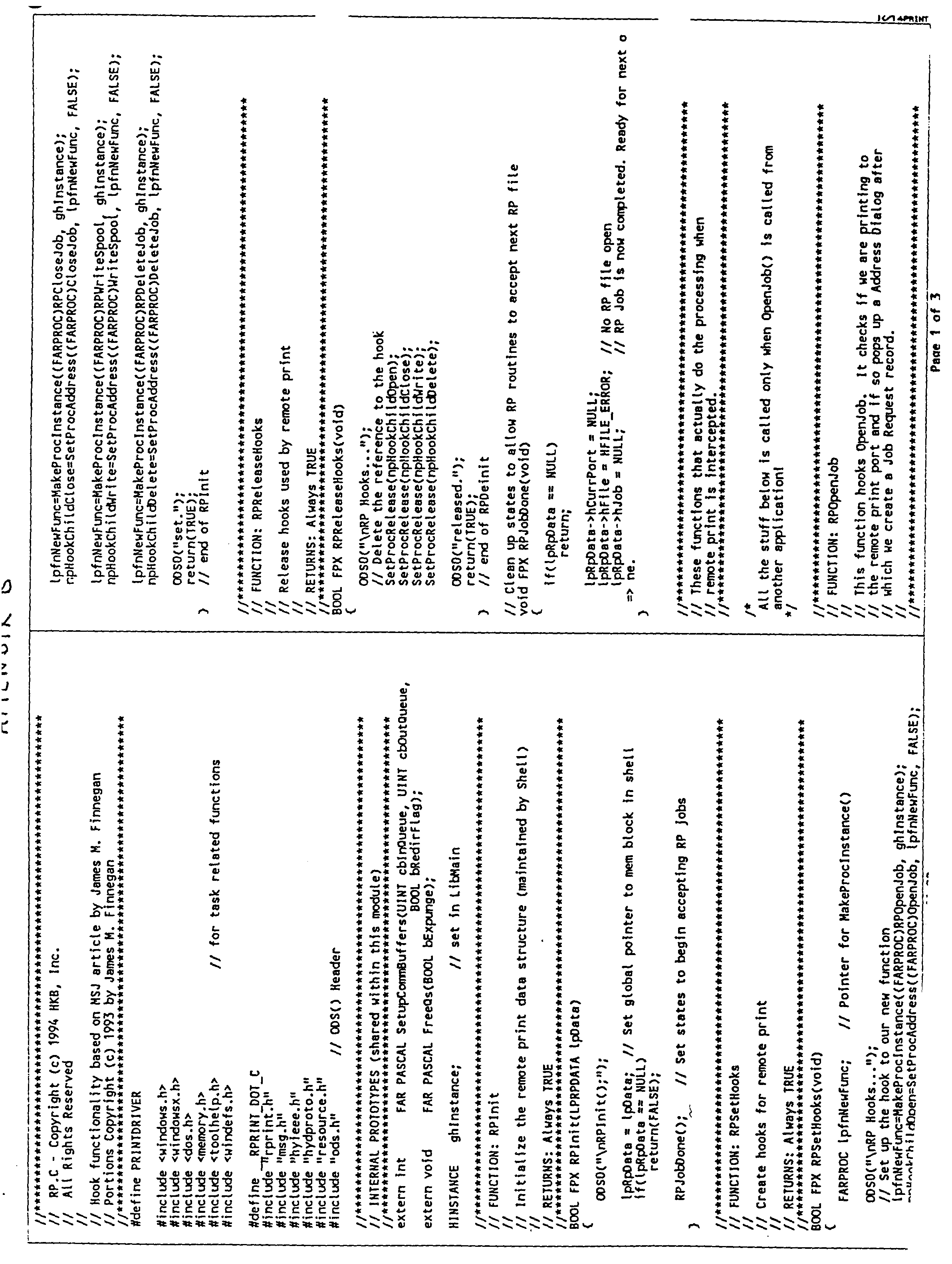

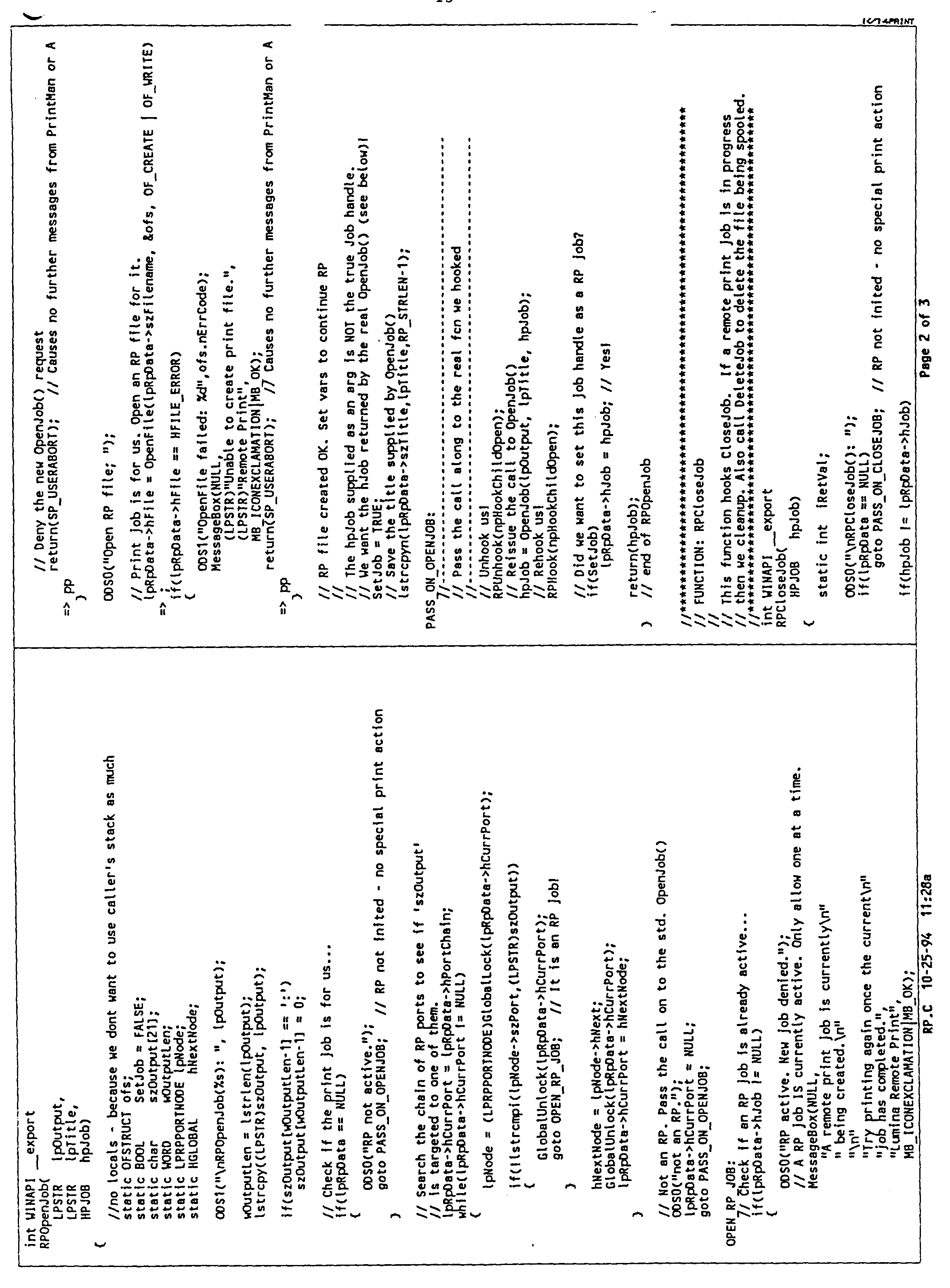

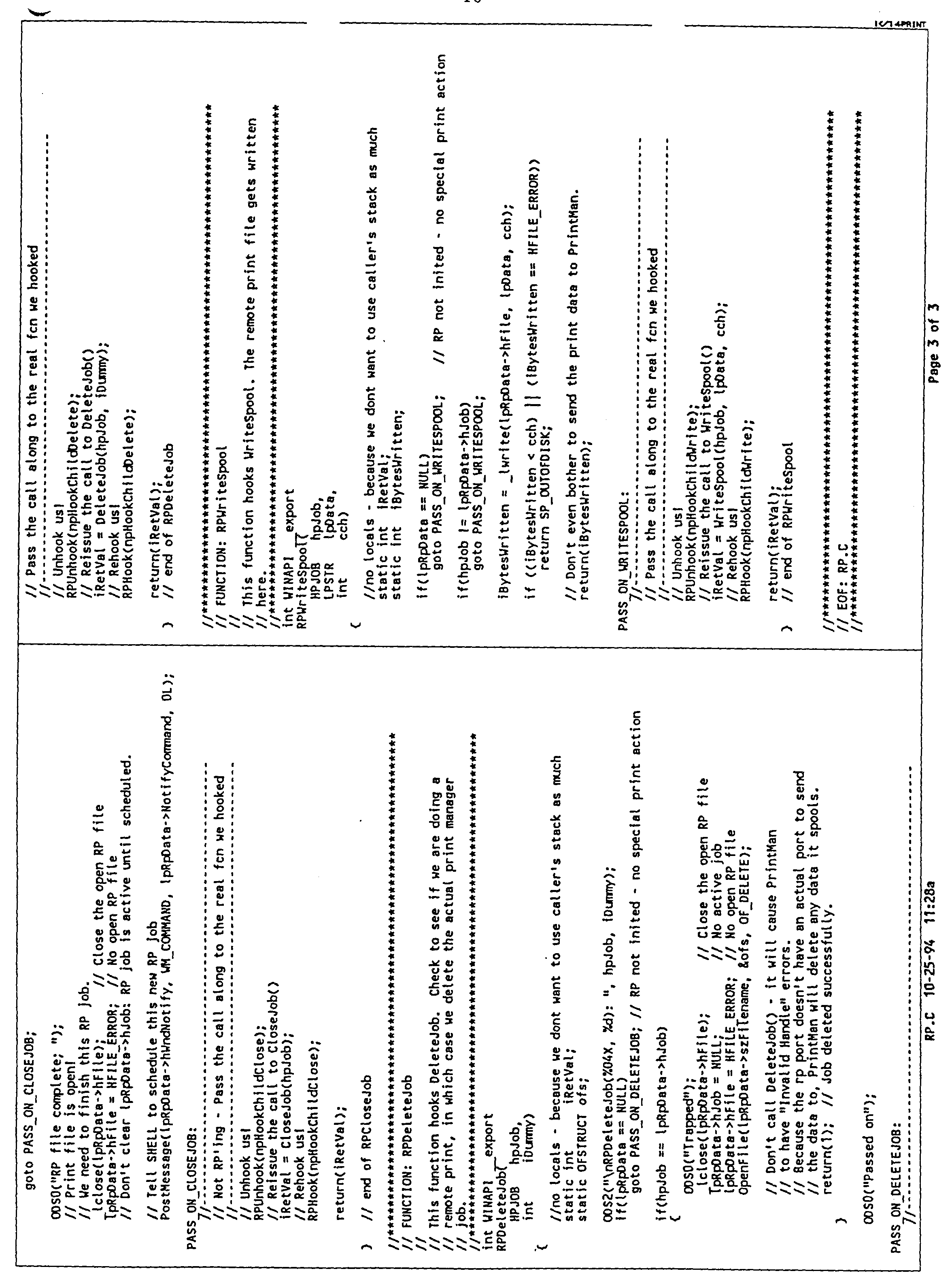

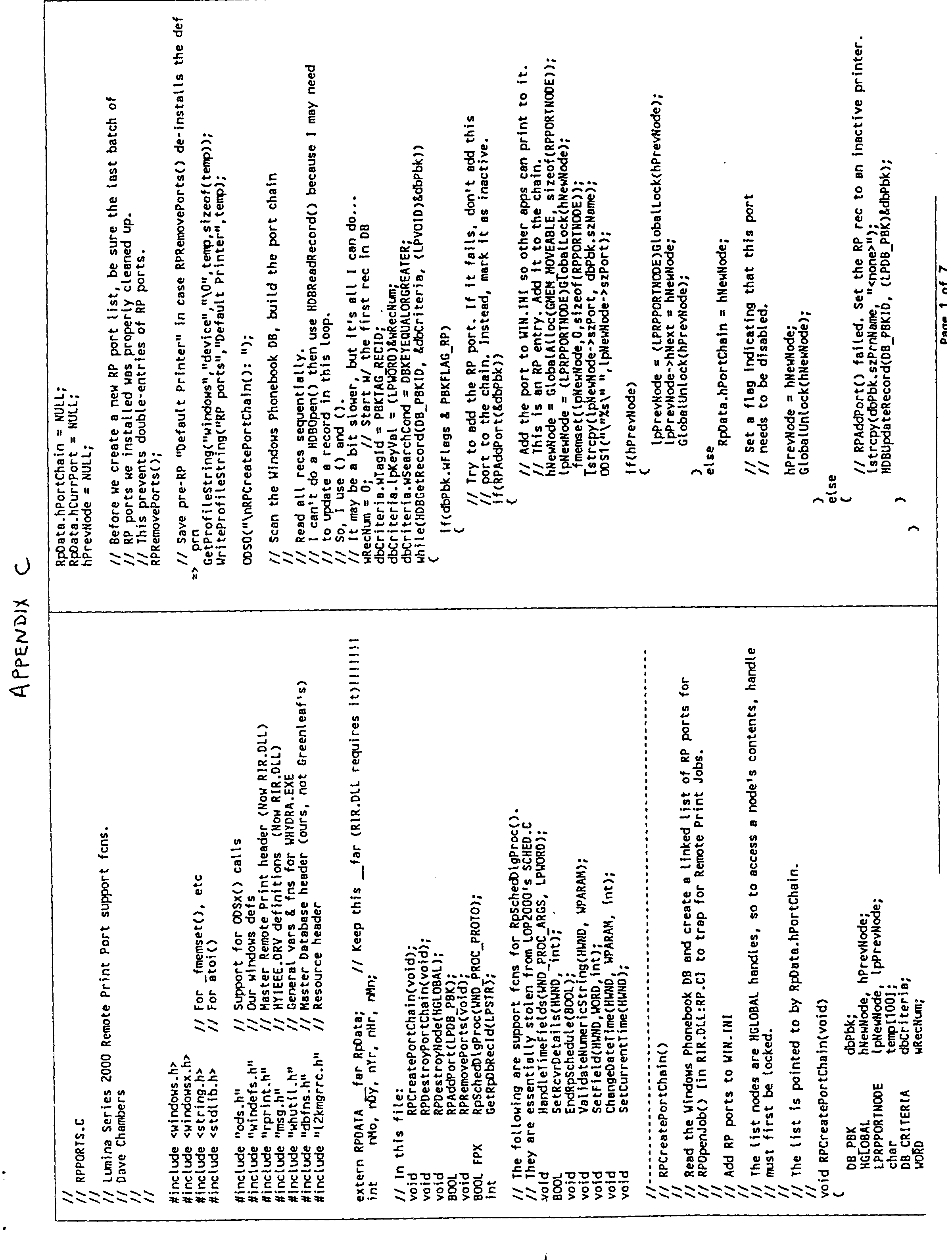

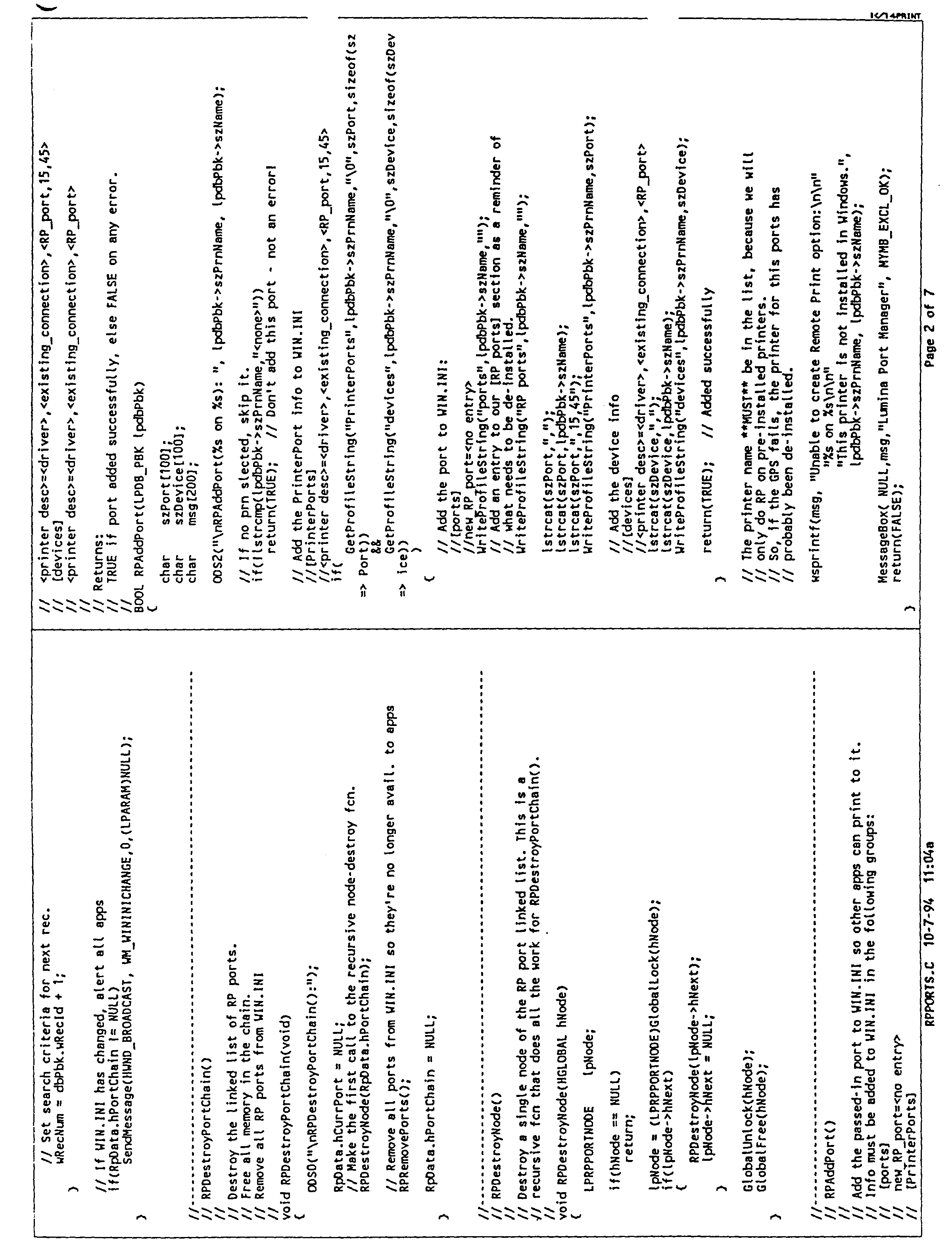

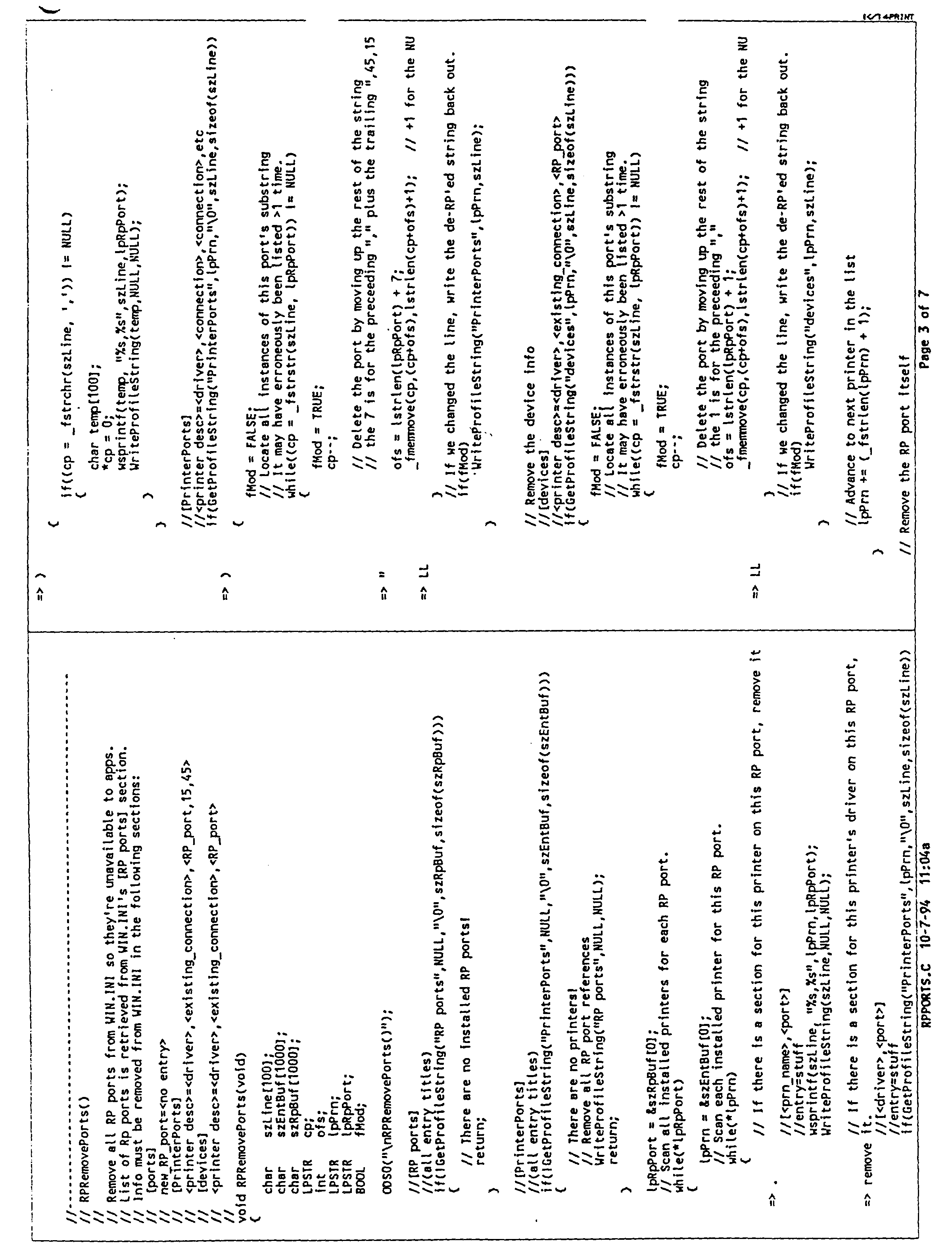

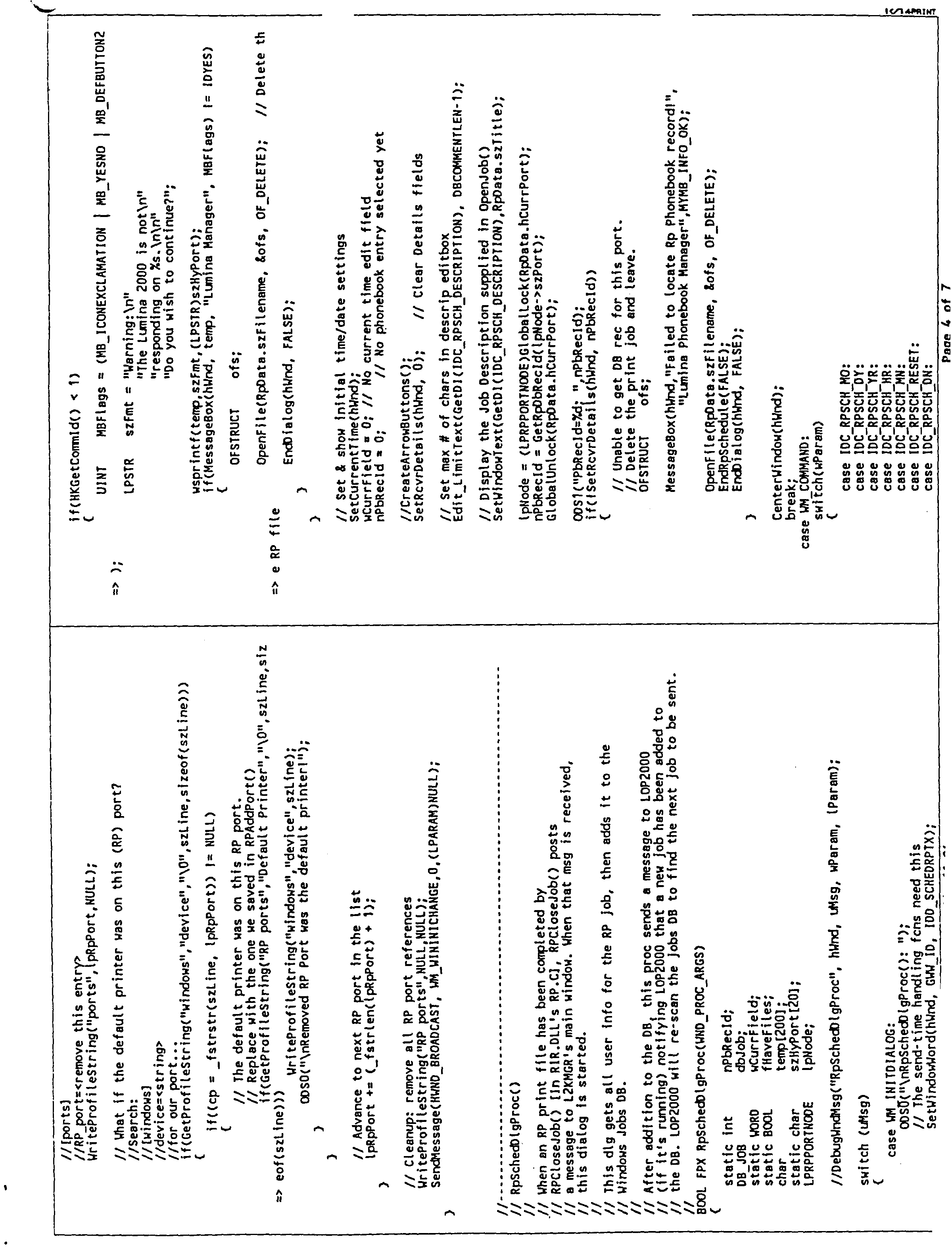

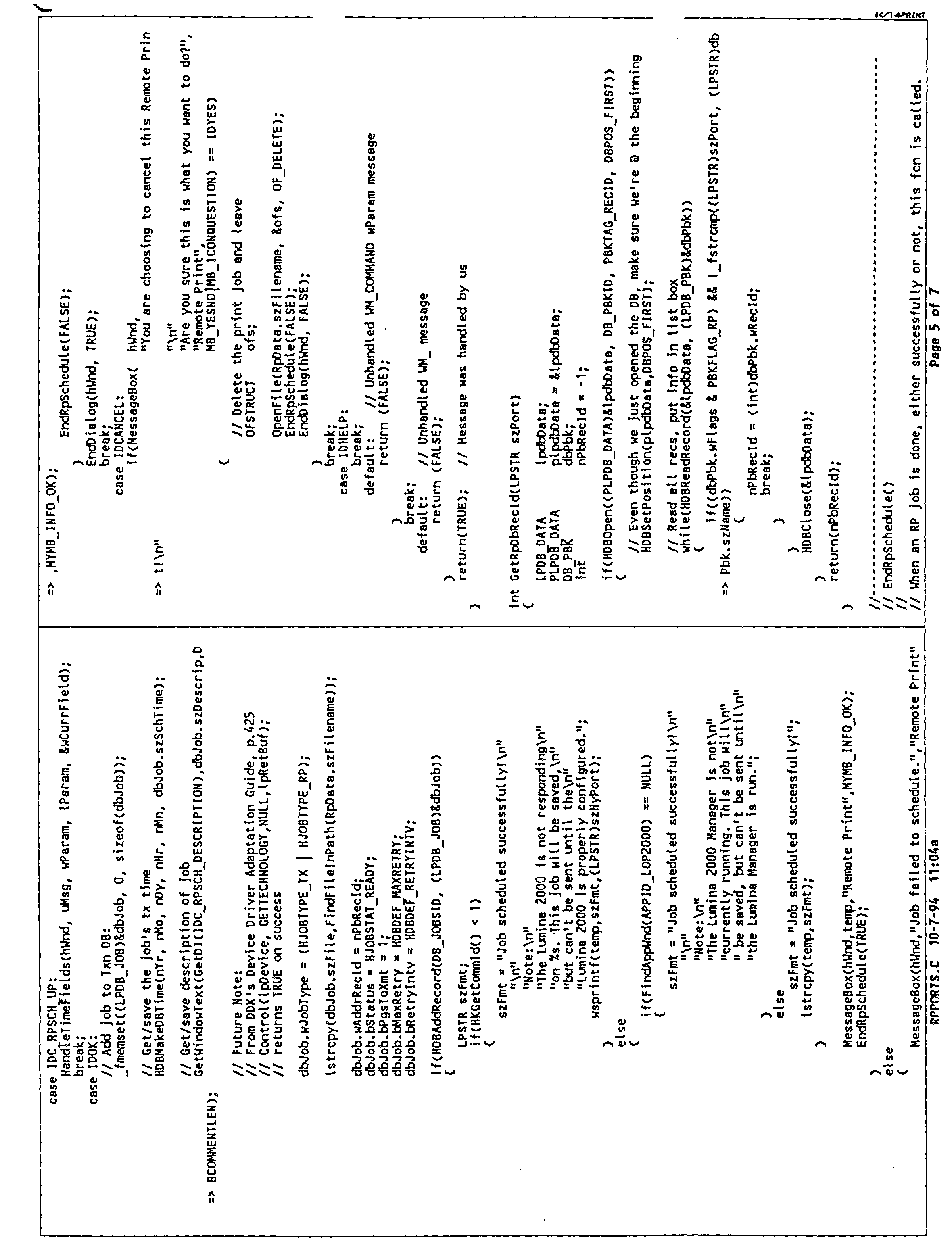

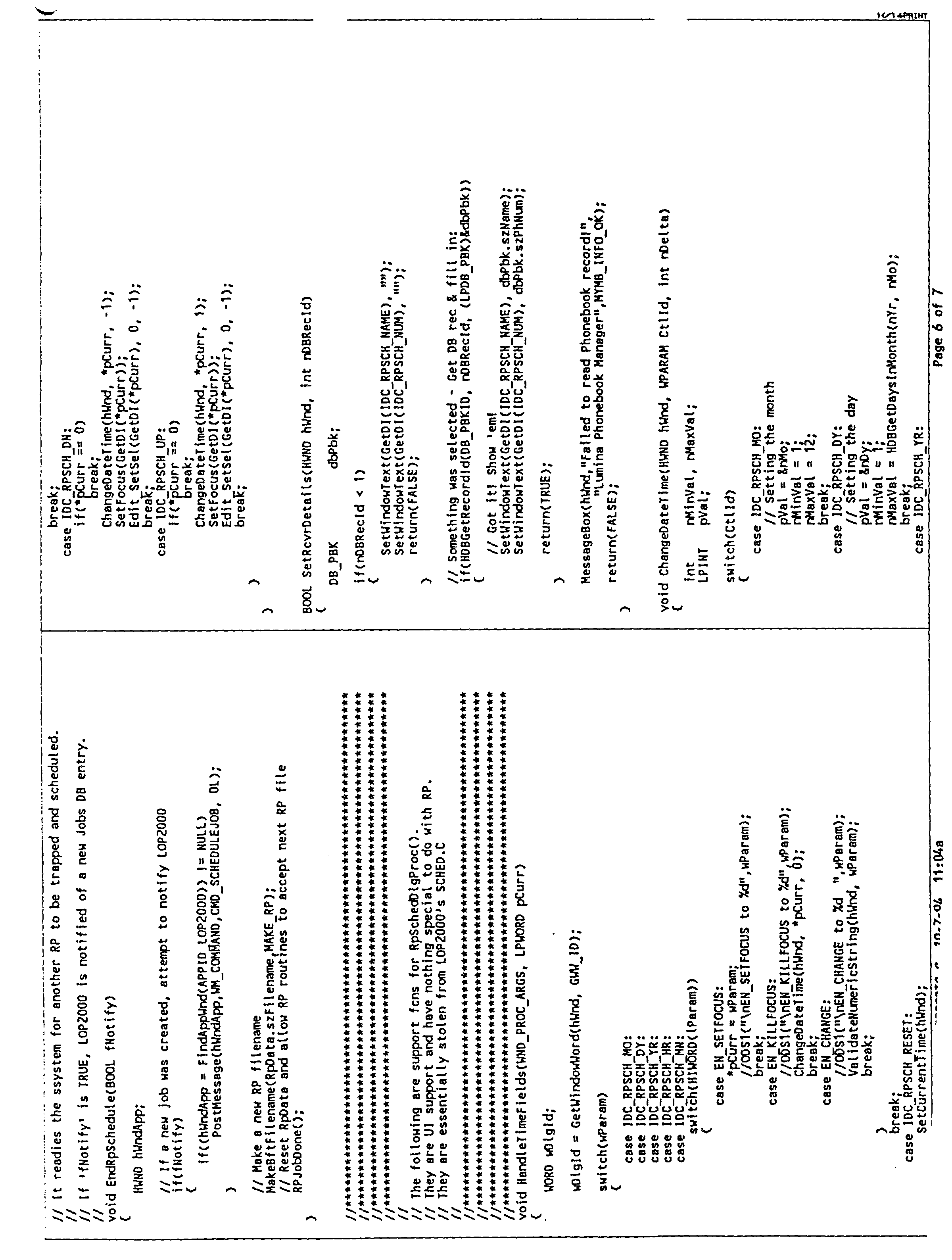

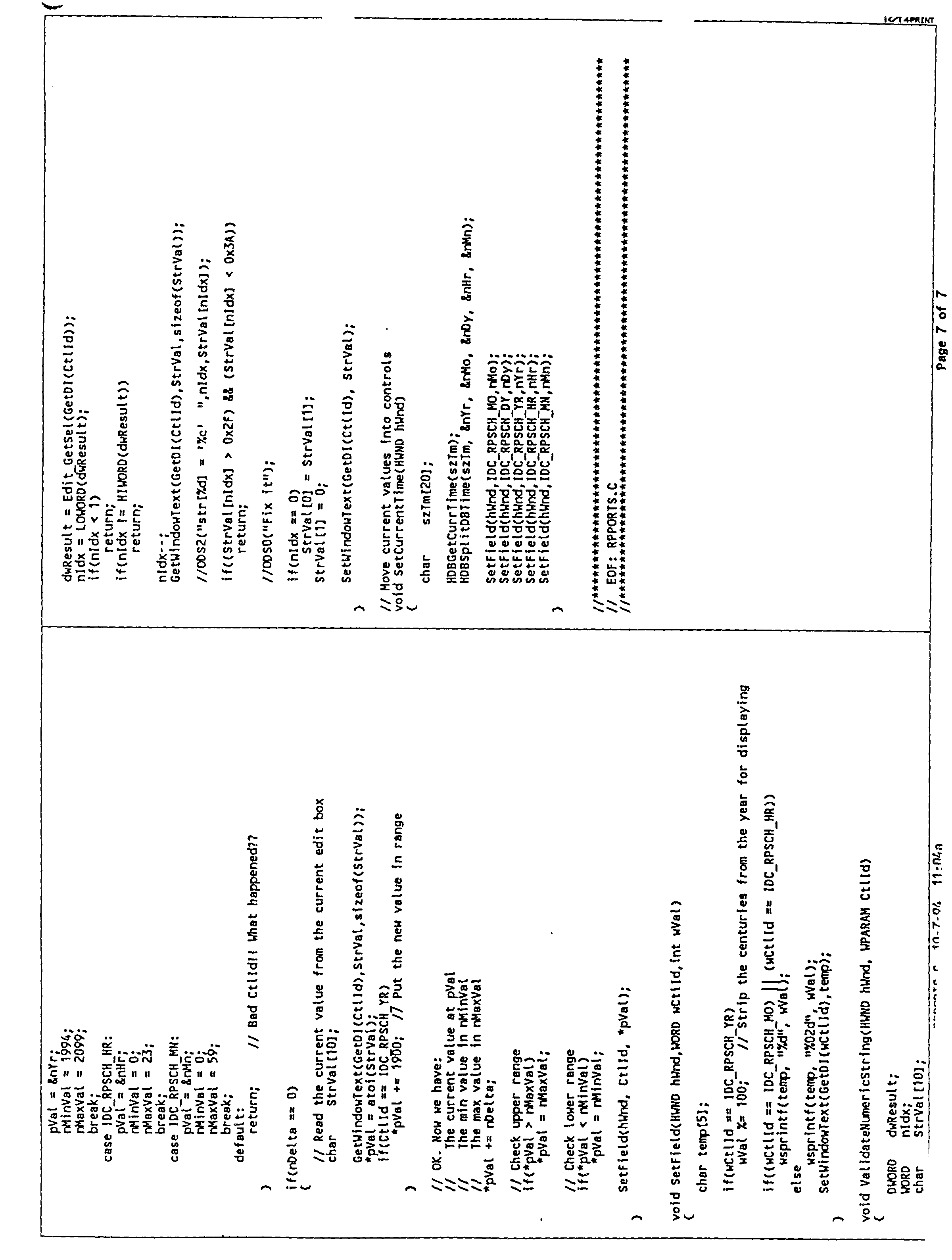

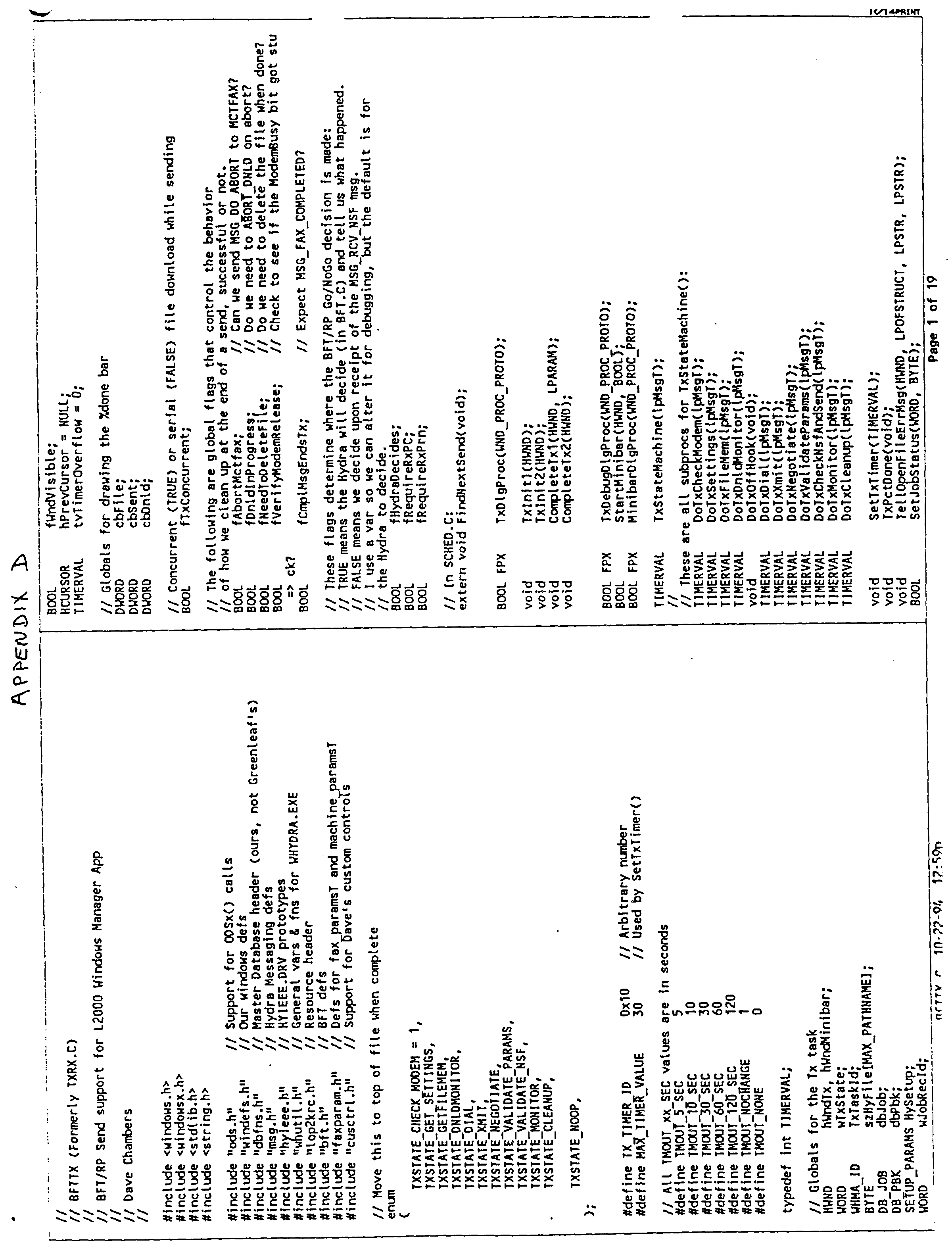

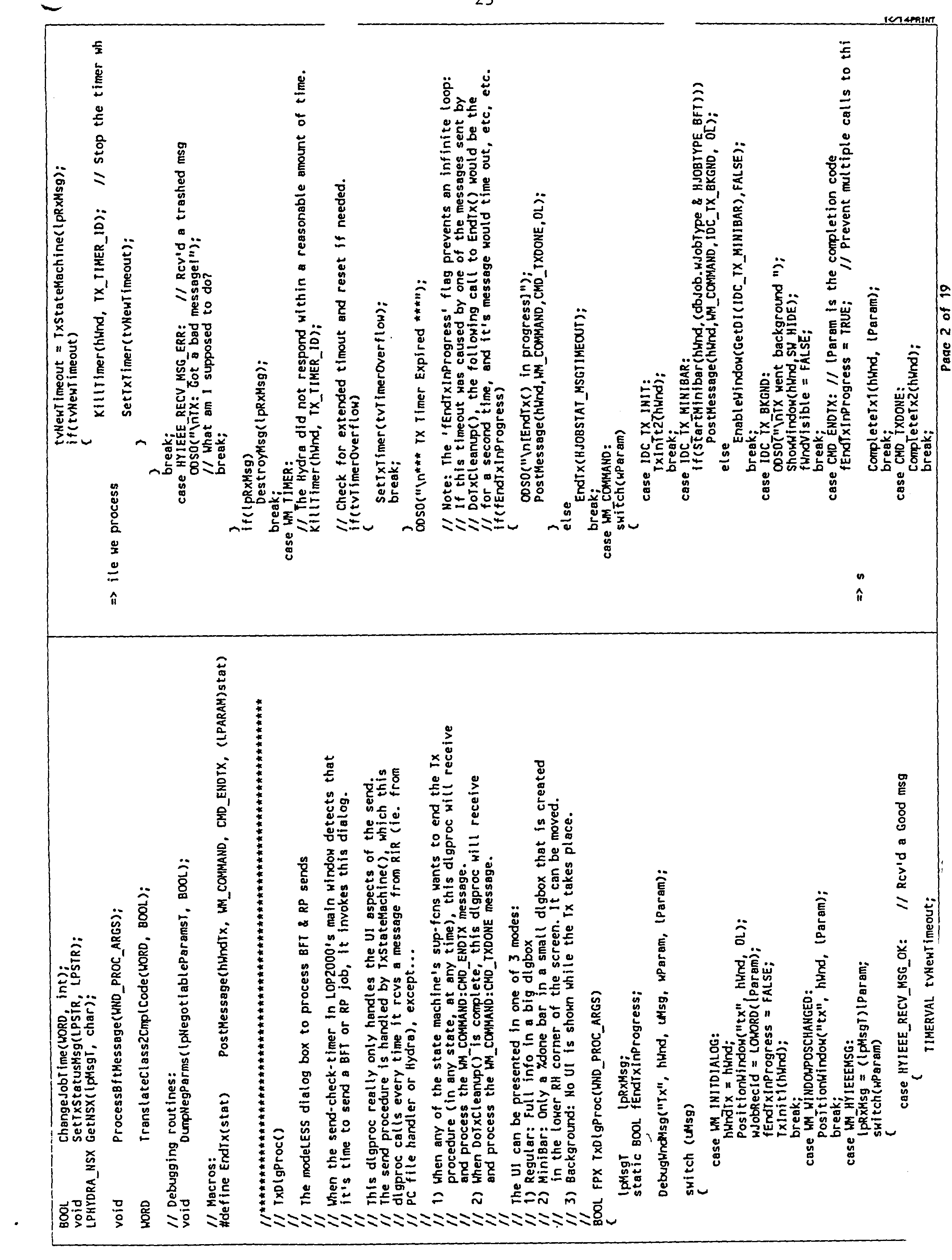

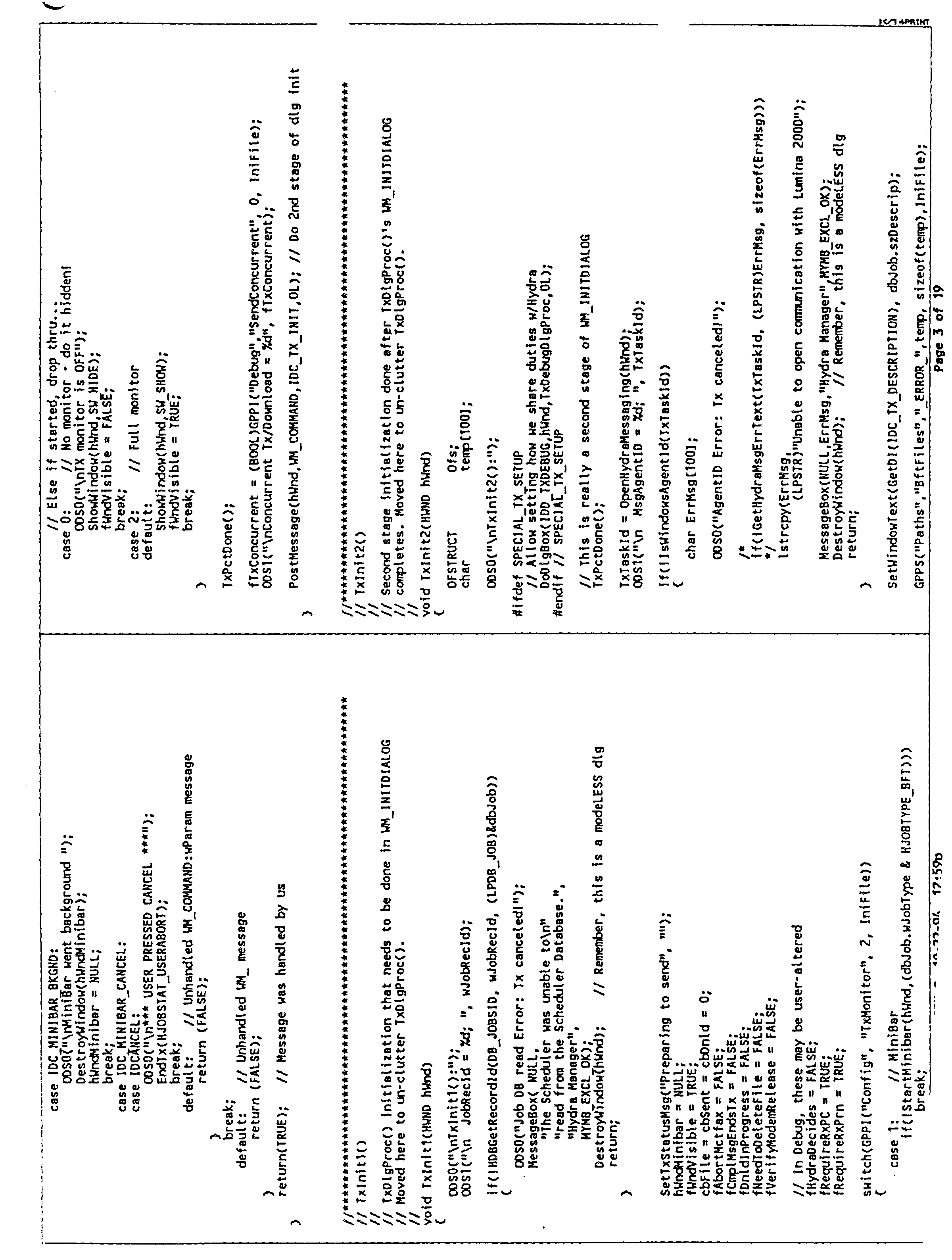

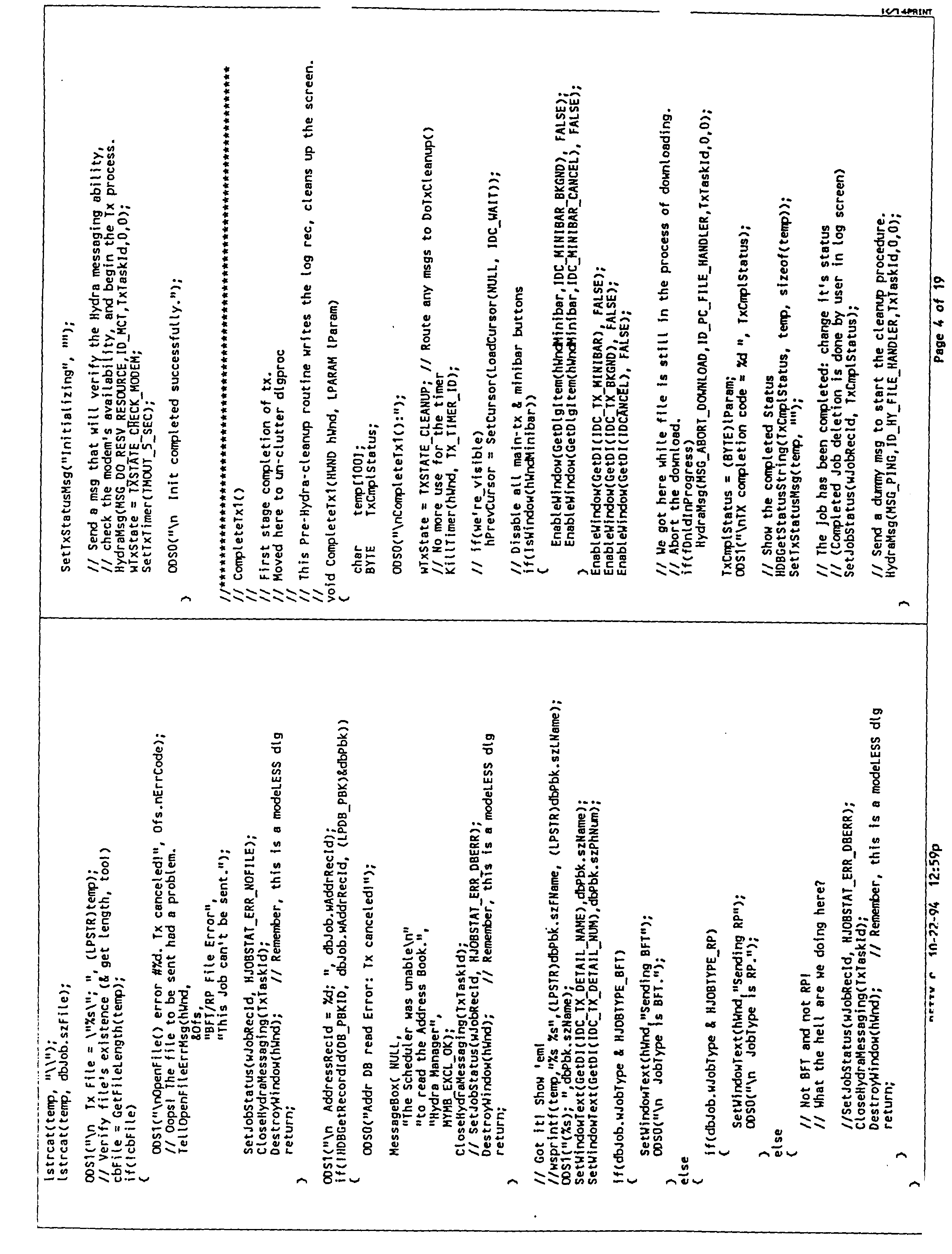

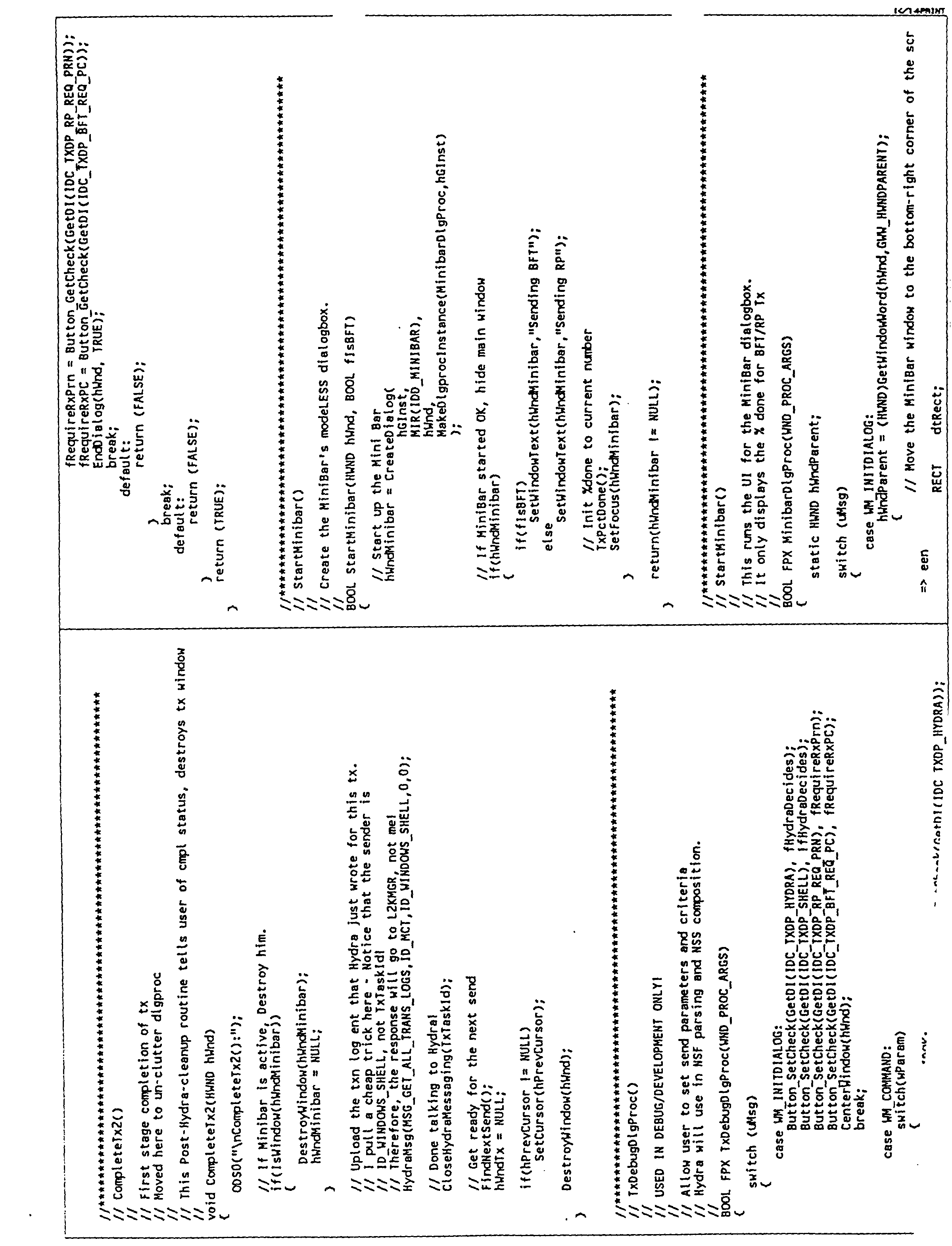

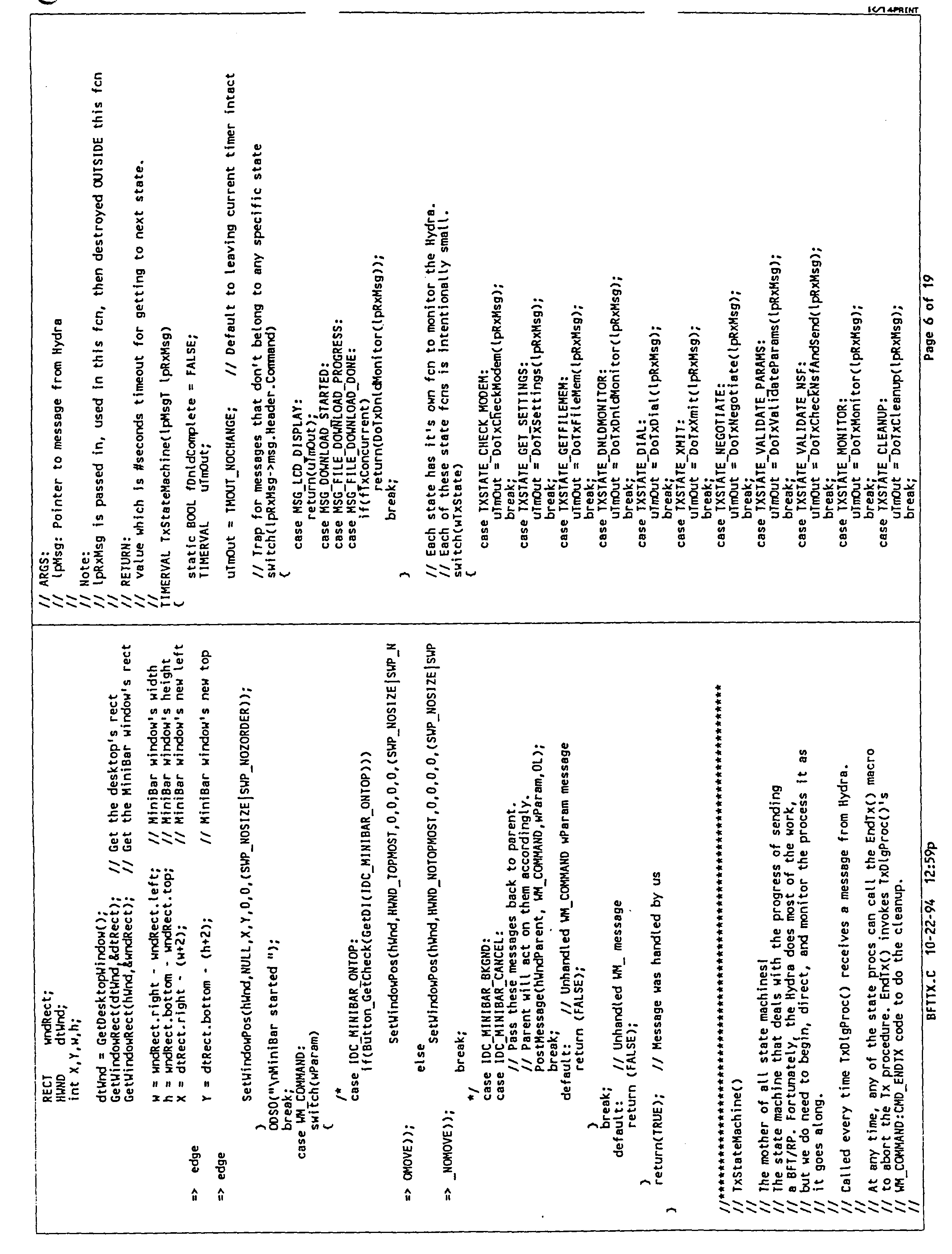

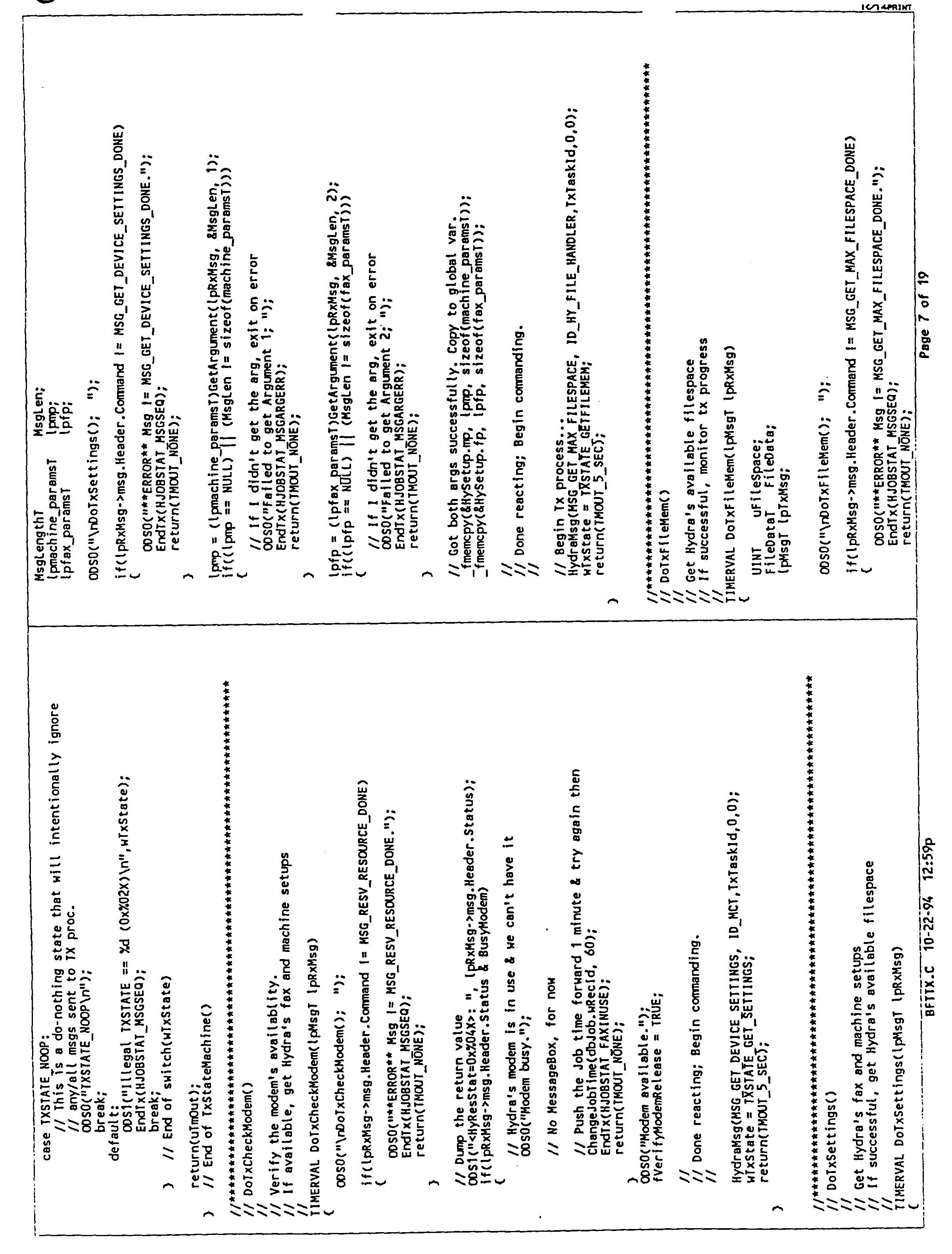

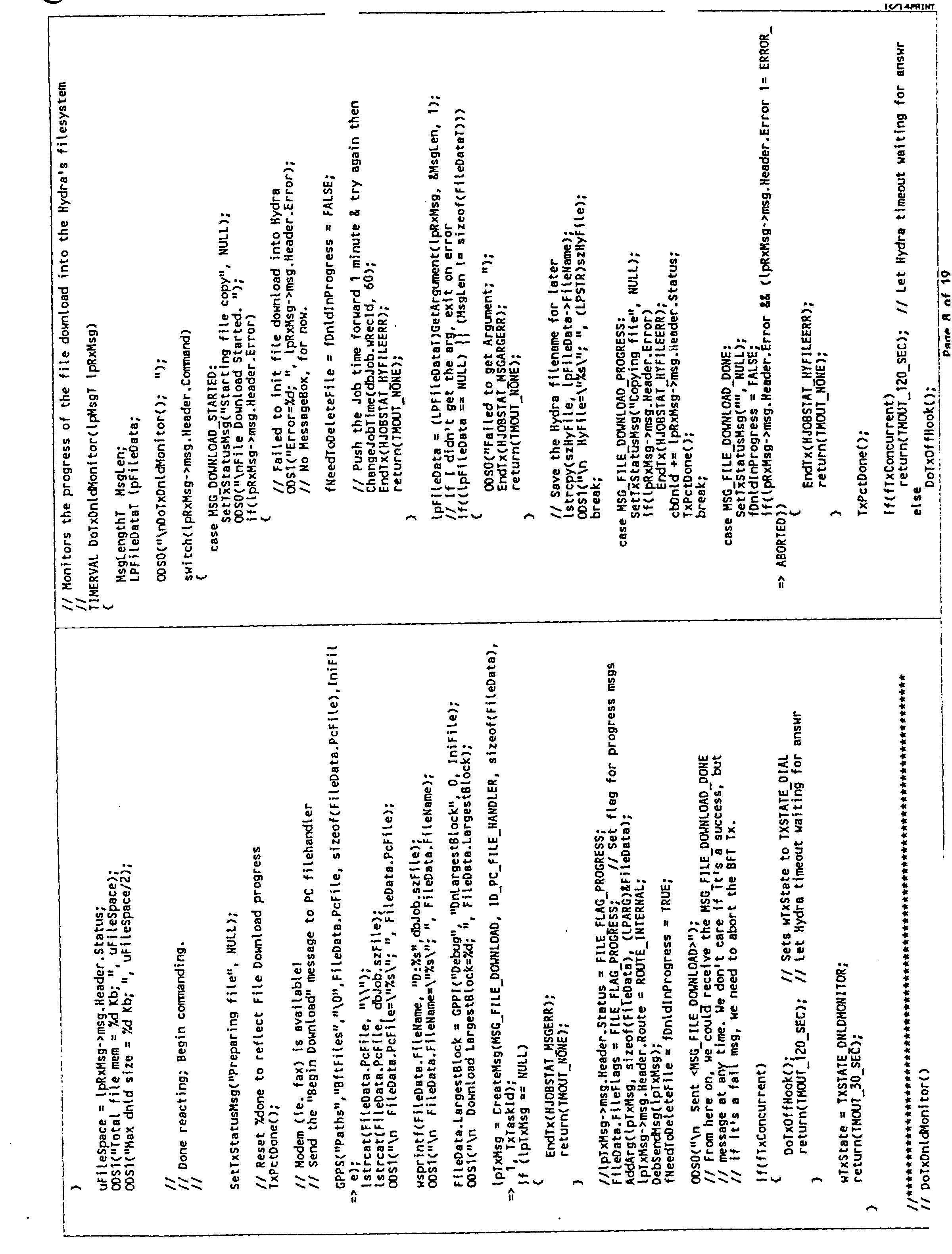

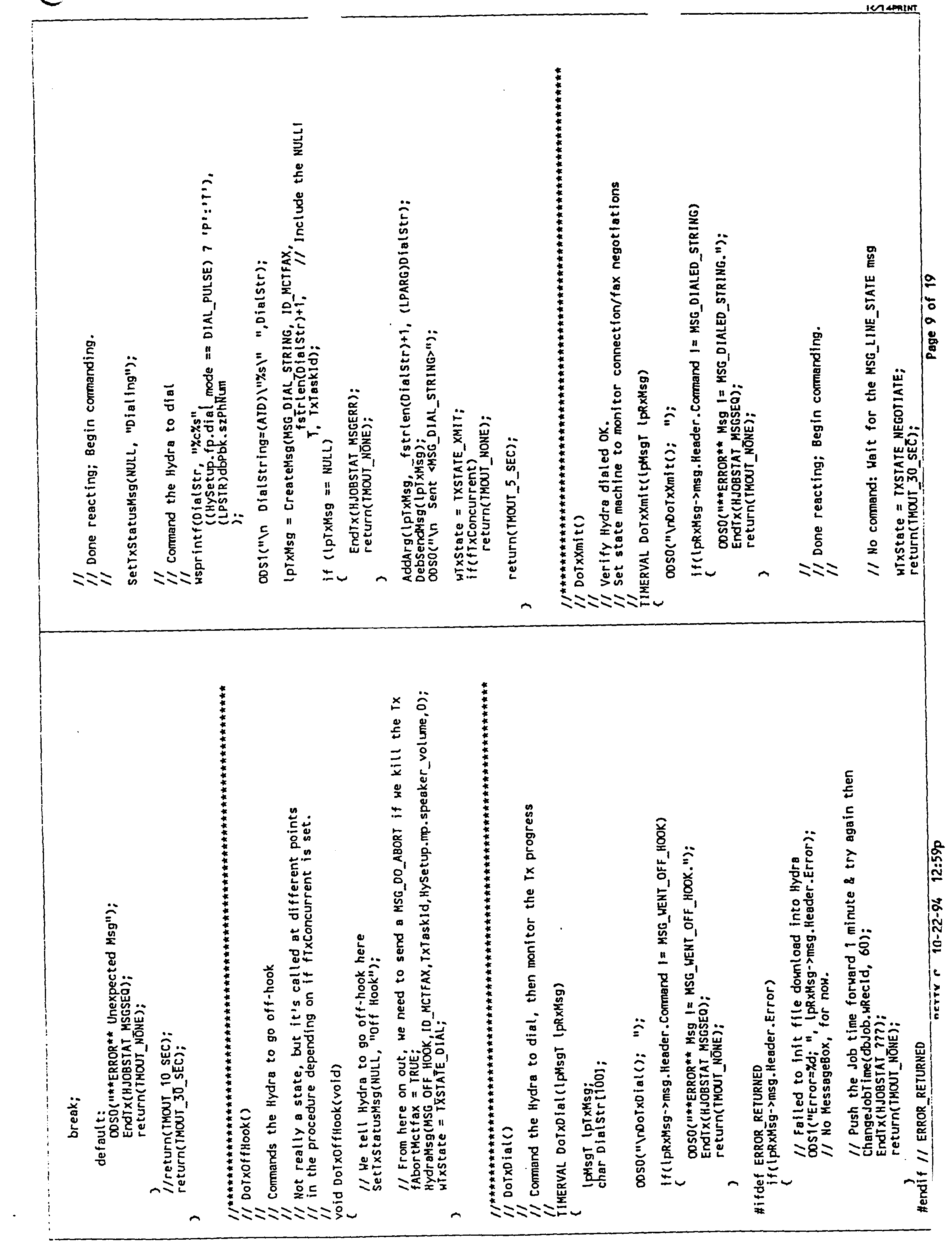

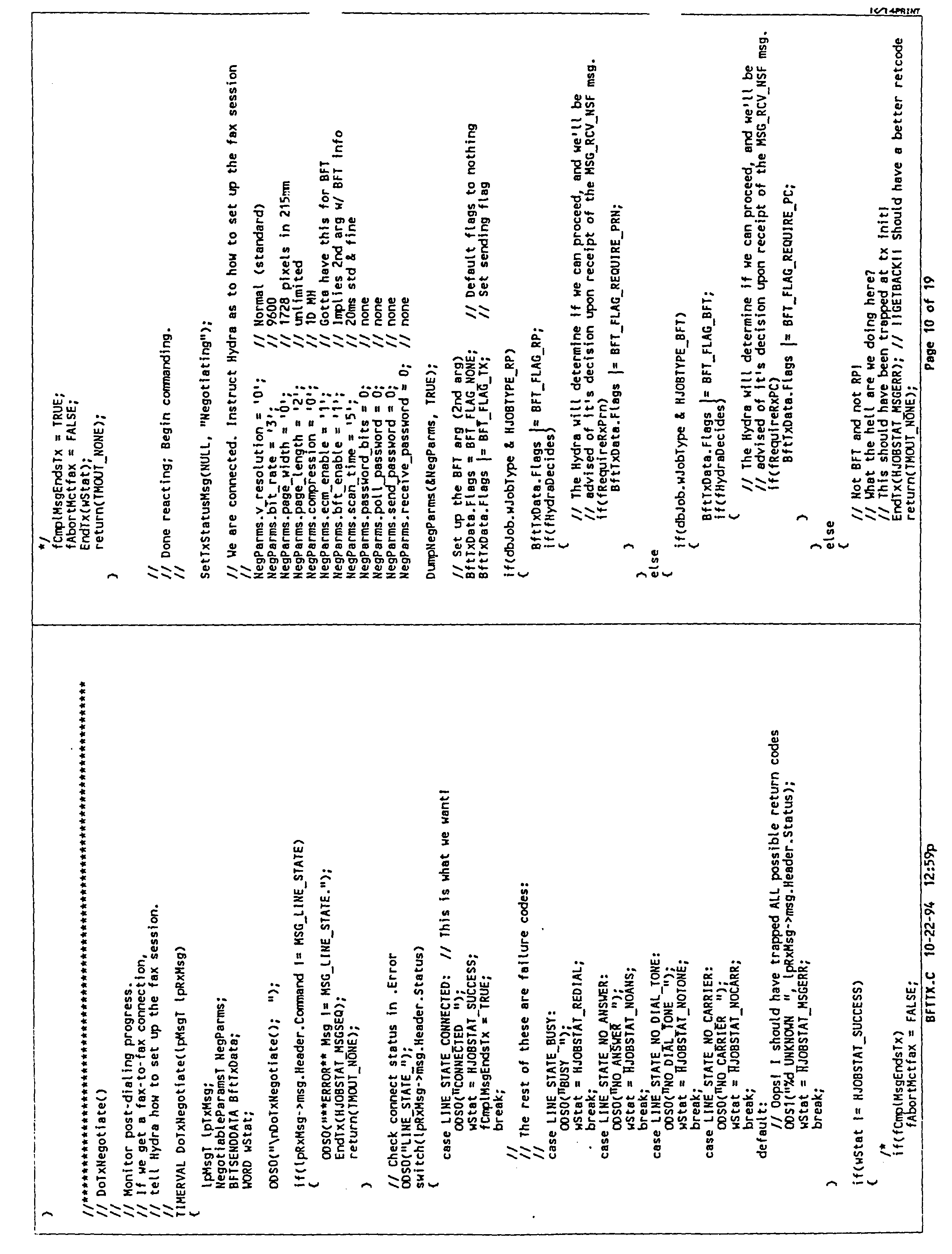

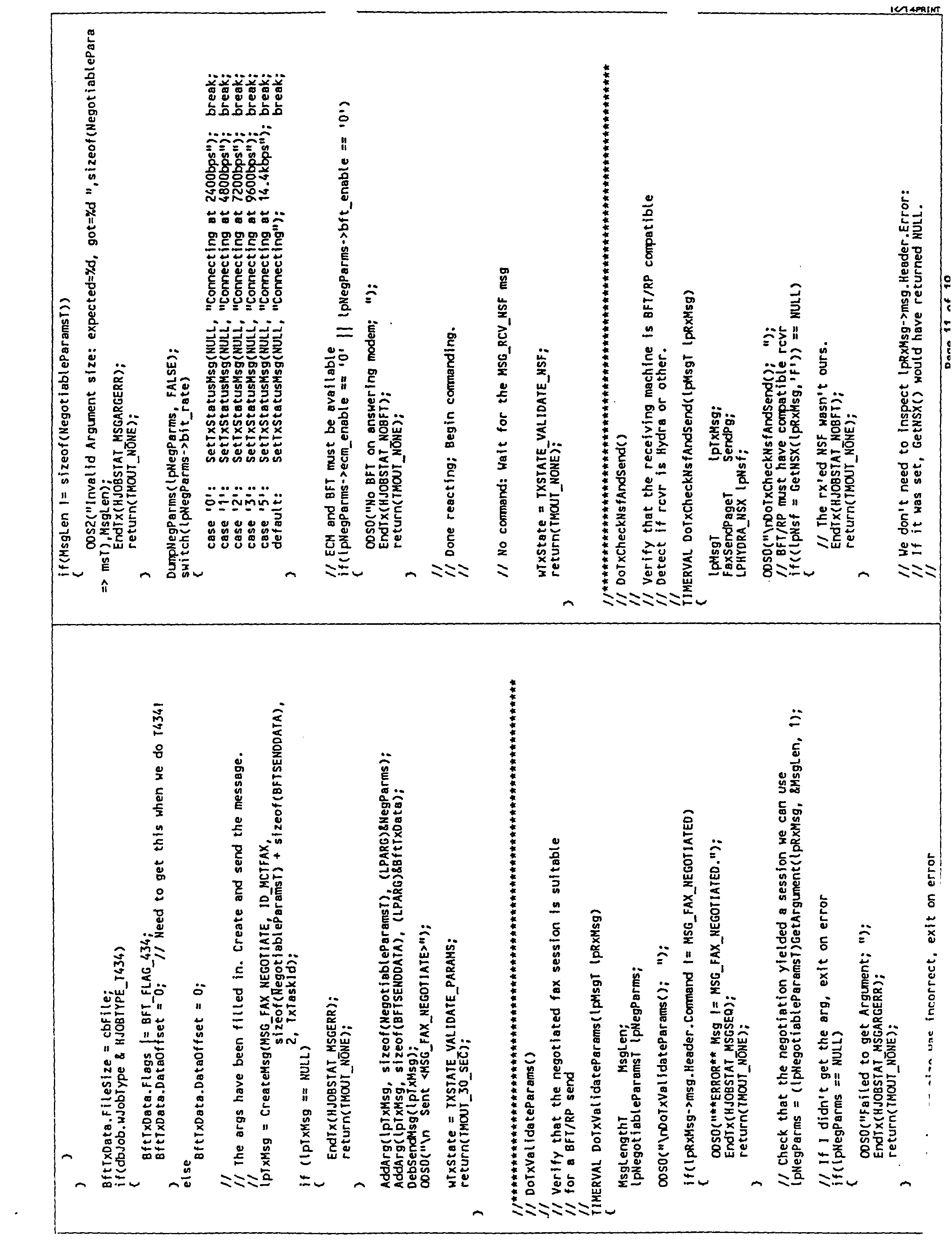

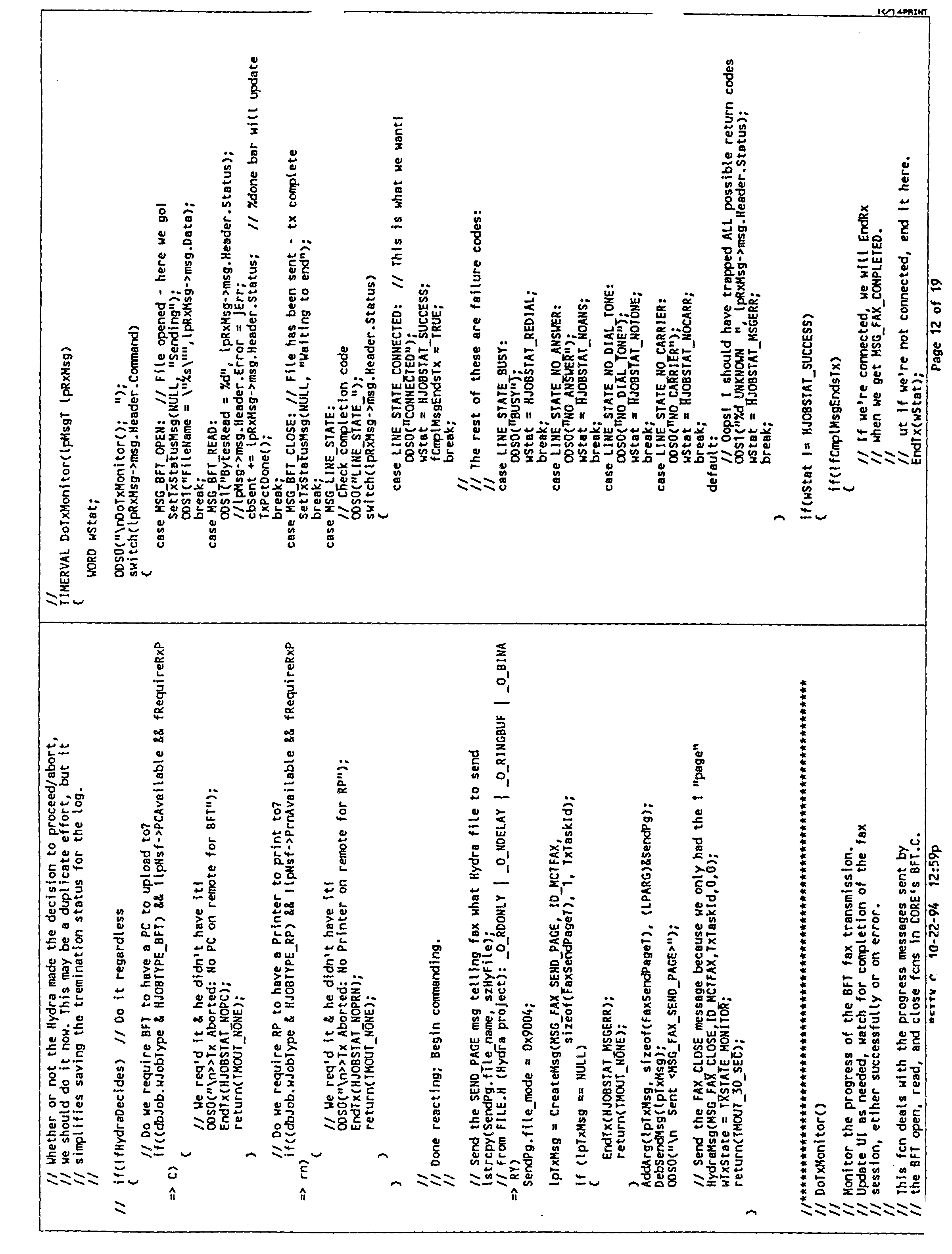

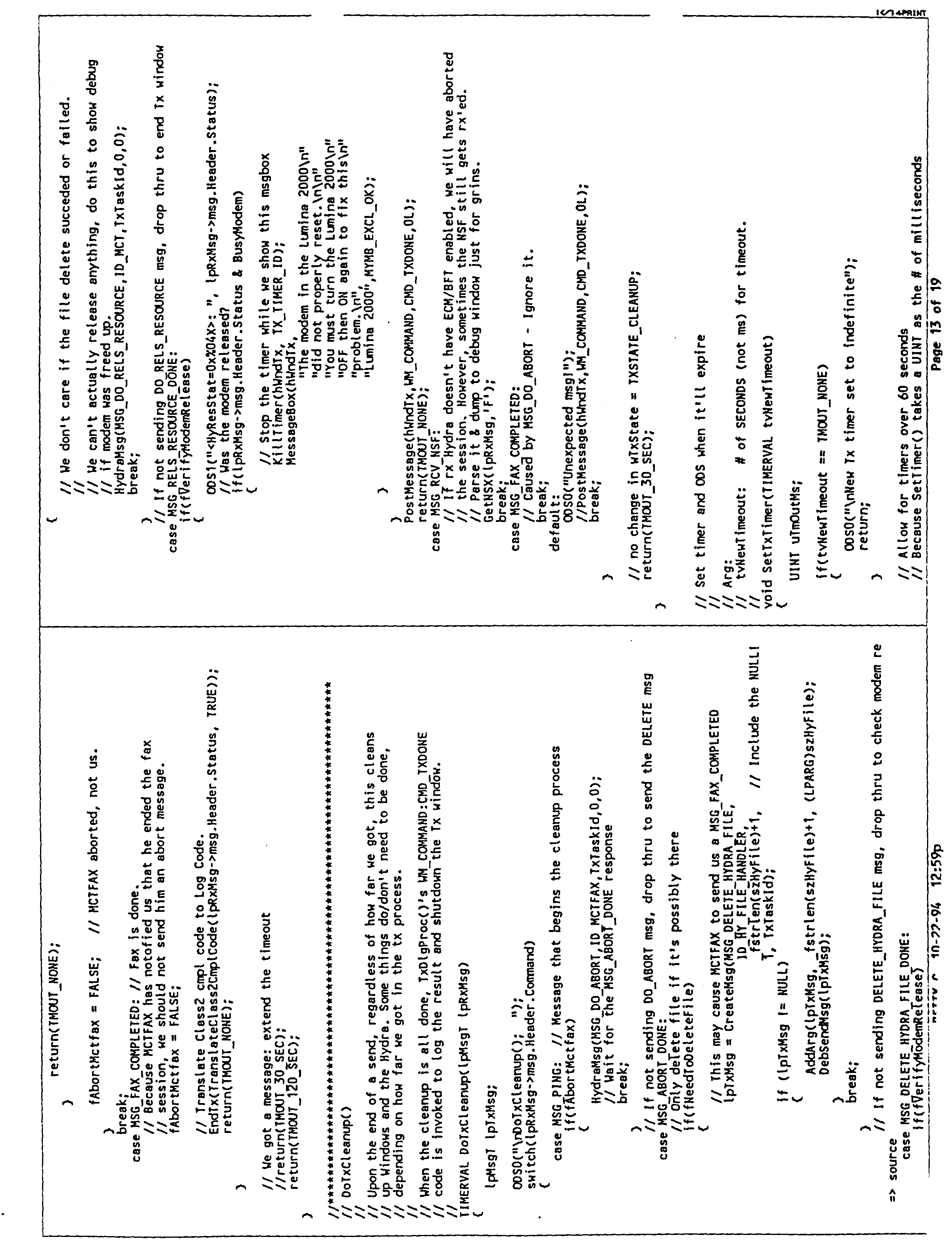

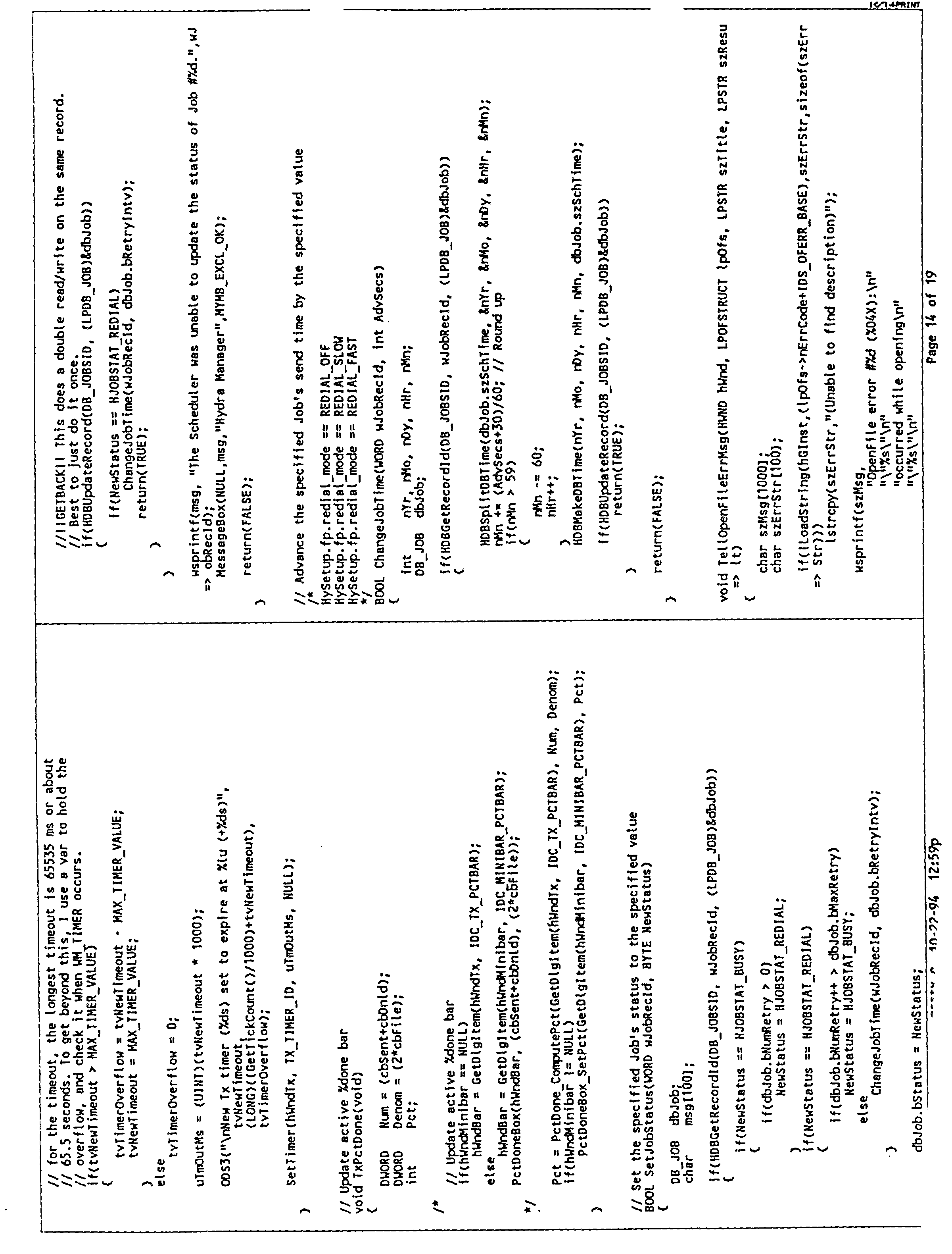

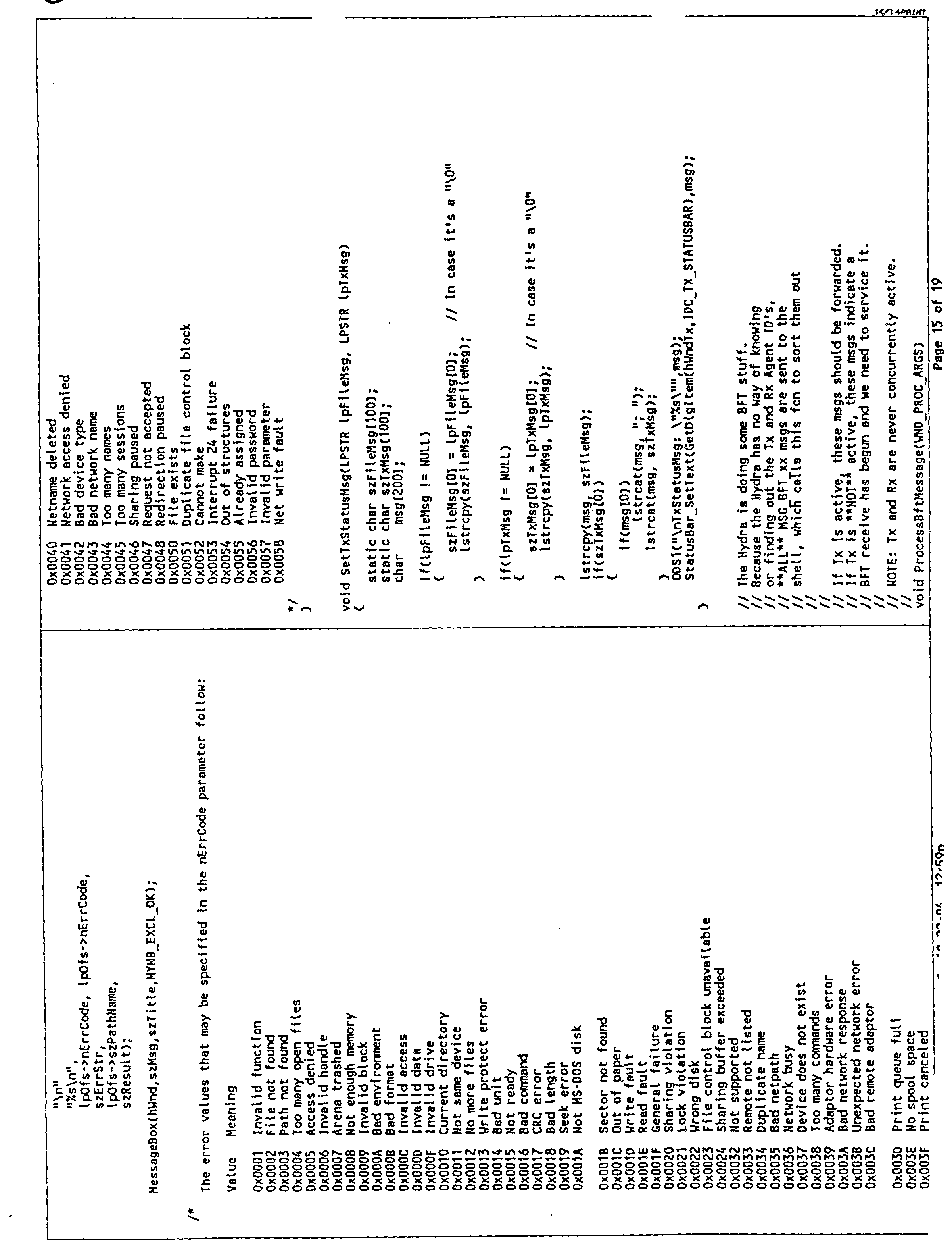

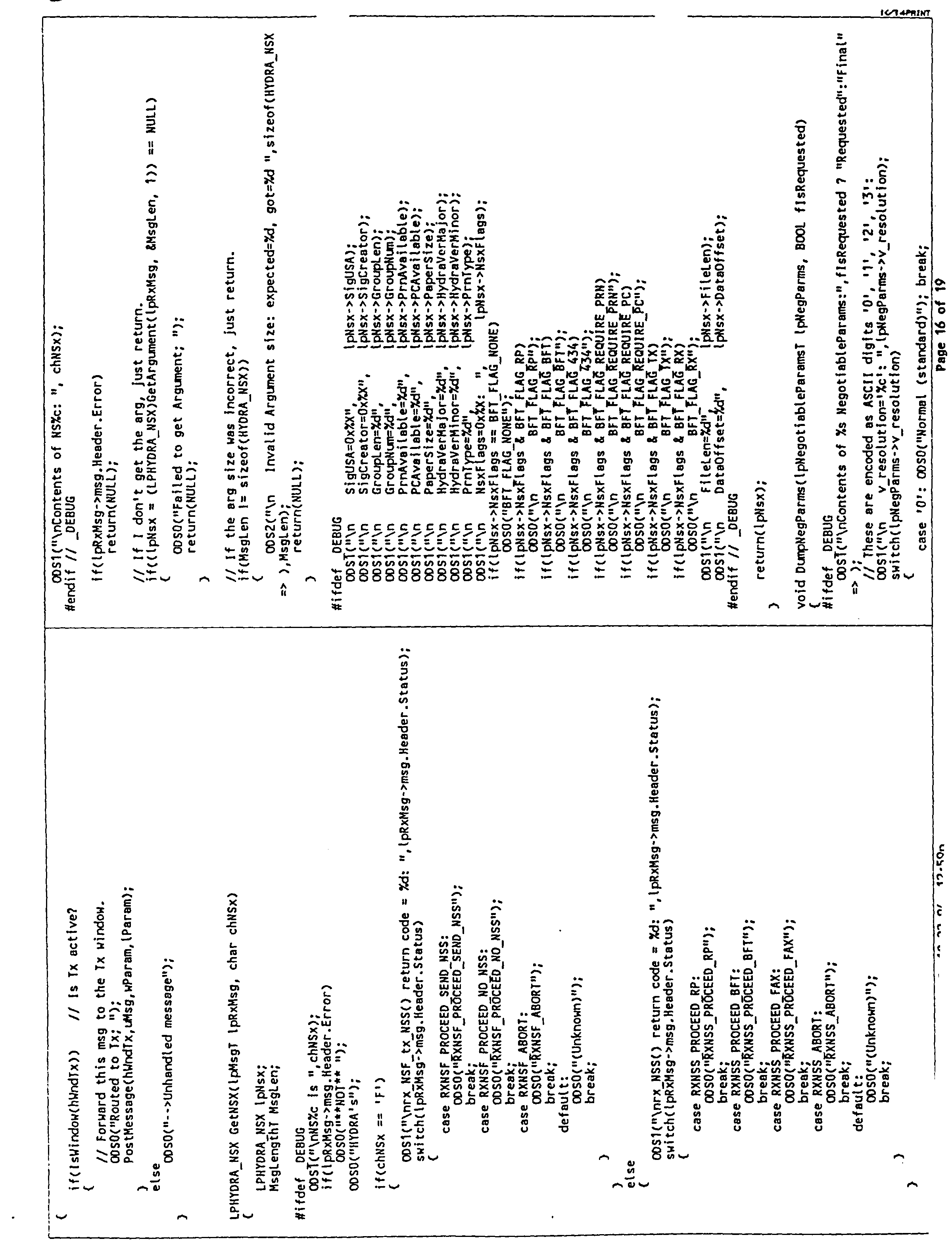

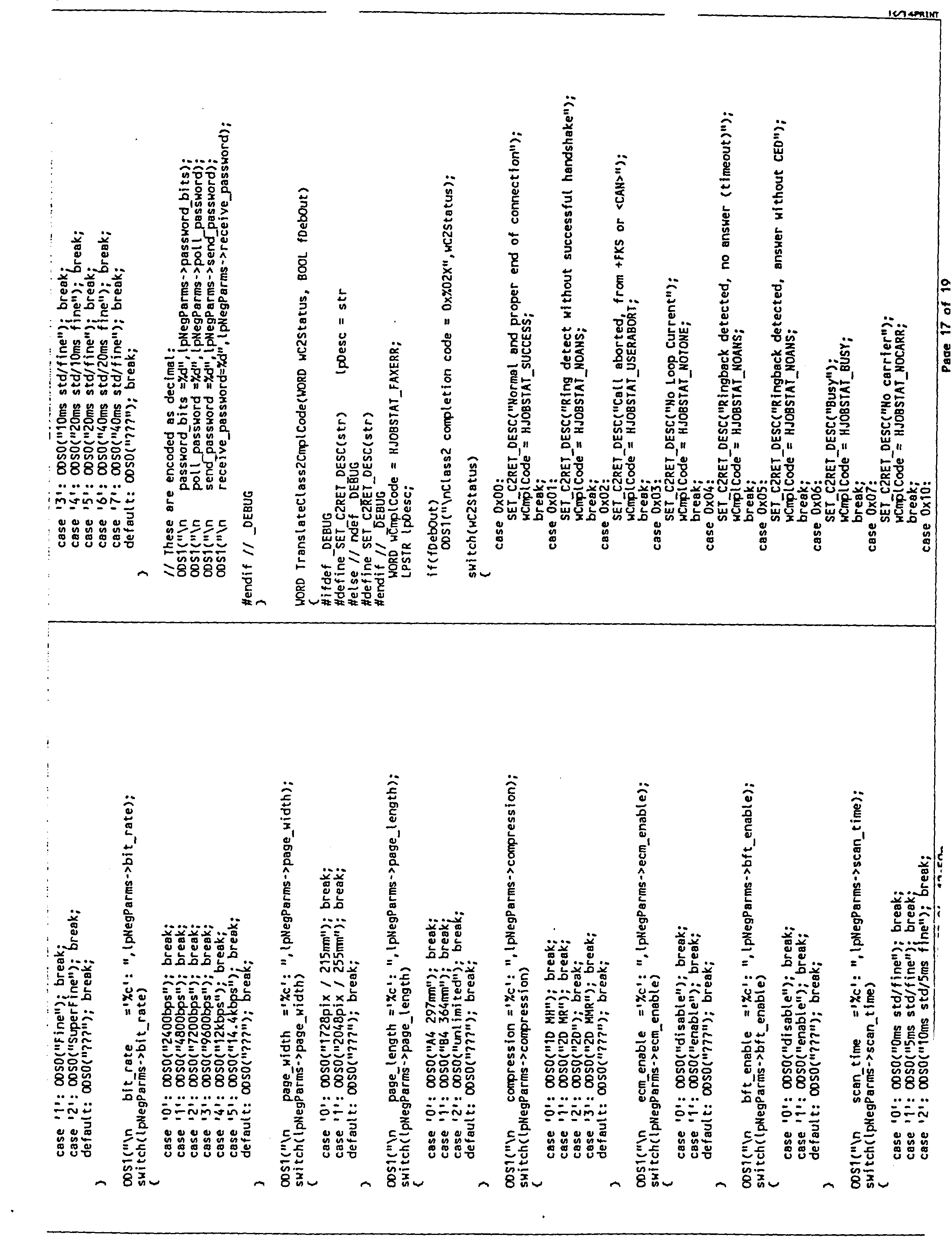

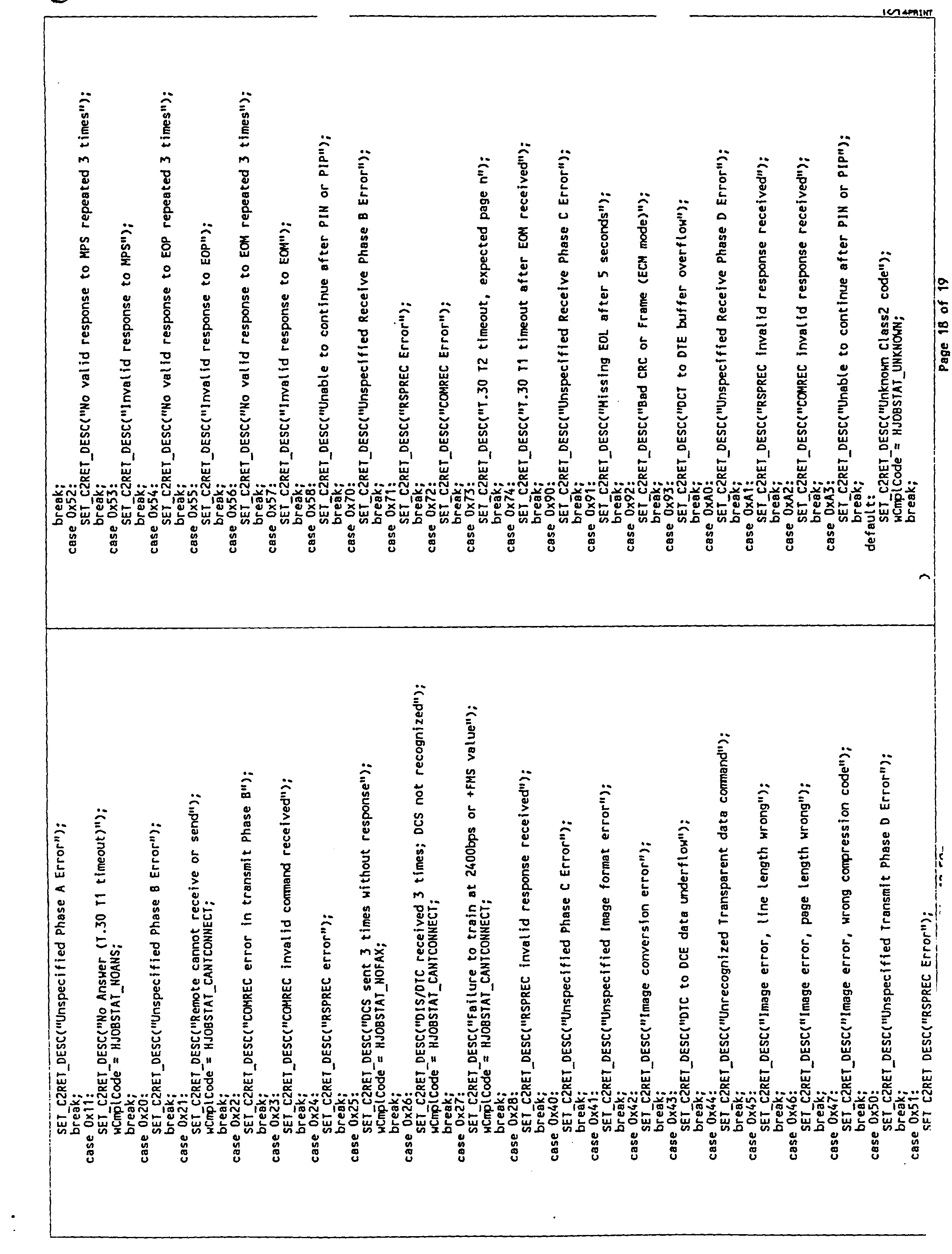

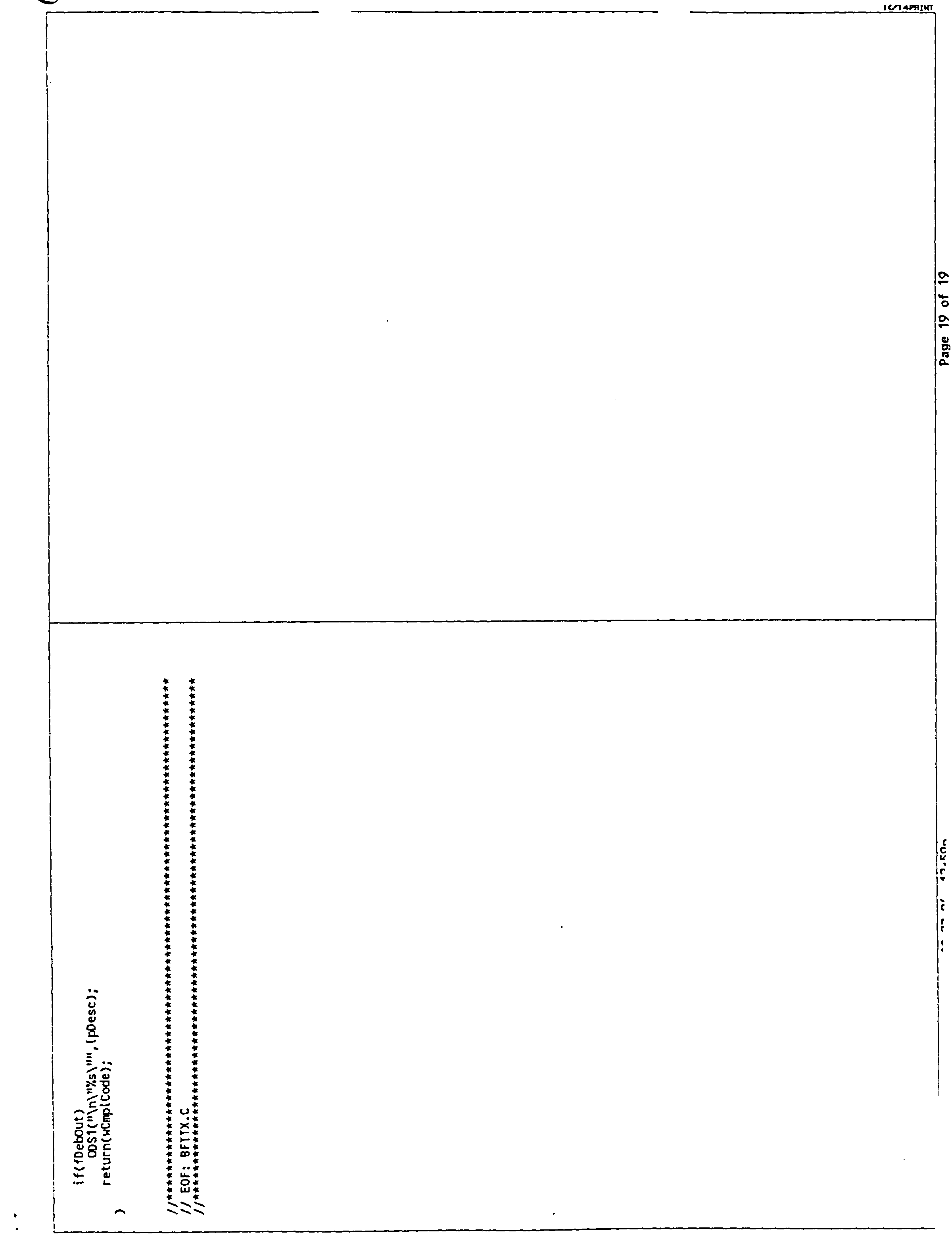

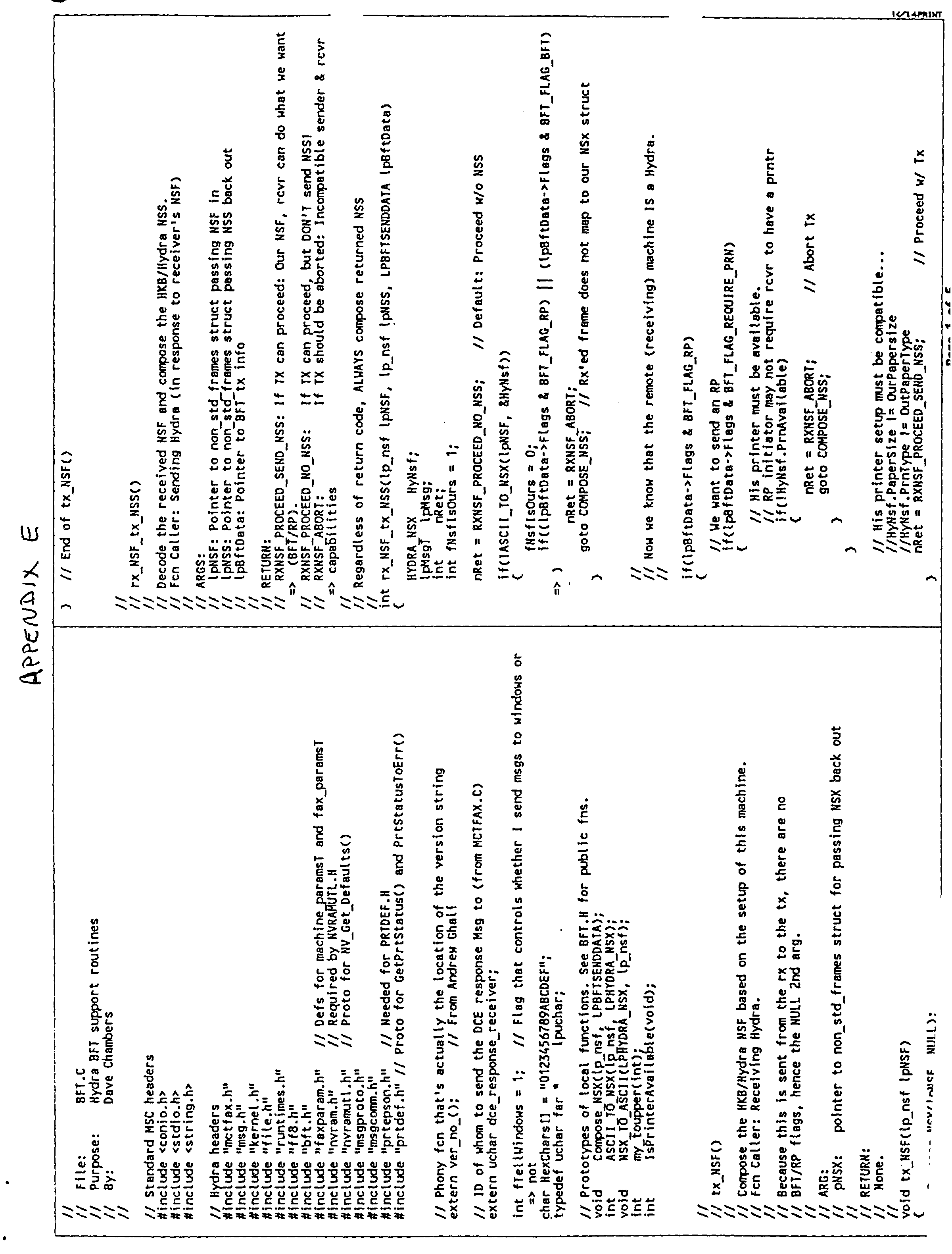

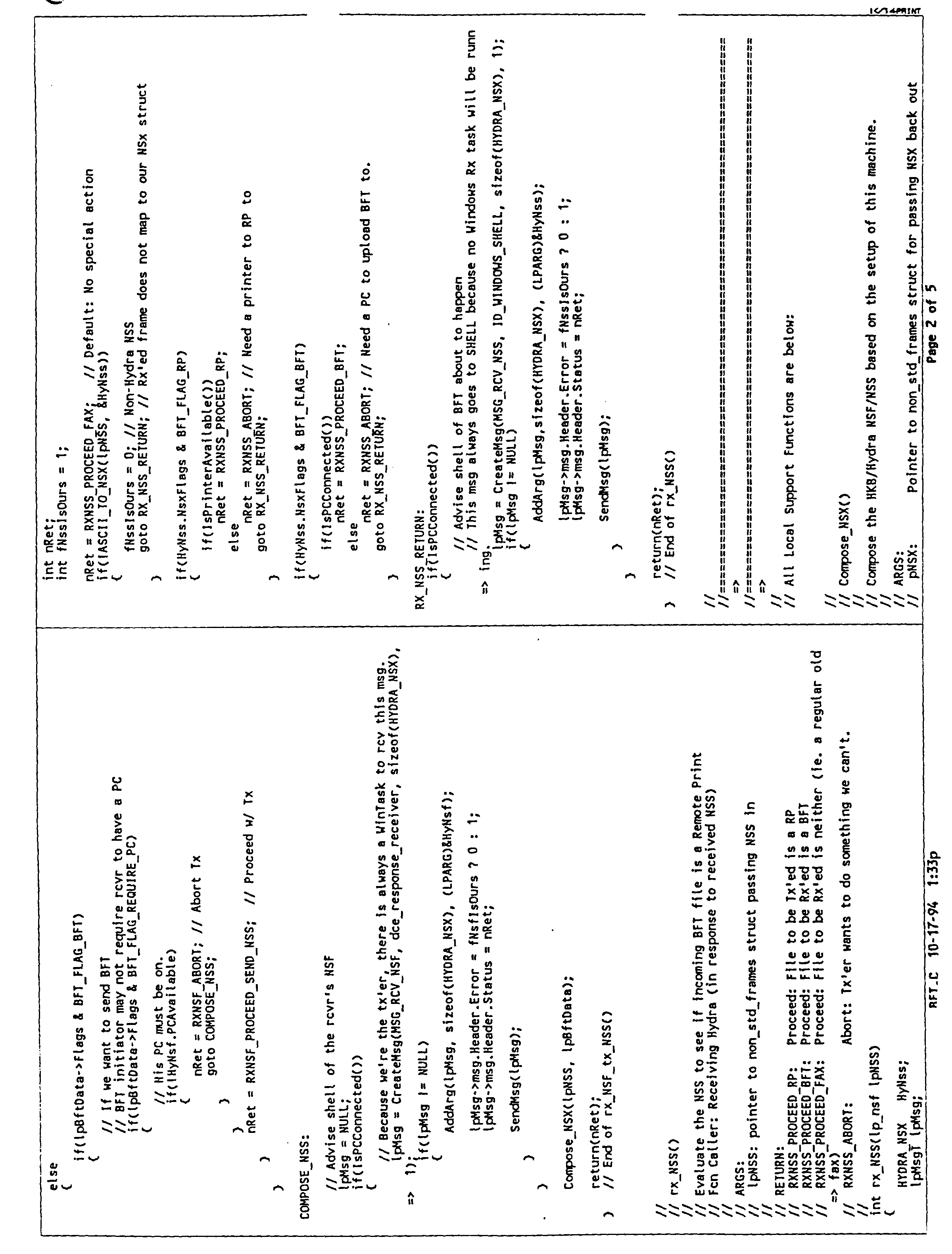

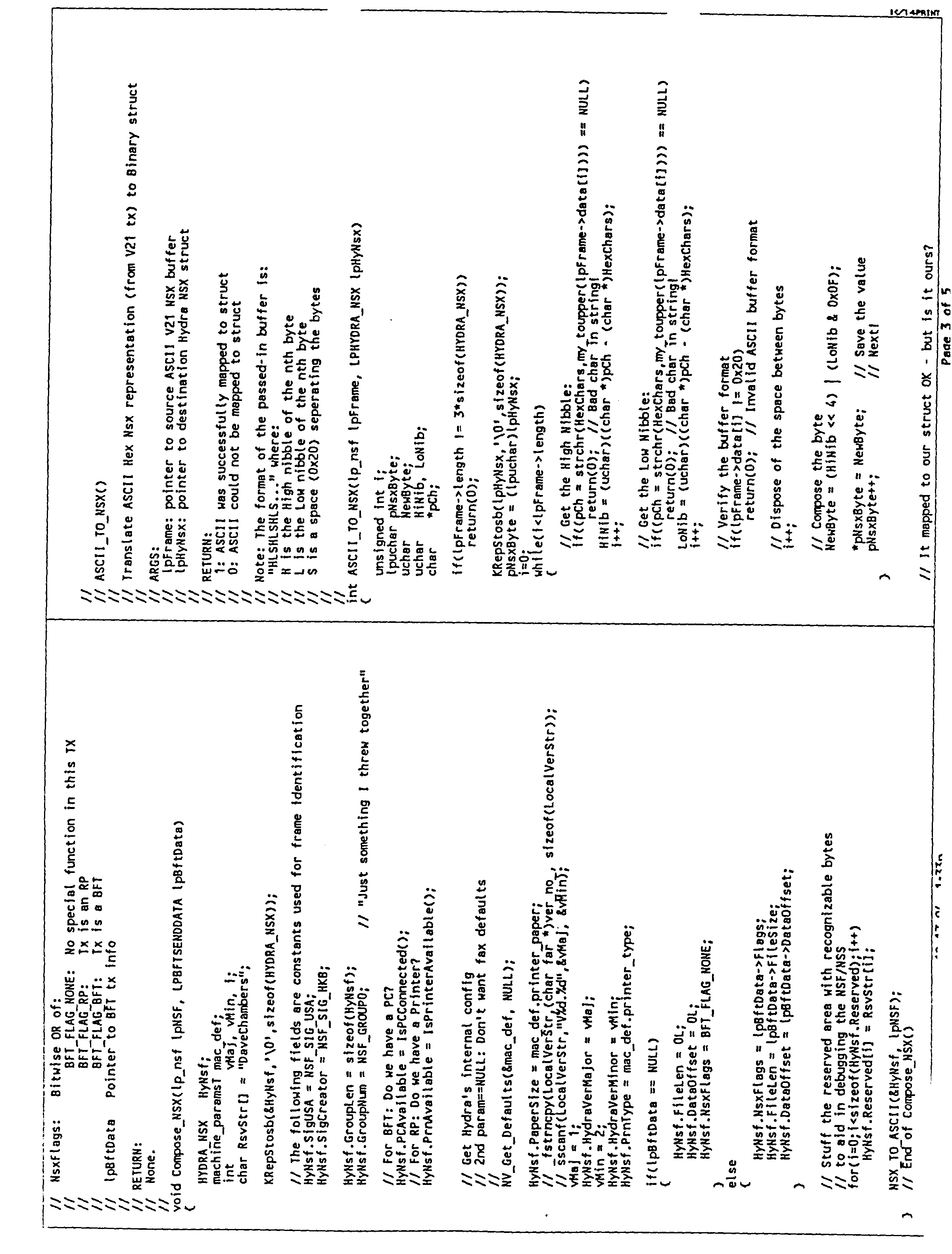

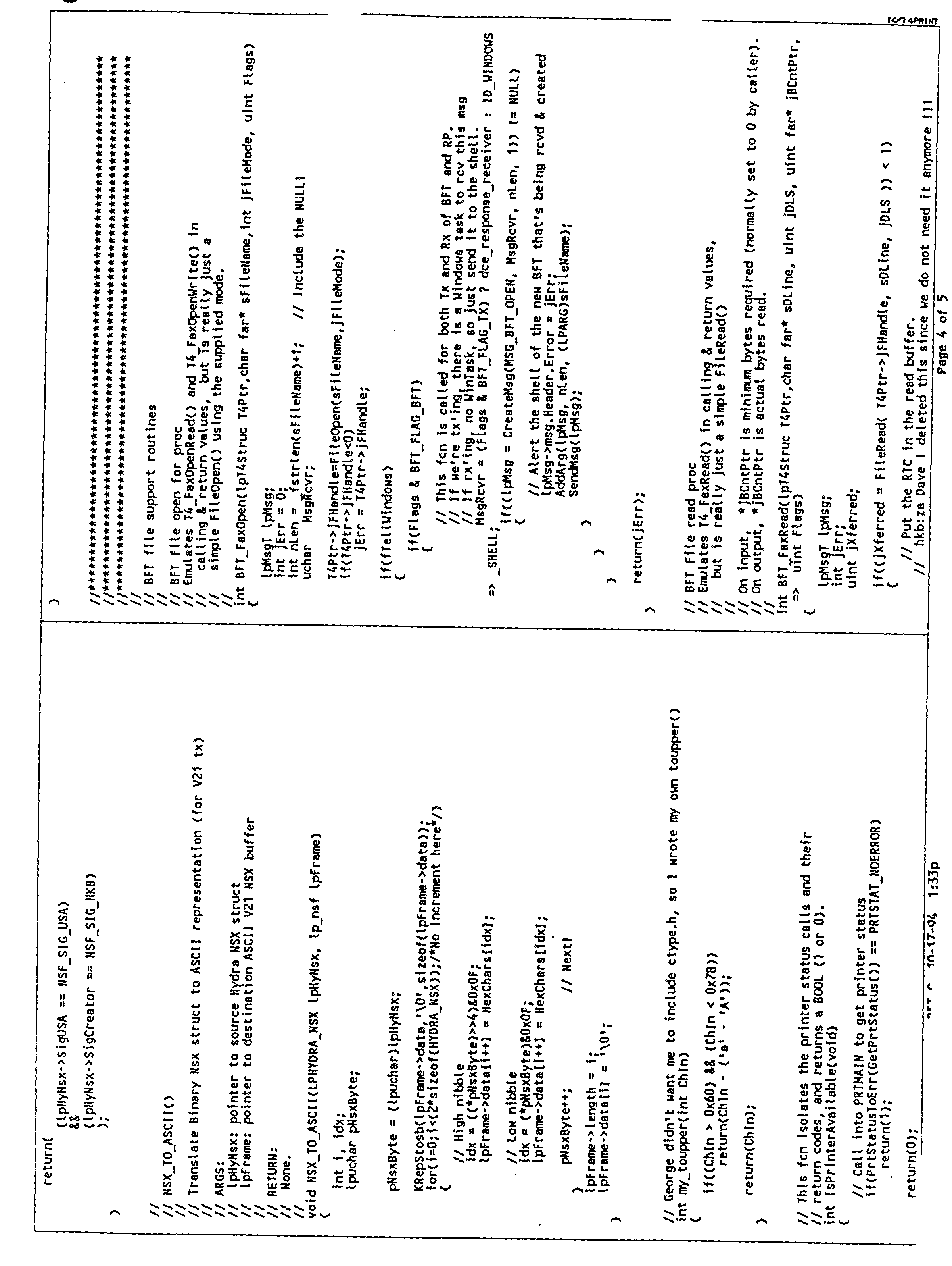

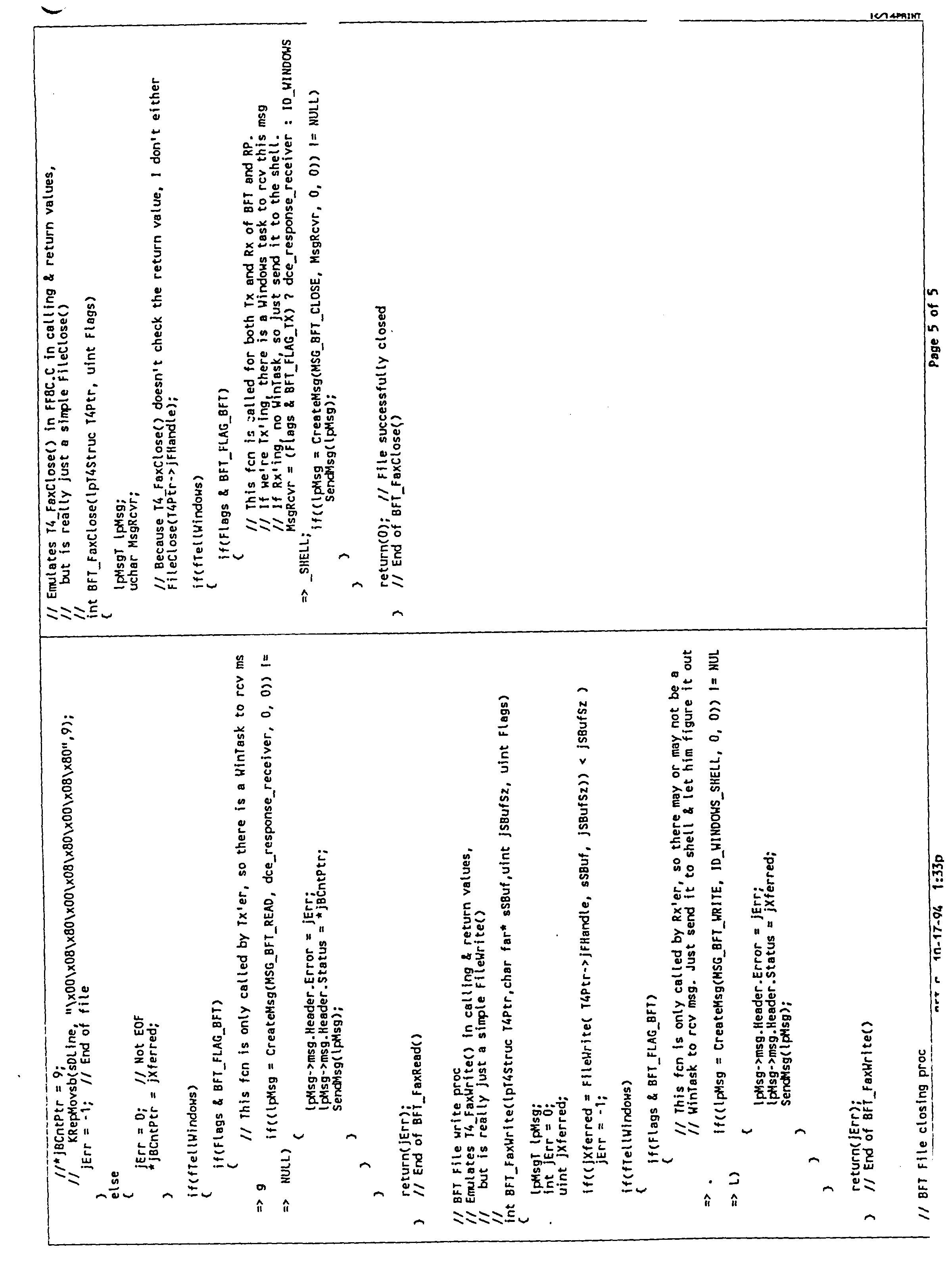

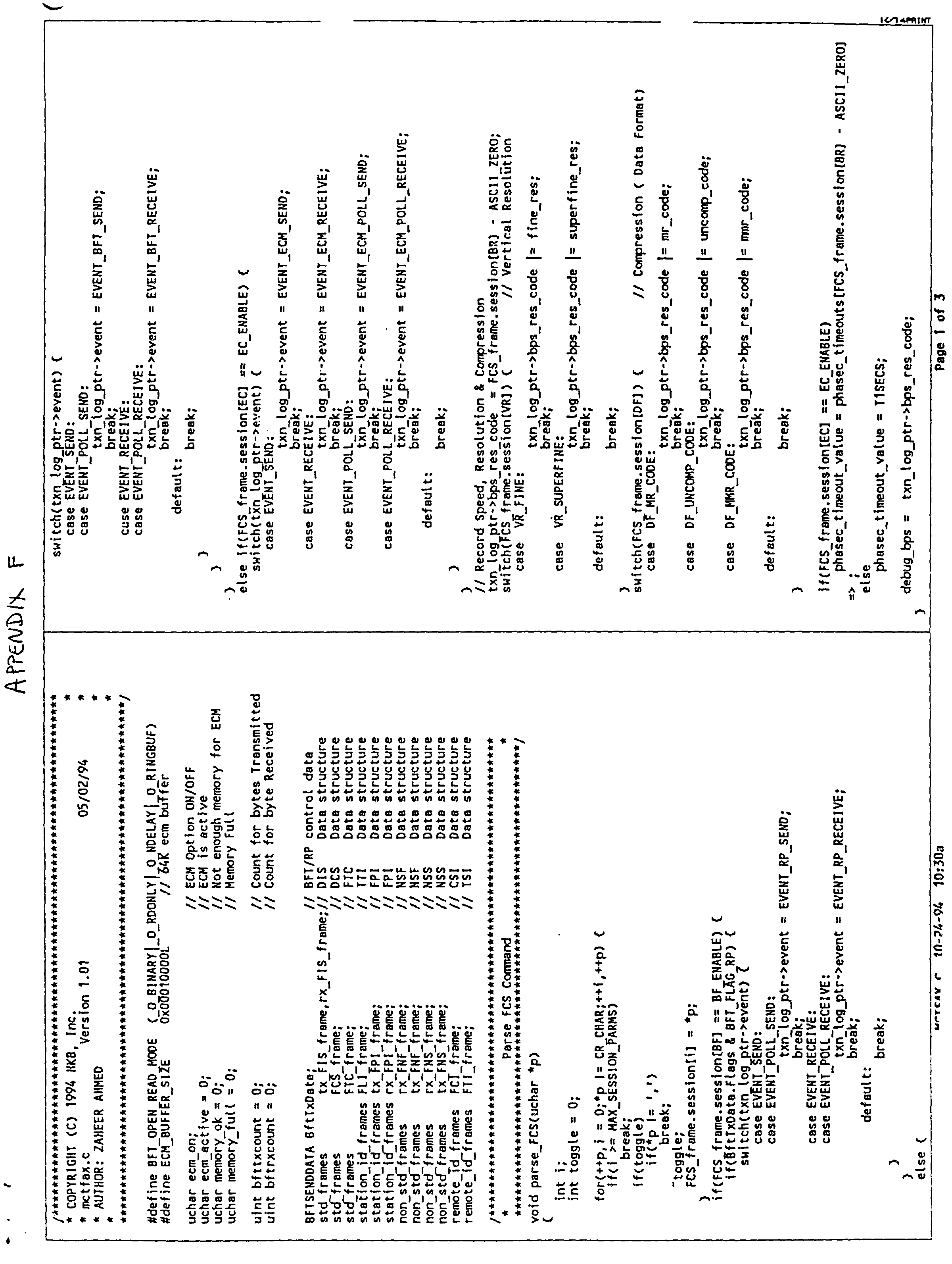

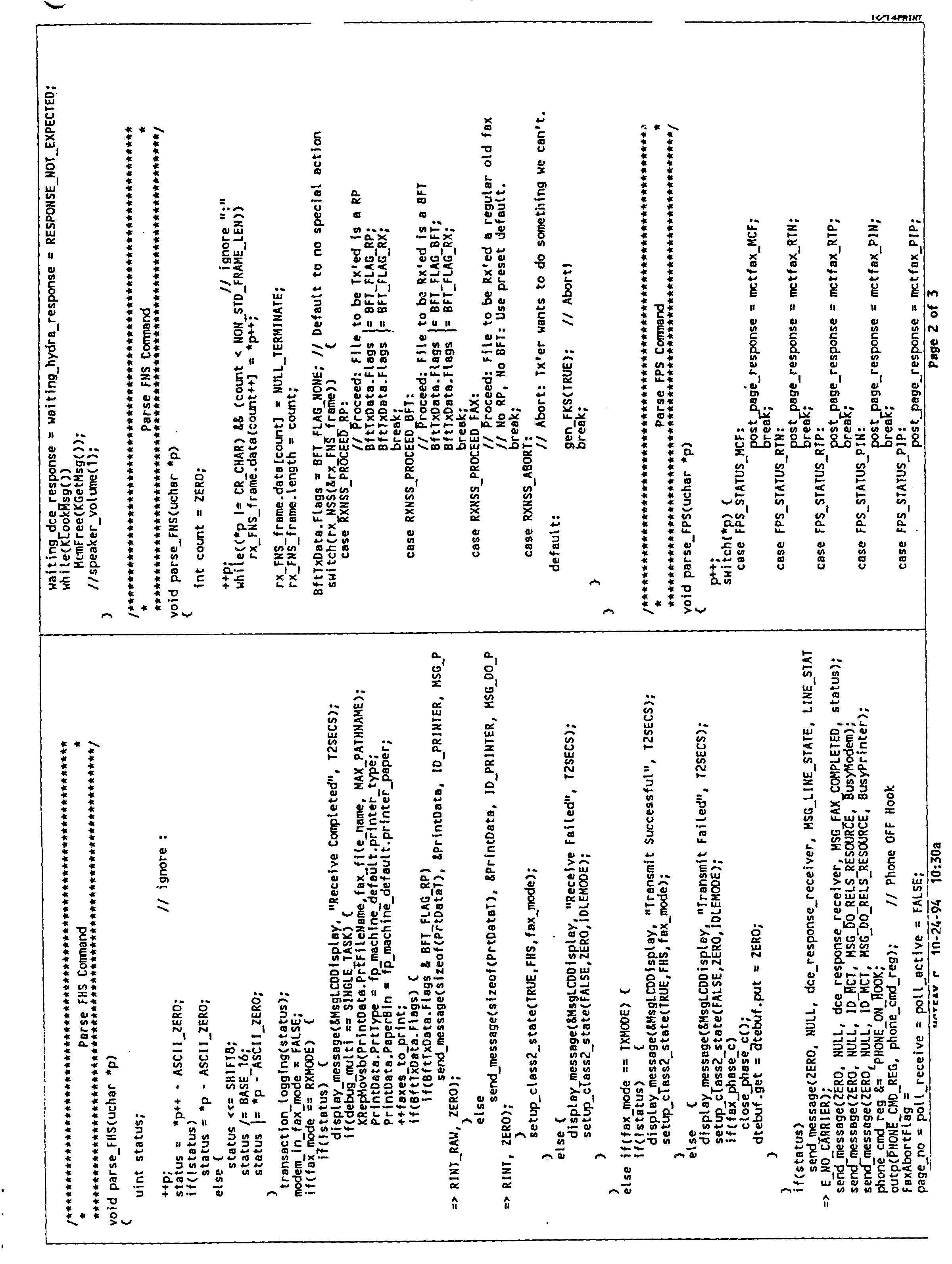

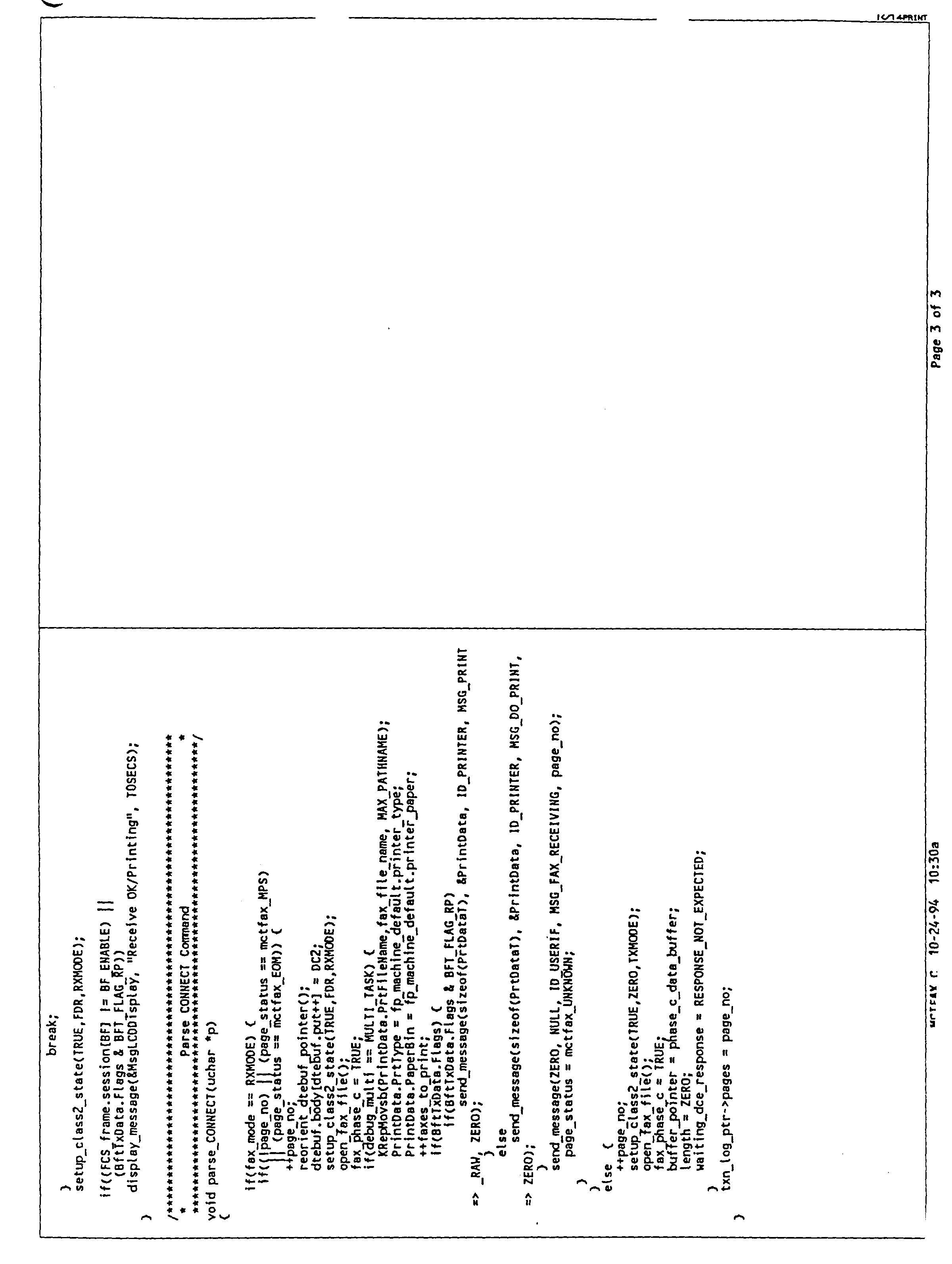

## Claims

1. A communication system for transmitting data signals from a base unit at a first location to one of at least one peripheral device connected to a remote unit at a second location, said system comprising:
said base unit comprising:
a1. receiving means for receiving the data signals and for modulating the data signals to produce a facsimile-encoded data signal;
a2. base unit control signal generating means for generating a base-to-remote facsimile-encoded control signal; and
a3. base unit transmitting means for transmitting said facsimile-encoded data signal and said base-to-remote facsimile-encoded control signal in the same session via a public carrier network;
said remote unit comprising:
b1. remote unit receiving means for receiving the facsimile-encoded data signal and the base-to-remote facsimile-encoded control signal from the public carrier network;
b2. connecting means for connecting said at least one peripheral device to said remote unit; and
b3. directing means for directing the facsimile-encoded data signal to a particular peripheral device indicated by the base-to-remote facsimile-encoded control signal via said connecting means.

2. The communication system of Claim 1, wherein said remote unit further comprises:
b4. remote unit control signal generating means for generating a remote-to-base facsimile-encoded control signal, the remote-to-base facsimile-encoded control signal indicating the at least one peripheral device connected to the remote unit.

3. The communication system of Claim 2, wherein the remote-to-base facsimile-encoded control signal generated by the remote unit facsimile-encoded control signal further indicates that the remote unit is one which can generally direct a facsimile-encoded data signal to a particular peripheral device represented by a base-to-remote facsimile-encoded control signal.

4. The communication system of Claim 2, wherein said base unit further comprises:
b5. existence determining means for receiving said remote-to-base control signal and for determining from the received remote-to-base control signal whether a particular desired peripheral device is connected to the remote unit.

5. The communication system of Claim 4, wherein the base unit transmitting means does not transmit said facsimile-encoded data signal and said base-to-remote facsimile-encoded control signal if said existence determining means determines that the particular peripheral device is not connected to the remote unit.

6. The communication system of Claim 5, wherein if said existence determining means determines that the particular peripheral device is not connected to the remote unit, the base unit transmitting means terminates the public carrier network session.

7. The communication system of Claim 4, wherein said base unit further comprises:
address signal generating means for generating an address signal supplied to said public carrier network for said public carricr network to establish a communication link between said base unit and said remote unit; and
storage means for storing the existence determination in a storage location associated with the address signal.

8. The communication system of Claim 7, wherein said base unit further comprises:
existence query means for querying the existence determinations stored in storage locations of the storage means associated with a particular address signal.

9. The communication system of Claim 1, wherein the data signals received by the base unit receiving means have a particular format, and wherein said transmitting means produces a facsimile encoded data signal having said particular format, wherein said remote unit further comprises:
compatibility determining means for receiving the facsimile-encoded data signal and determining whether the particular format of the data signal is compatible with said particular peripheral means connected thereto, the compatibility determination being communicated to the base unit via the public carrier network.

10. The communication system of Claim 9, wherein the compatibility determination communicated to the base unit via the public carrier network is encoded into said remote-to-base facsimile-encoded control signal.

11. The communication system of Claim 1, wherein the facsimile-encoded data signal is modulated according to an error-correcting facsimile protocol.

12. The communication system of Claim 11, wherein the error-correcting facsimile protocol is CCITT T.4.

13. The communication system of Claim 11, wherein the facsimile-encoded control signal is time-multiplexed with said facsimile-encoded data signal.

14. The communication system of Claim 9, wherein compatibility comprises a base format and formats that are a superset of said base format.

15. A base unit for transmitting data signals to one of at least one peripheral device connected to a remote unit at a remote location, said base unit comprising:
receiving means for receiving the data signals and for modulating the data signals to produce a facsimile-encoded data signal;
base unit control signal generating means for generating a base-to-remote facsimile-encoded control signal; and
base unit transmitting means for transmitting said facsimile-encoded data signal and said base-to-remote facsimile-encoded control signal in the same session via a public carrier network.

16. The base unit of Claim 15, further comprising:
existence determining means for receiving a remote-to-base facsimile-encoded control signal from the remote unit and for determining from the received remote-to-base control signal whether a particular desired peripheral device is connected to the remote unit.

17. The base unit of Claim 16, wherein the remote-to-base facsimile-encoded control signal further indicates that the remote unit is one which can generally direct a facsimile-encoded data signal to a particular peripheral device represented by a base-to-remote facsimile-encoded control signal.

18. The base unit of Claim 16, wherein the base unit transmitting means does not transmit said facsimile-encoded data signal and said base-to-remote facsimile-encoded control signal if said existence determining means determines that the particular peripheral device is not connected to the remote unit.

19. The base unit of Claim 18, wherein if said existence determining means determines that the particular peripheral device is not connected to the remote unit, the base unit transmitting means terminates the public carrier network session.

20. The base unit of Claim 16, further comprising:
address signal generating means for generating an address signal supplied to said public carrier network for said public carrier network to establish a communication link between said base unit and said remote unit; and
storage means for storing the existence determination in a storage location associated with the address signal.

21. The base unit of Claim 20, further comprising:
existence query means for querying the existence determinations stored in storage locations of the storage means associated with a particular address signal.

22. A remote unit for receiving data signals transmitted from a base unit at a first location to for directing the data signals to one of at least one peripheral device connected to the remote unit at a second location, said remote unit comprising:
remote unit receiving means for receiving a facsimile-encoded data signal and a base-to-remote facsimile-encoded control signal transmitted from the base unit in the same session via a public carrier network;
connecting means for connecting said at least one peripheral device to said remote unit; and
directing means for directing the facsimile-encoded data signal to a particular peripheral device indicated by the base-to-remote facsimile-encoded control signal via said connecting means.

23. The remote unit of Claim 22, further comprising:
remote unit control signal generating means for generating a remote-to-base facsimile-encoded control signal and transmitting said remote-to-base facsimile-encoded control signal to the base unit, the remote-to-base facsimile-encoded control signal indicating the at least one peripheral device connected to the remote unit.

24. The remote unit of Claim 23, wherein the remote-to-base facsimile-encoded control signal generated by the remote unit facsimile-encoded control signal further indicates that the remote unit is one which can generally direct a facsimile-encoded data signal to a particular peripheral device represented by a base-to-remote facsimile-encoded control signal.

25. The remote unit of Claim 22, wherein the facsimile- encoded data signal has a particular format, further comprising:
compatibility determining means for receiving the facsimile-encoded data signal and determining whether the particular format of the facsimile-encoded data signal is compatible with said particular peripheral means connected thereto, the compatibility determination being communicated to the base unit via the public carrier network.

26. The remote unit Claim 25, wherein the compatibility determination communicated to the base unit via the public carrier network is encoded into said remote-to-base facsimile-encoded control signal.

27. The remote unit of Claim 25, wherein said compatibility comprises a base format and formats that are a superset of said base format.

28. The remote unit of Claim 22, wherein if the remote unit receiving means receives a facsimile-encoded data signal without receiving a corresponding remote facsimile-encoded control signal, the directing means directs the facsimile-encoded data signal to a peripheral device via the connecting means.
